(19) Europäisches Patentamt
European Patent Office
Office européen des brevets

(11) Veröffentlichungsnummer: **0 159 292**
B1

(12) # EUROPÄISCHE PATENTSCHRIFT

(45) Veröffentlichungstag der Patentschrift: **07.01.88**

(51) Int. Cl.⁴: **C 09 B 62/04**, C 09 B 62/503, D 06 P 3/66, D 06 P 3/10

(21) Anmeldenummer: **85810140.5**

(22) Anmeldetag: **29.03.85**

(54) **Reaktivfarbstoffe, deren Herstellung und Verwendung.**

(30) Priorität: **05.04.84 CH 1718/84**

(43) Veröffentlichungstag der Anmeldung: **23.10.85 Patentblatt 85/43**

(45) Bekanntmachung des Hinweises auf die Patenterteilung: **07.01.88 Patentblatt 88/1**

(84) Benannte Vertragsstaaten: **CH DE FR GB IT LI**

(56) Entgegenhaltungen:
**EP - A - 0 070 806**
**EP - A - 0 070 807**
**EP - A - 0 074 928**
**EP - A - 0 085 025**
**EP - A - 0 085 654**
**FR - A - 1 213 545**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Tzikas, Athanassios, Dr., Muttenzerstrasse 78, CH-4133 Pratteln (CH)**

**EP 0 159 292 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es sind bereits, z.B. aus EP-A 85654, 74928, 70806, 70807 oder 85025, Reaktivfarbstoffe bekannt, die ein 1,3,5-Triazin, welches durch eine Gruppe der Formel -NH-(alk)-$SO_2$-Z, wobei Z für β-Halogenäthyl, Vinyl, β-Sulfatoäthyl, β-Thiosulfatoäthyl oder β-Acetoxyäthyl steht, sowie durch Halogen substituiert ist, aufweisen; diese vermögen jedoch nicht alle Wünsche bezüglich der Echtheiten und der Eignung für bestimmte Färbeverfahren voll zu befriedigen.

Die Erfindung betrifft neue wertvolle Reaktivfarbstoffe der Formel I

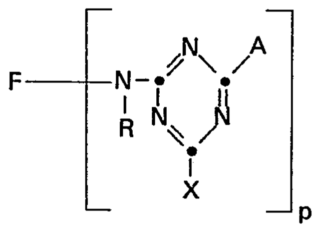

(I),

worin F ein Rest eines mindestens eine -$SO_3$H-Gruppe enthaltenden metallfreien oder metallhaltigen Mono- oder Disazofarbstoffs, ein Rest eines Derivats des 1-Amino- oder 1-Anilino-anthrachinons, insbesondere eines 4-Phenylamino-1-amino-anthrachinon-2-sulfonsäure-Derivats oder ein Rest eines Sulfophthalocyaninfarbstoffs, insbesondere eines im Phthalocyaninkern mindestens zwei Sulfonsäuregruppen tragenden Derivats eines Phthalocyaninsulfanilids oder -sulfalkylamids mit 2 bis 6 C-Atomen in der Alkylkette sowie ein Rest eines Formazan-, Phenazin-, Oxazin- oder Nitroarylfarbstoffs ist, R Wasserstoff oder gegebenenfalls durch -COOH oder -$SO_3$H substituiertes Alkyl mit 1 bis 4 C-Atomen, Cyanäthyl oder Hydroxyäthyl bedeutet, X für Fluor, Chlor, Brom, Alkylsulfonyl mit 1 bis 4 C-Atomen, Phenylsulfonyl oder den -$SO_3$H Rest steht, p 1 oder 2 und A einen Rest der Formel II

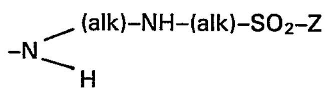

(II)

in der als unabhängig voneinander Polymethylenreste mit 2 bis 6 C-Atomen oder deren verzweigte Isomere bedeuten, und worin Z ein β-Halogenäthyl- oder ein Vinyl- oder β-Sulfatoäthyl- oder β-Thiosulfatoäthyl- oder β-Acetoxyäthylrest bedeutet.

Unter faserreaktiven Farbstoffen sind solche zu verstehen, die mit den Hydroxylgruppen der Zellulose oder mit den reaktiven Zentren von natürlichen oder synthetischen Polyamiden unter Bildung kovalenter chemischer Bindungen zu reagieren vermögen. Der Rest F in Formel I kann aus irgendeiner bekannten Farbstoffklasse stammen, er gehört vorzugsweise der Anthrachinon-, der metallfreien oder metallhaltigen Monoazo- oder Disazo-, der Phthalocyanin-, der Formazan- oder der Nitroarylreihe an. Bevorzugt sind erfindungsgemässe Farbstoffe, in denen F ein Farbstoffrest der Anthrachinon-, der metallfreien oder metallhaltigen Monoazo- oder Disazo- oder der Phthalocyaninreihe ist.

Vorzugsweise enthält F zwei bis vier Sulfonsäuregruppen.

Der Substituent R ist Wasserstoff oder eine geradkettige oder verzweigte niedrigmolekulare Alkylgruppe mit 1 bis 4 C-Atomen, wie Methyl, Äthyl, Propyl, Isopropyl oder n-Butyl, 2-Methylpropyl, sek.-Butyl, tert.-Butyl, ferner ein substituierter Alkylrest, wie Carboxymethyl, Sulfomethyl, Sulfoäthyl, Cyanäthyl, β-Chlorpropyl oder β-Hydroxyäthyl.

Bevorzugt ist R der Methylrest. Besonders bevorzugt als R ist Wasserstoff.

Als Substituenten X sind insbesondere Chlor, Brom, Fluor, Alkylsulfonyl wie Methyl- oder Äthylsulfonyl, Phenylsulfonyl oder der -$SO_3$H Rest genannt.

Vorzugsweise ist X ein Chlor- oder Fluoratom.

Bevorzugt sind ferner Reaktivfarbstoffe der Formel (I), worin alk unabhängig voneinander $C_{2-4}$-Alkylenreste sind.

Die Erfindung betrifft insbesondere Farbstoffe der Formel I, in der Z für den β-Chloräthylrest und X für ein Halogenatom stehen.

Die Reaktivfarbstoffe der allgemeinen Formel I werden hergestellt, indem man einen Farbstoff der Formel V

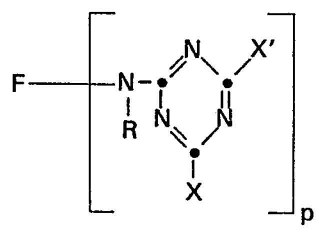

(V)

in der F, R und p die oben angegebene Bedeutungen haben und X und X' unabhängig voneinander eine der oben für X genannten Bedeutungen haben, mit einem Amin der Formel IIa

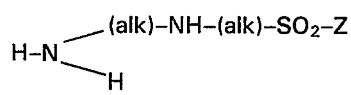

(IIa)

in der

alk ein Polymethylenrest mit 2 bis 6 C-Atomen oder deren verzweigte Isomere bedeutet, und worin Z ein β-Halogenäthyl- oder ein Vinyl- oder β-Sulfatoäthyl- oder β-Thiosulfatoäthyl- oder β-Acetoxyäthylrest bedeutet, umsetzt.

Die Farbstoffe der allgemeinen Formel V werden hergestellt, indem man einen Farbstoff der Formel III

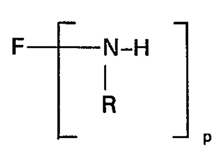

(III),

in der F, R und p die oben angegebenen Bedeutungen haben, mit einem reaktionsfähigen Derivat des 1,3,5-Triazins der Formel IV

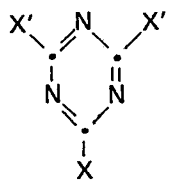

(IV)

in der X und X' unabhängig voneinander eine der oben für X angegebenen Bedeutungen haben, umsetzt.

Die Herstellung der Farbstoffe der Formel V und der erfindungsgemässen Reaktivfarbstoffe der Formel I kann auch in vorteilhafter Weise miteinander kombiniert werden, so dass zunächst ein Farbstoff der Formel III mit einem reaktionsfähigen Derivat des 1,3,5-Triazins der Formel IV zum Farbstoff der Formel V und dieser anschliessend ohne Isolierung des Farbstoffs der Formel V mit einem Amin der Formel IIa zu einem erfindungsgemässen Reaktivfarbstoff der Formel I umgesetzt wird. Die Umsetzung der Farbstoffe der Formel III mit den Triazinderivaten der Formel IV führt man zweckmässigerweise bei niederen Temperaturen, etwa zwischen −2 und +10°C, vorzugsweise zwischen 0 und 5°C, unter Zusatz von säurebindenden Mitteln wie Natronlauge, Soda oder Natriumhydrogencarbonat in einem pH-Bereich zwischen 1,5 und 9, vorzugsweise zwischen 4 und 6, durch.

Als Lösungsmittel dient bevorzugt Wasser, das einen gewissen Anteil an organischen Lösungsmitteln, wie z.B. Aceton, enthält. Doch lässt sich die Umsetzung auch in reinem Wasser durchführen.

Für die weitere Umsetzung der so erhaltenen Farbstoffe der Formel V mit den Aminen der Formel IIa setzt man die Amine zweckmässigerweise in Form eines Salzes, bevorzugt in Form des Hydrochlorids, ein. Die Umsetzung wird bei erhöhter Temperatur, etwa zwischen 5 und 70°C, bevorzugt zwischen 5 und 30°C, unter Zusatz säurebindender Mittel, bevorzugt Natriumbicarbonat, in einem pH-Bereich von 2 bis 6,5, bevorzugt 3,5 bis 4,5, durchgeführt.

Wenn der Farbstoffrest F aus mehreren Komponenten zusammengesetzt ist, wie z.B. bei Azofarbstoffen oder Formazanfarbstoffen, sind die erfindungsgemässen Farbstoffe der Formel I auch in der Weise erhältlich, dass man sie in an sich bekannter Weise aus Komponenten von F aufbaut, von denen eine, gegebenenfalls aber auch zwei, eine Gruppe der Formel Va

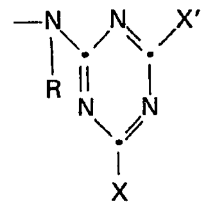

(Va)

worin R, X und X' die oben angegebenen Bedeutungen haben, enthalten.

Derartige Komponenten werden erhalten durch Acylierung der entsprechenden, eine Gruppe der Formel IIIa

-N-H
|
R

(IIIa)

enthaltenden Komponenten mit einem reaktionsfähigen Triazinderivat der Formel IV unter Bedingungen, die den oben bei der entsprechenden Umsetzung des Farbstoffes beschriebenen entsprechen. Die so erhaltenen Farbstoffe werden dann in der oben beschriebenen Weise mit einem Amin der Formel IIa zu einem erfindungsgemässen Farbstoff entsprechend der Formel I umgesetzt.

Die Amine der Formel IIa mit der Bedeutung eines β-Halogenäthylrestes für Z werden hergestellt, indem man ein der Formel IIa entsprechendes Amin, das anstelle der $-SO_2-Z$ Gruppe ein Chloratom enthält, in alkalischem Medium mit β-Hydroxyäthylmerkaptan zur Reaktion bringt und den erhaltenen Thioäther anschliessend nach den Lehren des DP 887.505 mit Halogen in halogenwasserstoffsaurer Lösung oxydiert. Amine der Formel IIa, in denen Z den Vinylrest bedeutet, können aus den Aminen der Formel IIa, in denen Z für β-Halogenäthyl steht, durch Chlorwasserstoffabspaltung erhalten werden.

In analoger Weise können erfindungsgemässe Farbstoffe der Formel I, in denen Z Vinyl bedeutet, durch Chlorwasserstoffabspaltung, z.B. durch Behandlung mit Natriumhydrogencarbonat in Wasser bei 50 bis 60°C, aus erfindungsgemässen Farbstoffen der Formel I, in denen Z für β-Chloräthyl steht, erhalten werden.

Reaktionsfähige Derivate des 1,3,5-Triazins der Formel IV sind bekannt. Als Beispiele seien genannt: Trichlortriazin, Tribromtriazin, Trifluortriazin, Trisulfotriazin, Tris-methylsulfonyltriazin, Tris-äthylsulfonyltriazin, Dichlorfluortriazin, Chlor-disulfotriazin, Chlor-bis-methylsulfonyltriazin, Trisphenylsulfonyltriazin.

Beispiele für Amine der Formel IIa sind:

2 HCl $[H_2N\text{-}CH_2CH_2\text{-}NH\text{-}CH_2CH_2SO_2\text{-}CH_2CH_2Cl]$

2 HCl $[H_2N\text{-}CH_2CH_2\text{-}NH\text{-}CH_2CH_2SO_2\text{-}CH=CH_2]$

$H_2SO_4$ $[H_2N\text{-}CH_2CH_2\text{-}NH\text{-}CH(CH_3)\text{-}CH_2SO_2CH_2CH_2\text{-}OSO_3H]$

$H_2SO_4$ $[H_2N\text{-}CH_2\text{-}CH(CH_3)\text{-}NH\text{-}CH(CH_3)\text{-}CH_2SO_2CH_2CH_2\text{-}OSO_3H]$

$H_2SO_4$ $[H_2N\text{-}CH_2CH_2CH_2\text{-}NH\text{-}CH(CH_3)\text{-}CH_2SO_2\text{-}CH_2CH_2OSO_3H]$

$H_2SO_4$ $[H_2N\text{-}CH_2CH_2CH_2CH_2\text{-}NH\text{-}CH(CH_3)\text{-}CH_2SO_2CH_2CH_2OSO_3H]$

In den zur Herstellung erfindungsgemässer Farbstoffe eingesetzten Farbstoffen der Formel III steht F für den Rest eines mindestens eine Sulfonsäuregruppe tragenden wasserlöslichen Farbstoffes, insbesondere für den Rest eines Mono- oder Disazofarbstoffes, der metallfrei oder metallisiert sein kann, für den Rest eines Derivats des 1-Amino- oder 1-Anilino-anthrachinons, insbesondere für den Rest eines 4-Phenylamino-1-amino-anthrachinon-2-sulfonsäure-Derivats oder für den Rest eines Sulfophthalocyaninfarbstoffs, insbesonderes eines im Phthalocyaninkern mindestens zwei Sulfonsäuregruppen tragenden Derivats eines Phthalocyanin-sulfanilids oder -sulfalkylamids mit 2 bis 6 C-Atomen in der Alkylkette, sowie für die Reste von Formazan- oder Nitroarylfarbstoffen.

Eine wichtige Gruppe von Farbstoffen der Formel III sind solche, in denen F der Rest eines Mono- oder Disazofarbstoffs der Formel VIa oder VIb

$$D\text{–}N=N\text{–}(M\text{–}N=N)_nK\text{–} \qquad \text{(VIa)}$$

oder

$$\text{–}D\text{–}N=N\text{–}(M\text{–}N=N)_nK \qquad \text{(VIb)}$$

oder eines davon abgeleiteten Metallkomplexes ist, wobei in den Formeln VIa und VIb

D für den Rest einer gegebenenfalls durch in der Azochemie übliche Substituenten, insbesondere Hydroxy-, Methyl-, Äthyl-, Methoxy- oder Äthoxygruppen, gegebenenfalls substituierte Alkanoylaminogruppen mit 2 bis 4 C-Atomen, gegebenenfalls substituierte Benzoylaminogruppen oder Halogenatome, substituierten Diazokomponente der Benzol- oder Naphthalinreihe,

K für den Rest einer gegebenenfalls durch in der Azochemie übliche Substituenten, insbesondere Hydroxy-, Amino-, Methyl-, Äthyl-, Methoxy- oder Äthoxygruppen, gegebenenfalls substituierte Alkanoylaminogruppen mit 2 bis 4 C-Atomen, gegebenenfalls substituierte Benzoylaminogruppen oder Halogenatome substituierten Kupplungskomponente der Benzol-, Naphthalin-, Pyrazolon-, 6-Hydroxypyridon-(2) oder Acetessigsäurearylamid-Reihe,

M für den Rest einer gegebenenfalls durch in der Azochemie übliche Substituenten, insbesondere Hydroxy-, Methyl-, Äthyl-, Methoxy- oder Äthoxygruppen, gegebenenfalls substituierte Alkanoylaminogruppen mit 2 bis 4 C-Atomen, gegebenenfalls substituierte Benzoylaminogruppen oder Halogenatome substituierten Mittelkomponente der Benzol- oder Naphthalinreihe steht und

n 0 bis 1 bedeutet, wobei

D, M und K zusammen mindestens zwei Sulfonsäuregruppen, vorzugsweise drei bis vier Sulfonsäuregruppen, enthalten.

Eine weitere wertvolle Gruppe von Farbstoffen der Formel III, in denen p für 2 steht, enthält für F den zweiwertigen Rest der Formel VIc

$$\text{–}D\text{–}N=N\text{–}(M\text{–}N=N)_nK\text{–} \qquad \text{(VIc)},$$

worin D, K, M und n die obengenannten Bedeutungen haben, oder einen davon abgeleiteten Metallkomplex.

Die Farbstoffe der Formel III, worin F ein Rest einer der Formeln VIa bis VIc ist, können für den Fall, dass n = 0 ist, in an sich bekannter Weise durch Diazotierung geeigneter aromatischer Amine und Kupplung auf geeignete Kupplungskomponenten erhalten werden, wobei entweder die Diazokomponente oder die Kupplungskomponente oder beide einen Rest der Formel

$$\text{–}N(R)\text{–Acyl}$$

oder die Kupplungskomponente einen Rest der Formel

$$\text{–}N(R)\text{–}H$$

enthalten und die Acylgruppe nach der Kupplung durch Verseifen abgespalten wird.

Zur Herstellung von Disazofarbstoffen der Formel III, d.h. solchen, in denen F für einen Rest der Formeln VIa-VIc steht, wobei n = 1 ist, wird zunächst die Diazoniumverbindung eines geeigneten aromatischen Amins auf eine geeignete Mittelkomponente gekuppelt. Mittelkomponente sind im Prinzip alle Benzol- oder Naphthalinderivate, die eine diazotierbare Aminogruppe enthalten. Anschliessend wird die dann vorliegende Aminoazoverbindung diazotiert und auf eine geeignete Kupplungskomponente gekuppelt, wobei entweder die Diazokomponente der ersten Kupplung oder die Kupplungskomponente der zweiten Kupplung oder beide einen Rest der Formel

$$\text{–}N(R)\text{–Acyl}$$

enthalten, und die Acylgruppe nach der Kupplung durch Verseifen abgespalten wird. Die Kupplungskomponente kann auch anstelle der

$$\text{–}N(R)\text{–Acyl-Gruppe} \quad \text{eine} \quad \text{–}N(R)H\text{-Gruppe}$$

enthalten.

Zur Herstellung von Farbstoffen der Formel III, in denen F ein Rest der Formel VIa ist, sind beispielsweise die in der folgenden Liste Nr. 1 aufgeführten aromatischen Amine als Diazokomponenten geeignet.

*Liste Nr. 1:*
Anilin; o-, m-, p-Toluidin;
o-, m-, p-Anisidin; o-, m-, p-Chloranilin;
Anilin-2-, -3-, -4-carbonsäure oder -sulfonsäure;
Anilin-2,4-, -2,5-dicarbonsäure oder -disulfonsäure;
2-Aminophenol-4-sulfonsäure;
2-Aminophenol-4,6-disulfonsäure;
4-Chlor-2-aminophenol-5- oder -6-sulfonsäure;
6-Chlor-2-aminophenol-4-sulfonsäure;
6-Nitro-2-aminophenol-4-sulfonsäure;
4-Nitro-2-aminophenol-6-sulfonsäure;
3- oder 4-Acetylamino-anilin-6-sulfonsäure;
3- oder 4-Benzoylamino-anilin-6-sulfonsäure;
4-Amino-4'-sulfo-benzanilid;
2-Aminoanisol-4-sulfonsäure;
4-Aminoanisol-2- oder -3-sulfonsäure;
3-Aminoanisol-4-sulfonsäure;
6-Chlor-2-amino-benzol-sulfonsäure;
5-Nitro-2-amino-benzol-sulfonsäure;
4-Chlor-3-amino-benzol-sulfonsäure;
6-Chlor-3-amino-benzol-sulfonsäure;
3-Chlor-4-amino-benzol-sulfonsäure;
2-Amino-toluol-4-sulfonsäure;
2-Amino-toluol-5-sulfonsäure;
3-Amino-toluol-6-sulfonsäure;
4-Amino-toluol-2-sulfonsäure;
4-Amino-toluol-3-sulfonsäure;
5-Chlor-2-amino-toluol-3-sulfonsäure;
3-Chlor-2-amino-toluol-5-sulfonsäure;
2-Chlor-4-amino-toluol-6-sulfonsäure;
3-Nitro-2-amino-toluol-5-sulfonsäure;
3-Nitro-4-amino-toluol-2-sulfonsäure;
3-Amino-1,2-dimethyl-benzol-4-sulfonsäure;
4-Amino-1,3-dimethyl-benzol-5-sulfonsäure;
4-Amino-1,3-dimethyl-benzol-6-sulfonsäure;
4-Chlor-2-amino-anisol-5-sulfonsäure;
4-Amino-phenetol-2-sulfonsäure;
4-Amino-phenetol-3-sulfonsäure;
2-Amino-phenetol-4-sulfonsäure;
2-Amino-toluol-3,4-disulfonsäure;
2-Amino-toluol-3,5-disulfonsäure;
4-Amino-2-sulfo-2'- oder 4'-methoxy-diphenylamin;
2-Amino-diphenyläther; 2-, 3- oder 4-Aminobenzolsulfamid;
2-Naphthylamin-1-, -5-, -6-, -7- oder -8-sulfonsäure;
2-Naphthylamin-1,5-, -1,7-, -3,6-, -3,7-, -4,7-, -4,8-, -5,7- oder -6,8-disulfonsäure;
2-Naphthylamin-1,5,7-, -3,6,8- oder -4,6,8-trisulfonsäure;
1-Naphthylamin-2-, -4-, -5-, -6- oder -7-sulfonsäure;
1-Naphthylamin-3,6-, -3,7-, -3,8-, -4,6-, -4,7-, -4,8-, -5,7- oder -6,8-disulfonsäure;
1-Naphthylamin-2,3,6-, -3,6,8- oder -4,6,8-trisulfonsäure;
2-Amino-1-naphthol-4-sulfonsäure;
2-Amino-1-naphthol-7-sulfonsäure;
1-Amino-2-naphthol-4-sulfonsäure;
4-Nitro-2-amino-1-naphthol-7-sulfonsäure und
5-Nitro-1-amino-2-naphthol-4-sulfonsäure.

Am Aufbau von Farbstoffen der Formel III, in denen F ein Rest der Formel VIb oder VIc ist, werden beispielsweise die in der Liste Nr. 2 aufgeführten Diamine in Form ihrer Monoacyl-Derivate eingesetzt. Als Acylgruppen kommen insbesondere niedere Alkanoylgruppen mit 1 bis 5 C-Atomen vorzugsweise Formyl oder Acetyl in Betracht. Wie oben angegeben, werden die Acylgruppen nach der Kupplung abgespalten, um die Farbstoffe der Formel III zu erhalten.

*Liste Nr. 2:*
p-Phenylendiamin;
1,4-Phenylendiamin-2-sulfonsäure;
1,4-Phenylendiamin-2-carbonsäure;
1,4-Diamino-naphthalin-2-sulfonsäure;
2,6-Diamino-naphthalin-8-sulfonsäure;
2,6-Diamino-naphthalin-4,8-disulfonsäure;
1,6-Diamino-naphthalin-4,8-disulfonsäure;
m-Phenylendiamin,
1,3-Phenylendiamin-4-sulfonsäure;
1,3-Phenylendiamin-4,6-disulfonsäure;
1,4-Phenylendiamin-2,6-disulfonsäure;
1,4-Phenylendiamin-2,5-disulfonsäure;
1,4-Diaminonaphthalin-6-sulfonsäure;
4,4'-Diaminodiphenyl-3-sulfonsäure;
4,4'-Diaminostilben-2,2'-disulfonsäure.

Beispiele für Mittelkomponenten, die am Aufbau der Reste VIa bis VIc beteiligt sein können, sind in der folgenden Liste Nr. 3 aufgeführt.

*Liste Nr. 3:*
Anilin; m-Toluidin;
2,5-Dimethyl- oder -Dimethoxy-anilin;
m-Amino-anisol; m-Acetylamino,
m-Propionylamino-, m-Butyrylamino- oder
m-Benzoylamino-anilin;
m-Amino-phenylharnstoff;
4-Acetamino-2-amino-toluol oder -anisol;
2-Amino-4-methylanisol;
1-Aminonaphthalin-6- oder -7-sulfonsäure;
2-Amino-4-acetylamino-benzolsulfonsäure;
2-Amino-5-naphthol-7-sulfonsäure;
2-Amino-8-naphthol-6-sulfonsäure;
2-(4-Aminobenzoyl-amino)-5-naphthol-7-sulfonsäure;
1-(4-Amino-2-sulfophenyl)-3-methyl- oder -3-carboxy-pyrazolon-5;
Acetoacet-3-sulfo-4-amino-anilid.

Beispiele für Kupplungskomponenten, die sich zur Herstellung von Farbstoffen der allgemeinen Formel III, worin F eine Gruppe der Formel VIb bedeutet, eignen, sind in der folgenden Liste Nr. 4 aufgeführt.

*Liste Nr. 4:*
2-Naphthol; 2-Naphthol-6-, -7- oder -8-sulfonsäure;
2-Naphthol-3,6-, -3,7-, -4,8- oder -6,8-disulfonsäure;
2-Naphthol-3,6,8-trisulfonsäure;
1-Naphthol-4-, -5-, -6- oder -8-sulfonsäure;
1-Naphthol-3,6-, -3,7-, -3,8- oder -4,8-disulfonsäure;

1-Naphthol-3,6-, -3,7-, -3,8- oder -4,8-disulfonsäure;
1-Naphthol-3,6,8-trisulfonsäure;
2-Naphthylamin-5-, -6- oder -7-sulfonsäure;
2-Naphthylamin-3,6-, -3,7-, -5,7- oder -6,8-disulfonsäure;
1-Amino-8-naphthol-2,4-disulfonsäure;
2-Ureido-5-naphthol-7-sulfonsäure;
1-(4-Sulfophenyl)-3-methyl- oder -3-carboxy-pyrazolon-5;
1-(4-Methyl-2-sulfophenyl)-3-methyl- oder -3-carboxy-pyrazolon-5;
1-(2,5-Dichlor-4-sulfophenyl)-3-methyl- oder -3-carboxy-pyrazolon-5;
4-Acetoacetylamino-benzolsulfonsäure;
4-Acetoacetylamino-3,6-dimethoxy-benzolsulfonsäure;
Barbitursäure;
6-Hydroxy-4-methyl-3-sulfo- oder -3-carbonamido-pyridon-2.

Beispiele für Kupplungskomponenten, die sich zum Aufbau von Farbstoffen der Formel III, worin F eine Gruppe der Formel VIa oder VIc ist, eignen, sind in der folgenden Liste Nr. 5 aufgeführt.

*Liste Nr. 5:*
Anilin; m-Toluidin; 2,5-Dimethyl- oder -Dimethoxy-anilin;
m-Amino-anisol; m-Acetylamino-, m-Propionylamino-, m-Butyrylamino- oder m-Benzoylamino-anilin;
m-Amino-phenylharnstoff;
4-Acetamino-2-amino-toluol oder -anisol;
2-Amino-4-methylanisol;
1-Amino-naphthalin-6-, -7- oder -8-sulfonsäure;
2-Amino-4-acetyl-amino-benzolsulfonsäure;
2-Amino-5-naphthol-7-sulfonsäure;
2-Amino-8-naphthol-6-sulfonsäure;
2-(4-Aminobenzoyl-amino)-5-naphthol-7-sulfonsäure;
1-(4-Amino- oder 4-Acetylamino)-2-sulfophenyl-3-methyl- oder -3-carboxy-pyrazolon-5;
Acetoacet-3-sulfo-4-amino-anilid;
1-Amino-8-naphthol-3,6- oder 4,6-disulfonsäure;
1-(3- oder 4-Aminobenzoyl)-amino-8-naphthol-3,6- oder -4,6-disulfonsäure;
1-Acetylamino-8-naphthol-3,6- oder -4,6-disulfonsäure;
2-Acetylamino-5-naphthol-7-sulfonsäure;
2-Acetylamino-8-naphthol-6-sulfonsäure;
1-(3-Amino- oder 3-Acetylamino-6-sulfophenyl)-3-methyl- oder -3-carboxy-pyrazolon-5;
2-Acetyl-methylamino- oder 2-Methylamino-5-naphthol-7-sulfonsäure;
N-Methylanilin; N-Propyl-m-toluidin.

Zur Herstellung erfindungsgemässer Reaktivfarbstoffe geeignete eine oder zwei

```
–NH–   oder   –N–Acyl-Gruppen
 |             |
 R             R
```

tragende Disazofarbstoffe können auch durch Tetrazotierung eines zwei primäre Aminogruppen enthaltenden aromatischen Diamins und Kuppeln der so erhaltenen Tetrazoverbindung mit 2 Molanteilen einer eine

```
–NH–   oder   –N–Acyl-Gruppe
 |             |
 R             R
```

enthaltenden Kupplungskomponente, beispielsweise einer der in Liste 5 angegebenen, oder mit je 1 Molanteil von zwei verschiedenen derartigen Kupplungskomponenten oder mit 1 Molanteil einer derartigen Kupplungskomponente und mit 1 Molanteil einer keine

```
–NH–   bzw.   –N–Acyl-Gruppe
 |             |
 R             R
```

enthaltenden Kupplungskomponente, beispielsweise einer der in Liste 4 angegebenen, erhalten werden. Als Beispiele solcher aromatischer Diamine seien erwähnt:

*Liste Nr. 6:*
3,3'-Dimethoxybenzidin;
Benzidin-2,2'-disulfonsäure;
Benzidin-3,3'-dicarbonsäure;
Benzidin-3,3'-diglykolsäure und
4,4'-Diaminostilben-2,2'-disulfonsäure.

Weitere, zur Herstellung erfindungsgemässer Reaktivfarbstoffe geeignete eine oder zwei

```
–NH-Gruppen
 |
 R
```

tragende Disazofarbstoffe können erhalten werden, indem man auf eine zweimal ankuppelbare Kupplungskomponente entweder 2 Molanteile eines eine

```
N–Acyl-Gruppe
|
R
```

tragende diazotierten Amins, beispielsweise eines Acylderivats eines der Amine der Liste 2 oder 1 Molanteil eines dieser diazotierten Amine und 1 Molanteil eines keine

```
–N–Acyl-Gruppe
 |
 R
```

tragenden diazotierten Amins, beispielsweise eines der Amine der Liste 1, kuppelt und die erhaltenen Farbstoffe anschliessend verseift. Im Falle der Verwendung von 2 Molanteilen der eine

```
–N–Acyl-Gruppe
 |
 R
```

tragenden Amine können 2 Molanteile desselben

Amins oder je 1 Molanteil zweier verschiedener Amine eingesetzt werden.

Geeignete zweimal ankuppelbare Kupplungskomponenten sind z.B.
1-Amino-8-naphthol-3,6- oder
4,6-disulfonsäure, Resorcin oder
5,5'-Dihydroxy-7,7'-disulfo-2,2'-dinaphthylharnstoff.

Die Farbstoffe der Formel III können in völliger Analogie zu den oben beschriebenen Herstellungsmöglichkeiten erhalten werden, wenn man anstelle der in den Listen 2, 3 und 5 angegebenen Diazo- bzw. Kupplungskomponenten Verbindungen einsetzt, die anstelle der

-NH- bzw. -N-Acyl-Gruppe
R R

eine Nitrogruppe enthalten und die Nitrogruppe der aus diesen Komponenten aufgebauten Azoverbindungen zur Aminogruppe reduziert. Die Bedingungen dieser Reduktion sind an sich bekannt. Ein für diesen Zweck bekanntes Reduktionsmittel ist Alkalisulfid, das in wässrigem Medium bei Temperaturen von 40° bis 70°C die Nitrogruppe reduziert, ohne die Azogruppe anzugreifen.

Beispiele für die Reste F besonders wertvoller, zur Herstellung erfindungsgemässer Farbstoffe geeigneter Mono- und Disazofarbstoffe werden durch die folgenden Formeln wiedergegeben, wobei die Benzol- und Naphthalinkerne nach den für D, M und K gegebenen Erläuterungen substituiert sein können, und die Stellung des Restes der Formel IIIa durch die offene Bindung angegeben ist:

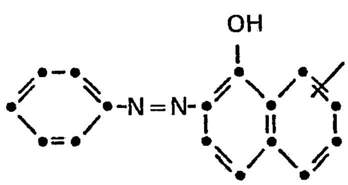

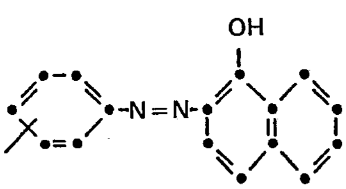

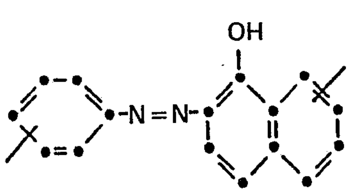

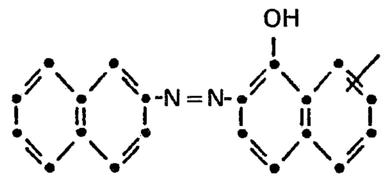

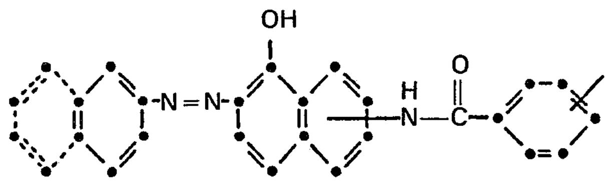

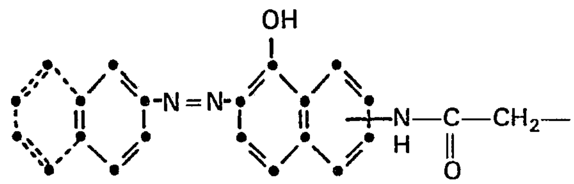

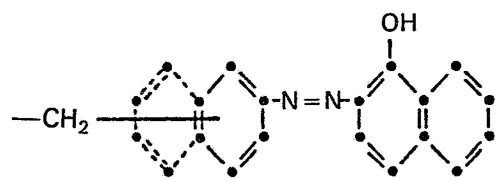

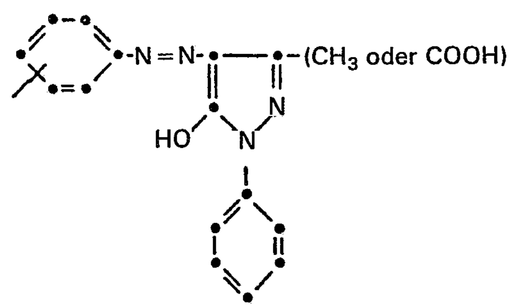

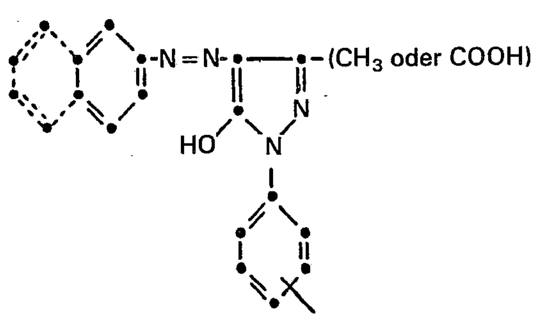

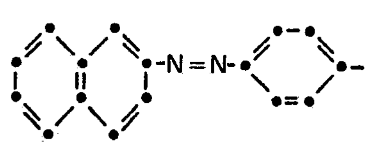

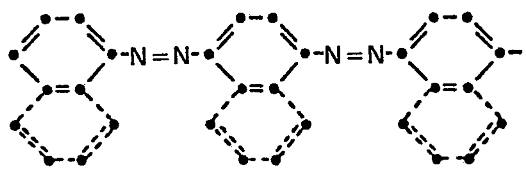

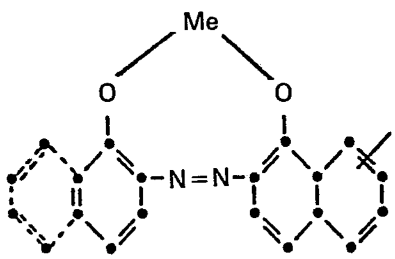

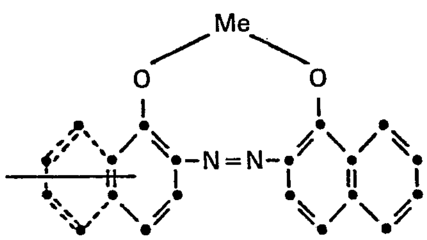

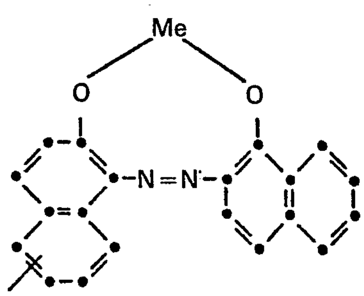

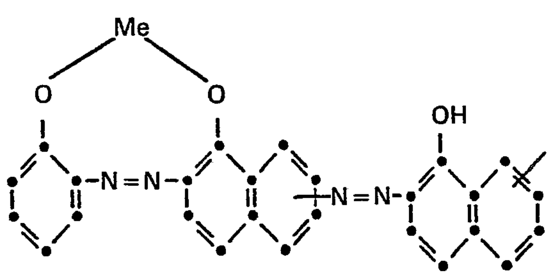

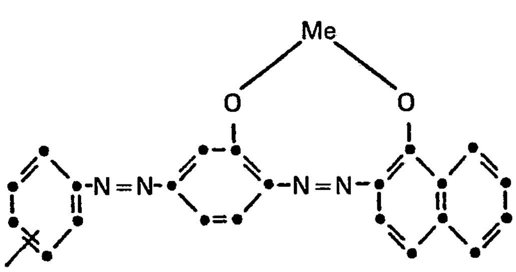

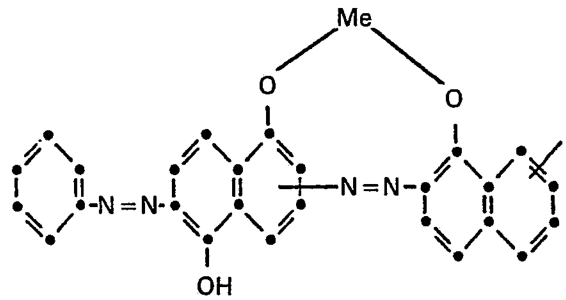

Beispiele für Diazokomponenten, aus denen sich besonders wertvolle Monoazofarbstoffe der Formel III herstellen lassen, sind:

Anilin-2-sulfonsäure;
Anilin-2,5-disulfonsäure;
2-Naphthylamin-1-sulfonsäure;
2-Naphthylamin-1,5-disulfonsäure;
2-Naphthylamin-4,8-disulfonsäure;
2-Naphthylamin-3,6,8-trisulfonsäure;
2-Naphthylamin-4,6,8-trisulfonsäure.

Beispiele für Kupplungskomponenten, aus denen sich besonders wertvolle Monoazofarbstoffe herstellen lassen, sind:

1-Amino-8-naphthol-3,6-disulfonsäure;
1-Amino-8-naphthol-4,6-disulfonsäure;
2-Amino-5-naphthol-7 sulfonsäure;
1-(4-Amino-2-sulfophenyl)-3-carboxypyrazolon-5;
1-(5-Amino-2-sulfophenyl)-3-carboxypyrazolon-5;
Anilin; N-Methylanilin; 3-Amino-toluol;
3-Amino-acetanilid; 3-Aminophenylharnstoff.

Beispiele für besonders wertvolle Monoazofarbstoffe der Formel III sind:

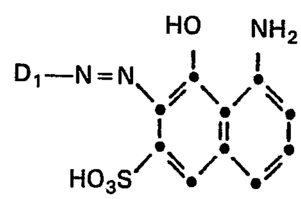

worin $D_1$ der 2-Sulfophenyl-, der 1-Sulfo-2-naphthyl- oder der 1,5-Disulfo-2-naphthylrest ist und die Kupplungskomponente durch eine weitere Sulfonsäuregruppe in 3- oder 4-Stellung substituiert ist.

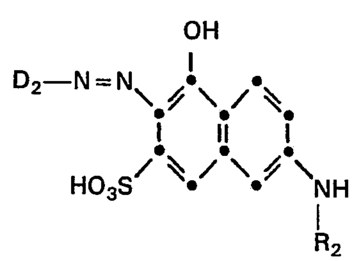

wobei $D_2$ der 2-Sulfophenyl-, der 2,5-Disulfophenyl- oder der 1,5-Disulfo-2-naphthylrest ist, die Kupplungskomponente keine weiteren Substituenten trägt und $R_2$ für Wasserstoff oder Methyl steht.

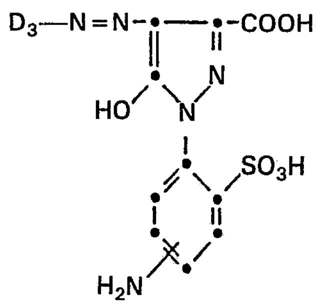

worin $D_3$ der 2-Sulfophenyl- oder der 1-Sulfo-2-naphthylrest ist und die Aminogruppe im 2-Sulfophenylkern der Kupplungskomponente in 4- oder 5-Stellung steht.

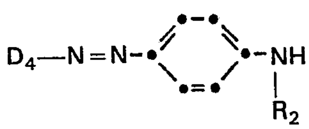

worin $D_4$ der 2,5-Disulfophenyl-, der 4,8-Disulfo-2-naphthyl-, der 3,6,8-Trisulfo-2-naphthyl- oder der 4,6,8-Trisulfo-2-naphthylrest ist, die Kupplungskomponente in o-Stellung zur Azogruppe durch eine Methylgruppe, eine Acetaminogruppe oder den Harnstoffrest substituiert sein kann und $R_2$ für Wasserstoff oder Methyl steht.

Beispiele für einzelne Farbstoffe der Formel III, in denen F ein Rest eines Mono- oder Disazofarbstoffs ist, sind:

1-(3'-Aminobenzoylamino)-8-hydroxy-7-(2'-sulfophenylazo)-naphthalin-3,6-disulfonsäure,
1-(4'-Aminobenzoylamino)-8-hydroxy-7,2'-azonaphthalin-1',3,5',6-tetrasulfonsäure,
1-Amino-8-hydroxy-7,2'-azonaphthalin-1',4,6-trisulfonsäure,
1-(Aminoacetylamino)-8-hydroxy-7,2'-azonaphthalin-1',3,5'-6-tetrasulfonsäure,
2-Methylamino-5-hydroxy-6,2'-azonaphthalin-1',5',7-trisulfonsäure,
2-Amino-8-hydroxy-7,2'-azonaphthalin-1',6-disulfonsäure,
2-Methylamino-8-hydroxy-7,2'-azonaphthalin-1',6,5'-trisulfonsäure,
2-Amino-5-hydroxy-6-(2',5'-disulfophenylazo)-naphthalin-7-sulfonsäure,
2-Methylamino-5-hydroxy-6-(4'-methoxy-2'-sulfophenylazo)-naphthalin-7-sulfonsäure,
1-Amino-8-hydroxy-7-(2'-sulfophenylazo)-naphthalin-3,6-disulfonsäure,
1-Amino-8-hydroxy-7-(4'-chlor-2'-sulfophenylazo)-naphthalin-4,6-disulfonsäure,
2-(4'-Amino-2'-methylphenylazo)-naphthalin-4,8-disulfonsäure,
2-(4'-Amino-2'-methylphenylazo)-naphthalin-4,6,8-trisulfonsäure,
2-(4'-Amino-2'-acetylaminophenylazo)-naphthalin-5,7-disulfonsäure,
2-(4'-Amino-2'-acetylaminophenylazo)-naphthalin-3,6,8-trisulfonsäure,
4-Nitro-4'-(4''-methylaminophenylazo)-stilben-2,2'-disulfonsäure,
4-Nitro-4'-(4''-amino-2''-methyl-5''-methoxyphenylazo)-stilben-2,2'-disulfonsäure,
1-(2',5'-Dichlor-4'-sulfophenyl)-3-methyl-4-(3''-amino-6''-sulfophenylazo)-5-pyrazolon,
1-(4'-Sulfophenyl)-3-carboxy-4-(4''-amino-2''-sulfophenylazo)-5-pyrazolon,
1-(2'-Methylphenyl)-3-methyl-4-(4''-amino-2'',5''-disulfophenylazo)-5-pyrazolon,
1-(2'-Sulfophenyl)-3-methyl-4-(3''-amino-6''-sulfophenylazo)-5-pyrazolon,
2-(3'-Sulfophenylamino)-5-hydroxy-6-(4'-amino-2'-sulfophenylazo)-naphthalin-7-sulfonsäure,
1-(3'-Aminophenyl)-3-methyl-4-(2'',5''-disulfophenylazo)-5-pyrazolon,
1-(3'-Amino-6'-sulfophenyl)-3-carboxy-4-(2'-sulfophenylazo)-5-pyrazolon,
1-(4'-Amino-2'-sulfophenyl)-3-carboxy-4-(2'-sulfophenylazo)-5-pyrazolon,
1-(4'-Amino-2'-sulfophenyl)-3-carboxy-4-[4''-(2''',5'''-disulfophenylazo)-2''-methoxy-5''-methylphenylazo]-5-pyrazolon,
der Kupferkomplex von 1-Amino-8-hydroxy-7-(2'-hydroxy-5'-sulfophenylazo)-naphthalin-3,6-disulfonsäure,
der Kupferkomplex von 2-Amino-5-hydroxy-6-(2'-hydroxy-3'-sulfo-5'-nitrophenylazo)-naphthalin-7-sulfonsäure,
der Kupferkomplex von 2-Amino-5-hydroxy-6-(2'-hydroxy-5'-sulfophenylazo)-naphthalin-1,7-disulfonsäure,
der Kupferkomplex von 1-Amino-8-hydroxy-7-(2'-hydroxy-3'-chlor-5'-sulfophenylazo)-naphthalin-3,6-disulfonsäure,
der Kupferkomplex von 2-Methylamino-5-hydroxy-6-(2'-carboxy-5'-sulfophenylazo)-naphthalin-7-disulfonsäure,
4,4'-Bis-(1''-amino-8''-hydroxy-3'',6''-disulfo-7''-naphthylazo)-3,3'-dimethoxydiphenyl,
2-Amino-5-hydroxy-6-[4'-(2''-sulfophenylazo)-2'-methoxy-5'-methylphenylazo]-naphthalin-1,7-disulfonsäure,
1-Amino-8-hydroxy-2-(2',5'-disulfophenylazo)-7-(3'-amino-6'-sulfophenylazo)-naphthalin-3,6-disulfonsäure,
der Kupferkomplex von 1-Amino-8-hydroxy-7-[4'-(2''-sulfophenylazo)-2'-hydroxy-5'-methylphenylazo]-naphthalin-3,6-disulfonsäure,
der Kupferkomplex von 2-Amino-5-hydroxy-6-[4'-(2'',5''-disulfophenylazo)-2'-hydroxy-5'-methylphenylazo]-naphthalin-7-sulfonsäure,
der Kupferkomplex von 1-(4'-Amino-2'-sulfophenyl)-3-carboxy-4-[4''-(2''',5'''-disulfophenylazo)-2''-hydroxy-5''-methylphenylazo]-5-pyrazolon,
der Kupferkomplex von 2-(4'-Amino-3'-sulfoanilino)-5-hydroxy-6-(2''-carboxyphenylazo)-naphthalin-7-sulfonsäure,
der 2:1-Chromkomplex von 2-Amino-6'-nitro-8,2'-dihydroxy-7,1'-azonaphthalin-6,4'-disulfonsäure,

der 2:1-Chromkomplex von 2-Amino-5-hydroxy-6--(2'-carboxyphenylazo)-naphthalin-7-sulfonsäure,
der 2:1-Chromkomplex von 1-Amino-8-hydroxy-7--(4'-nitro-2'-hydroxyphenylazo)-naphthalin-3,6--disulfonsäure,
der 2:1-Kobaltkomplex von 2-(4'-Amino-3'-sulfoanilino)-5-hydroxy-6-(5''-chlor-2''-hydroxyphenylazo)-naphthalin-7-sulfonsäure,
der Kupferkomplex von 2-Amino-6'-nitro-2',8-dihydroxy-1',7-azonaphthalin-4',6-disulfonsäure,
der Kupferkomplex von 1,6'-Diamino-2',8-dihydroxy-1',7-azonaphthalin-2,4,4'-trisulfonsäure,
der Kupferkomplex von 6'-Amino-1',2-dihydroxy--1,2'-azonaphthalin-3,4',6,8'-tetrasulfonsäure,
der Kupferkomplex von 1-Amino-1',8-dihydroxy--2',7-azonaphthalin-3,4',6,8'-tetrasulfonsäure.

Ein weiterer Weg zur Herstellung erfindungsgemässer Farbstoffe besteht darin, dass Mono- oder Disazofarbstoffew oder gegebenenfalls deren Metallkomplexe der Formel V

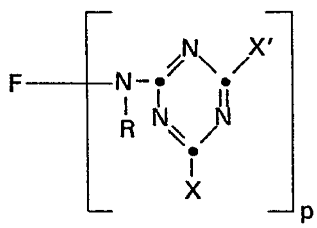

(V)

worin F ein Rest einer der oben angegebenen Formeln VIa bis VIc ist und X und X' die oben angegebenen Bedeutungen haben, durch Einsatz von Diazo- und Kupplungskomponenten, von denen eine, gegebenenfalls aber auch beide eine Gruppe der Formel Va

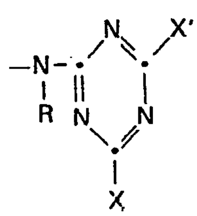

(Va)

enthalten, direkt hergestellt und anschliessend, wie oben beschrieben, mit einem Amin der Formel IIa umgesetzt werden.

Die hierfür erforderlichen Ausgangsmaterialien werden erhalten durch Umsetzung von Diazo- bzw. Kupplungskomponenten, die einen Rest der Formel

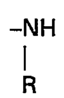

enthalten, mit Acylierungsmitteln der Formel IV.

Diazokomponenten zur direkten Herstellung von Azofarbstoffen der Formel V, in denen F ein Rest der Formel VIb oder VIc ist, sind beispielsweise durch Acylierung der

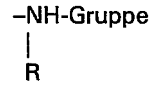

eines in der Liste 2 aufgeführten aromatischen Amins mit einem Acylierungsmittel der Formel IV zu erhalten.

Kupplungskomponenten zur direkten Herstellung von Azofarbstoffen der Formel V, in denen F ein Rest der Formel VIa oder VIc ist, sind beispielsweise durch Acylierung der

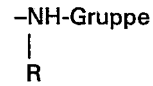

einer der in der Liste 5 genannten Kupplungskomponenten mit einem Acylierungsmittel der Formel IV zu erhalten.

Beispiele für komplexbildende Metalle, die in für F stehenden Resten metallhaltiger Mono- oder Disazofarbstoffe enthalten sein können, sind Chrom, Mangan, Kobalt, Nickel und Kupfer. Bevorzugt sind Kupfer, Chrom und Kobalt.

Eine weitere wichtige Gruppe von Farbstoffen der allgemeinen Formel III sind solche, in denen F der Rest eines Derivats des 1-Amino- oder 1-Anilinoanthrachinons, insbesondere der Rest eines 4-Phenylamino-1-amino-anthrachinon-2-sulfonsäurederivats ist. Geeignete Aminoanthrachinone enthalten 2 bis 3, vorzugsweise 2 Aminogruppen, die auch durch Alkyl oder Aryl substituiert sein können.

Alkylreste haben insbesondere 1 bis 4, vorzugsweise 1 bis 2 C-Atome, als Arylrest ist Phenyl bevorzugt. Die Derivate des Aminoanthrachinons können 1 oder 2 Sulfonsäuregruppen direkt im Anthrachinonkern und eine oder zwei Sulfonsäuregruppen in eventuell vorhandenen aromatischen Substituenten des Anthrachinonkerns enthalten. Die Gruppe

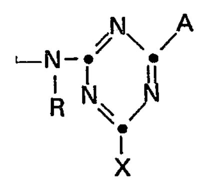

kann direkt an den Anthrachinonkern, vorzugsweise aber an einen Substituenten des Anthrachinonkerns gebunden sein.

Bei einer bevorzugten Gruppe erfindungsgemässer Anthrachinonfarbstoffe der Formel I steht F für einen Rest der Formel VII

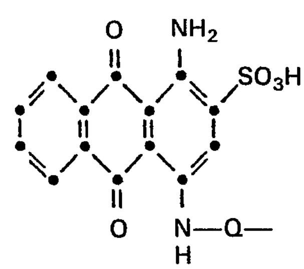

(VII)

in der der Anthrachinonkern durch eine weitere Sulfonsäuregruppe substituiert sein kann. Q steht für einen Phenylenrest, der einen Rest der allgemeinen Formel IIIa trägt. Der Phenylenrest Q kann durch eine Sulfonsäure- oder Carbonsäuregruppe substituiert sein, so dass der Farbstoff mindestens zwei stark wasserlöslich machende Gruppen enthält. Weiter kann der Phenylenrest durch eine Alkoxygruppe mit 1-3 C-Atomen, durch ein Halogenatom oder durch 1 bis 3 Alkylgruppen mit 1-3 C-Atomen substituiert sein.

Die bevorzugten Anthrachinonfarbstoffe der allgemeinen Formel III, in denen F ein Rest der Formel VII ist, werden hergestellt durch Kondensation eines Diamins der allgemeinen Formel

$H_2N$–Q–N–H
|
R

oder dessen Monoacylderivat

$H_2N$–Q–N–Acyl
|
R

mit einem Anthrachinonderivat, das in 4-Stellung einen reaktiven Substituenten, beispielsweise ein Br-Atom, enthält. Acyl hat hierbei die oben angegebenen Bedeutungen, insbesondere die als bevorzugt charakterisierten.

Geeignete Diamine der Formel

$H_2N$–Q–N–H,
|
R

die auch in Form ihrer Acylderivate eingesetzt werden können, sind beispielsweise:

2,4-Diaminobenzolsulfonsäure,
2,4-Diaminotoluol-6-sulfonsäure,
2,6-Diaminotoluol-4-sulfonsäure,
3,5-Diamino-2,4,6-trimethylbenzolsulfonsäure,
p-Phenylendiamin,
2,5-Diaminobenzol-carbonsäure,
2,5-Diaminobenzol-sulfonsäure,
2,4-Diaminobenzol-carbonsäure.

Beispiele für Farbstoffe der Formel III, in denen F der Rest eines 1-Amino-anthrachinons ist, sind

1-Amino-4-(3'-amino-4'-sulfoanilino)-anthrachinon-2-sulfonsäure,
1-Amino-4-(3'-amino-2',4',6'-trimethyl-4'-sulfoanilino)-anthrachinon-2-sulfonsäure,
1-Amino-4-(4'-amino-3'-sulfoanilino)-anthrachinon-2,5-disulfonsäure,
1-Amino-5,8-bis-(4'-methyl-2'-sulfoanilino)-anthrachinon.

Eine weitere wichtige Gruppe von Farbstoffen der allgemeinen Formel III sind solche, in denen F für den Rest eines Sulfophthalocyaninfarbstoffs, insbesondere eines im Phthalocyaninkern mindestens 2 Sulfonsäuregruppen tragenden Derivats des Phthalocyaninsulfanilids oder -sulfalkylamids mit 2-6 C-Atomen in der Alkylkette steht.

Eine bevorzugte Gruppe von Phthalocyaninfarbstoffen der allgemeinen Formel III sind solche, in denen F für einen Rest der Formel VIII steht,

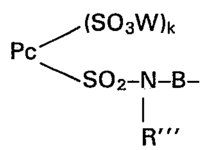 (VIII),

worin Pc den Rest eines metallhaltigen oder metallfreien Phthalocyaninkerns, vorzugsweise des Kupfer- oder Nickelphthalocyanins,

W -OH und/oder -NR'R'', wobei R', R'' und R''' unabhängig voneinander für Wasserstoff oder Alkyl mit 1-4 C-Atomen stehen,

k die Zahlen 1 bis 3 und

B einen gegebenenfalls durch Halogen, 1 bis 3 Alkylgruppen mit 1-2 C-Atomen oder durch eine oder zwei Sulfonsäure- oder Carbonsäuregruppen substituierten Phenylrest oder einen Alkylrest mit 2-6 C-Atomen bedeutet.

Bevorzugt ist B der durch eine Sulfonsäuregruppe substituierte Phenylrest sowie Äthylen.

Die Farbstoffe der Formel III, in denen F für einen Rest der Formel VIII steht, werden in an sich bekannter Weise durch Kondensation eines Sulfochlorids der Formel

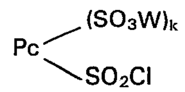

worin Pc, W und k die oben angegebenen Bedeutungen haben, mit einem Diamin der allgemeinen Formel

–HN–B–NH
| |
R''' R

bzw. seinem Monoacylderivat

HN–B–N–Acyl,
| |
R''' R

wobei Acyl die obengenannten Bedeutungen, insbesondere die als bevorzugt charakterisierten, hat.

Diamine der Formel

HN–B–NH,
| |
R''' R

die sich zur Herstellung der bevorzugten Phthalocyaninfarbstoffe der Formel III eignen, sind beispielsweise:

m-Phenylendiamin, p-Phenylendiamin,
2,4-Diaminobenzolsulfonsäure,
2,5-Diaminobenzolsulfonsäure,

2,5-Diaminobenzolcarbonsäure,
2,5-Diaminobenzol-1,4-disulfonsäure,
2,4-Diaminotoluol-6-sulfonsäure,
Äthylendiamin, Hexamethylendiamin.

Beispiele für Farbstoffe der Formel III, in denen F der Rest eines N-substituierten Phthalocyaninsulfonamids ist, sind

3-[N-(3-Amino-4-sulfophenyl)-sulfamyl]-kupferphthalocyanin-3′,3″,3‴-trisulfonsäure,
Bis-4,4′-[N-(3′-amino-4′-sulfophenyl)-sulfamyl]-kupferphthalocyanin-4″,4‴-disulfonsäure,
3-[N-(4-Amino-3-sulfophenyl)-sulfamyl]-nickelphthalocyanin-3′,3″,3‴-trisulfonsäure,
3-[N-(3-Aminophenyl)-sulfamyl]-3′-sulfamyl-kupferphthalocyanin-3″,3‴-disulfonsäure,
3-(N-β-Aminoäthyl-sulfamyl)-kupferphthalocyanin-3′,3″,3‴-trisulfonsäure.

Die erfindungsgemässen Reaktivfarbstoffe der Formel I sind hervorragend geeignet zum Färben und Bedrucken von Zellulose und zellulosehaltigen Materialien. Sie zeichnen sich insbesondere bei Druckverfahren durch eine gleichmässig hohe Fixierausbeute unabhängig von der Art der Fixierung aus, z.B. bei Fixierung durch Dämpfen oder Trockenhitze oder ein- bzw. zweiphasige Verfahren. Auch bei den verschiedenen Färbeverfahren werden sehr gute Ergebnisse erhalten, z.B. bei Ausziehverfahren oder Klotz-Aufdock-Verfahren bzw. Klotz-Thermofixier-Verfahren. Die erhaltenen Färbungen und Drucke sind von hoher Brillanz und Farbstärke bei sehr guten Lichtechtheiten, auch in nassem Zustand, sehr guten Nassechtheiten, wie Wäsche 60° und 95°C, sowie guten Gebrauchsechtheiten, wie Seewasserechtheit, Schweissechtheit sauer und alkalisch, Chlorbadewasserechtheit, Peroxidechtheit und Abgasechtheit. Ferner zeichnen sich die Farbstoffe durch Unempfindlichkeit gegen atmosphärische Einflüsse aus.

Sehr gute Ergebnisse werden auch bei der Anwendung nach Reaktivfärbeverfahren auf Polyamiden, insbesondere Wolle, erhalten. Hier sind neben sehr guter Lichtechtheit insbesondere die hervorragenden Wasch- und Schweissechtheiten hervorzuheben, sowie das ausgezeichnete Aufbauvermögen.

Die in den folgenden Beispielen angegebenen Temperaturen beziehen sich auf °C, Teile sind Gewichtsteile und Prozente Gewichtsprozente.

*Beispiel 1*

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 30 Teilen N-[2-β-Chloräthylsulfonyl-äthyl]-äthylendiamin-dihydrochlorid in 100 ml Wasser wird der pH der Reaktionsmischung durch ständige Zugabe von 2n Natriumhydroxydlösung zuerst kurze Zeit schwach kongosauer und dann bei 5-6 gehalten. Dabei wird die Temperatur innert 2 bis 3 Stunden auf 20° bis 25° erhöht. Nach vollständiger Reaktion wird dieses Zwischenprodukt bei 0° bis 10° und pH 5 mit 30,3 Teilen diazotiertem 2-Amino-1,5-disulfonsäure-naphthalin gekuppelt. Nach vollständiger Kupplungsreaktion bei pH 7 wird die Reaktionsmischung geklärt und der gebildete Reaktivfarbstoff der Formel

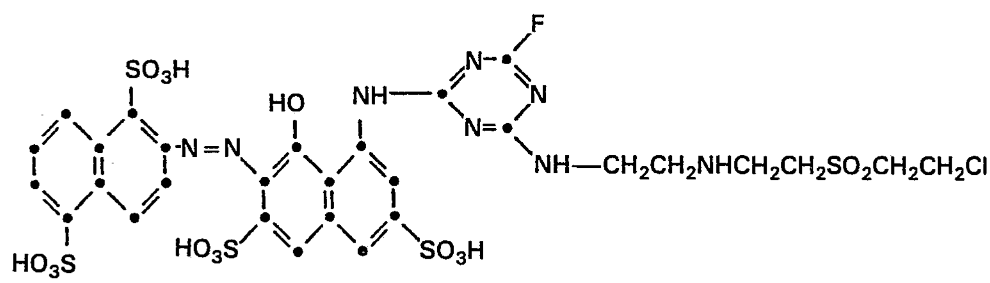

durch Eindampfen oder Gefriertrocknen der Reaktionslösung bei pH 7 isoliert. Er färbt Baumwolle in roten Tönen.

*Beispiel 2*

31,9 Teile 1-Amino-8-hydroxynaphthalin-3,6-disulfonsäure werden in 800 ml Wasser neutral gelöst und die Lösung auf 0 bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 26 Teilen N-(2-β-Vinylsulfonyl-äthyl)-äthylen-diamin-dihydrochlorid in 100 ml Wasser wird der pH der Reaktionsmischung durch ständige Zugabe von 2n Natriumhydroxydlösung zuerst kurze Zeit schwach kongosauer und dann bei 5 bis 6 gehalten. Dabei wird die Temperatur innert 2 bis 3 Stunden auf 20 bis 25° erhöht. Nach vollständiger Reaktion wird dieses Zwischenprodukt bei 0 bis 10° und pH 5 mit 30,3 Teilen diazotiertem 2-Amino-1,5-disulfonsäure-naphthalin gekuppelt. Nach vollständiger Kupplungsreaktion bei pH 7 wird die Reaktionsmischung geklärt und der gebildete Reaktivfarbstoff der Formel

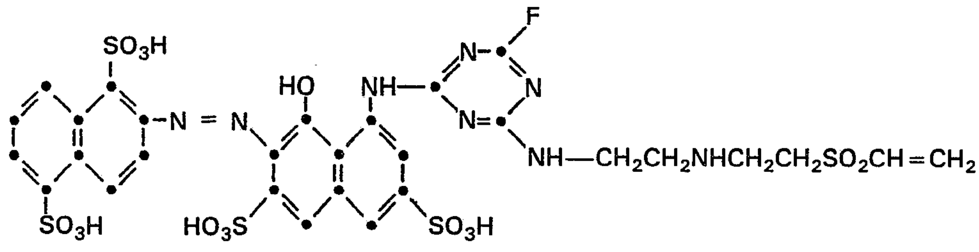

durch Eindampfen oder Gefriertrocknen der Reaktionslösung bei pH 7 isoliert. Er färbt Baumwolle in roten Tönen.

*Beispiel 3*

31,9 Teile 1-Amino-8-hydroxynaphthalin-3,6-disulfonsäure werden in 800 ml Wasser neutral gelöst und die Lösung auf 0 bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 40 Teilen N-(2-β-Chloräthylsulfonyl-isopropyl)-äthylendiamin-sulfat in 100 ml Wasser wird der pH der Reaktionsmischung durch ständige Zugabe von 2n Natriumhydroxydlösung zuerst kurze Zeit schwach kongosauer und dann bei 5 bis 6 gehalten. Dabei wird die Temperatur innert 2 bis 3 Stunden auf 20 bis 25° erhöht. Nach vollständiger Reaktion wird dieses Zwischenprodukt bei 0 bis 10° und pH 5 mit 30,3 Teilen diazotierter 2-Amino-naphthalin-1,5-disulfonsäure gekuppelt. Nach vollständiger Kupplungsreaktion bei pH 7 wird die Reaktionsmischung geklärt und der gebildete Reaktivfarbstoff der Formel

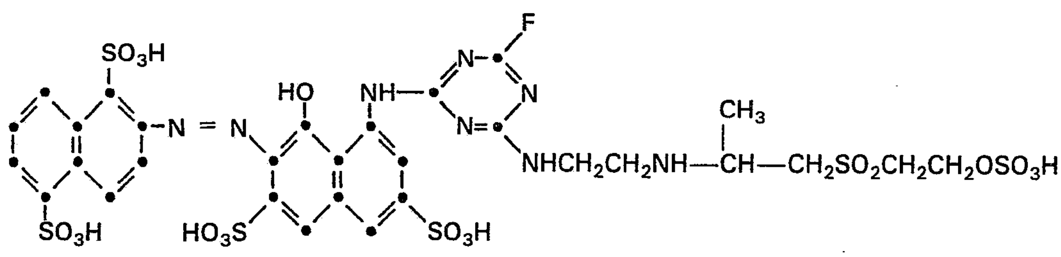

durch Eindampfen oder Gefriertrocknen der Reaktionslösung bei pH 7 isoliert. Er färbt Baumwolle in roten Tönen.

*Beispiel 4*

31,9 Teile 1-Amino-8-hydroxynaphthalin-3,6-disulfonsäure werden in 800 ml Wasser neutral gelöst und die Lösung auf 0 bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 30 Teilen N-(2-β-Chloräthylsulfonyl-äthyl)-äthylendiamin-dihydrochlorid in 100 ml Wasser wird der pH der Reaktionsmischung durch ständige Zugabe von 2n Natriumhydroxydlösung zuerst kurze Zeit schwach kongosauer und dann bei 5 bis 6 gehalten. Dabei wird die Temperatur innert 2 bis 3 Stunden auf 20 bis 25° erhöht. Nach vollständiger Reaktion wird dieses Zwischenprodukt bei 0 bis 10° und pH 5 mit 21,7 Teilen diazotiertem 4-β-Sulfatoäthylsulfonyl-anilin gekuppelt. Nach vollständiger Kupplungsreaktion bei pH 7 wird die Reaktionsmischung geklärt und der gebildete Reaktivfarbstoff der Formel

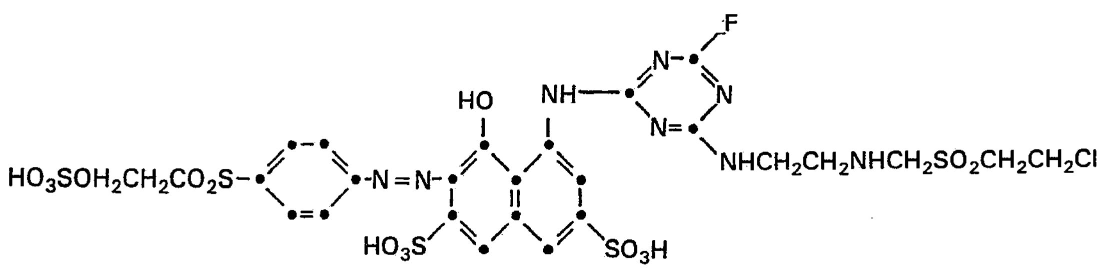

durch Eindampfen oder Gefriertrocknen der Reaktionslösung bei pH 7 isoliert. Er färbt Baumwolle in roten Tönen.

*Beispiel 5*

18,5 Teile Cyanurchlorid werden in 110 Teilen Aceton gelöst und unter kräftigem Rühren auf 250

Teile Eis gegeben. Dazu lässt man eine Lösung von 55,3 Teilen des Farbstoffs der folgenden Konstitution

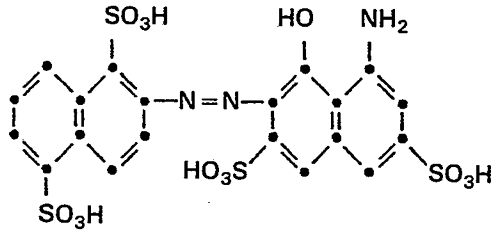

bei 0° hinzufliessen. Anschliessend werden 50 Teile 2-normale Sodalösung zugetropft, wobei sich ein pH-Wert von 6-6,5 ergibt. Nun kommen 30 Teile N--(2-β-Chloräthylsulfonyl-äthyl)-äthylendiamin-dihydrochlorid als Pulver hinzu. Man erwärmt in 1/2 Stunde auf 40° und hält diese Temperatur 3 Stunden. Gleichzeitig werden 100 Teile 2-normale Sodalösung bei einem pH-Wert von 4,0-4,5 zugetropft. Zur Abscheidung gibt man 25% Kaliumchlorid hinzu, lässt unter Rühren auf 20-25° abkühlen und filtriert. Man erhält etwa 235 Teile Farbstoffpaste, die bei 60-65° im Vakuum getrocknet werden. Der hergestellte Reaktivfarbstoff hat folgende Konstitution:

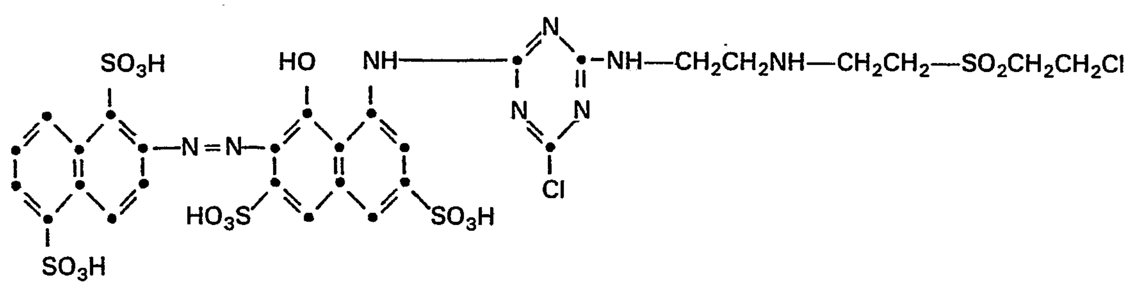

Der oben eingesetzte Farbstoff 1-Amino-8-hydroxy-2',7-azonaphthalin-1',3,5',6-tetrasulfonsäure kann wie folgt erhalten werden:

60,6 Teile 2-Naphthylamin-1,5-disulfonsäure werden mit 300 Teilen Wasser und etwa 20 ml 10-normaler Natronlauge unter Erwärmen auf 60° bei pH 7-8 gelöst. Dazu kommt eine Lösung von 14 Teilen Natriumnitrit in 60 Teilen Wasser. Diese 60° warme Mischung lässt man zu einem Gemisch von 50 Teilen 10-normaler Salzsäure und 500 Teilen Eis laufen, wobei während der Diazotierung eine Temperatur von 0-5° eingehalten werden soll. Es wird 1/2 Stunde nachgerührt und der vorhandene Überschuss von salpetriger Säure durch Zugabe von Amino-sulfonsäure zerstört. Die Diazoverbindung fällt als schwach gelblicher Niederschlag aus. Diese Suspension lässt man bei 0-5° zu 72,2 Teilen 1--Acetamino-8-naphthol-3,6-disulfonsäure, welche in 500 Teilen Wasser neutral gelöst werden, 200 Teilen Eis und 17 Teilen Natriumhydrogencarbonat hinzulaufen. Die Kupplung wird bei einem pH-Wert von 7 zu Ende geführt. Nach Zugabe von 60 Teilen 10-normaler Natronlauge wird 3 Stunden auf 70° erhitzt, wodurch die Acetylgruppe verseift wird. Zur Abscheidung des verseiften Farbstoffes wird die Farbstofflösung mit 10% Kaliumchlorid und 15% Natriumchlorid versetzt, mit 22 Teilen 10-normaler Salzsäure neutral gestellt, auf 20-25° abgekühlt, filtriert und mit 600 Teilen Salzwasser (Dichte 1,142) gewaschen.

*Beispiel 6*

281 Teile 4-β-Sulfatoäthylsulfonyl-anilin werden in 1000 Teilen Wasser eingetragen und durch vorsichtige Zugabe von 65 Teilen Natriumcarbonat in Lösung gebracht, wobei sich der pH-Wert auf 6,5 bis 7,0 einstellt. Man lässt 2 Stunden bei diesem pH weiterrühren, gibt sodann 750 Teile Eis und 255 Teile einer 31%igen wässrigen Salzsäure hinzu; anschliessend lässt man 173 Teile der 40%igen wässrigen Natriumnitritlösung einlaufen, rührt bei 0 bis 5° weitere 2 Stunden nach und zerstört sodann überschüssige salpetrige Säure mittels Amidosulfonsäure. In die so hergestellte Diazoniumsalzsuspension lässt man bei einem pH-Wert von 6,0 bis 6,5 unter gleichzeitigem Eintragen von etwa 70 Teilen Natriumcarbonat die Lösung des sekundären Kondensationsproduktes von je einem Mol Cyanurchlorid und 1-Amino-8-naphthol-3,6-disulfonsäure und N--(2-β-Chloräthylsulfonyl-äthyl)-äthylendiamin-dihydrochlorid einlaufen. Diese Lösung des sekundären Kondensationsproduktes wird wie folgt hergestellt: 319 Teile 1-Amino-8-naphthol-3,6-disulfonsäure werden unter Rühren in ein Gemisch aus 500 Teilen Wasser und 121 Teilen einer 33%igen Natronlauge eingetragen; der pH-Wert der Lösung soll anschliessend 6,5 bis 7,0 betragen. Diese Lösung lässt man innerhalb von einer Stunde in eine Suspension von 194 Teilen Cyanurchlorid, 800 Teilen Wasser und 800 Teilen Eis bei einem pH-Wert von 3,0 bis 3,8 einlaufen. Es wird noch eine Stunde lang bei 0 bis 5° und bei dem angegebenen pH-Wert, der durch Einstreuen von 92 Teilen Natriumbicarbonat gehalten wird, weitergerührt. In die so erhaltene klare Lösung trägt man 290 Teile N-(2-β-Chloräthylsulfonyl-äthyl)-äthylendiamin-dihydrochlorid ein und danach innerhalb einer Stunde 115 Teile Natriumcarbonat, wobei sich der pH-Wert auf 6,5 bis 7,0 erhöht. Bei diesem pH-Wert lässt man noch 2 Stunden nachrühren, wobei die Temperatur auf 15 bis 20° gehalten wird.

Nachdem die Diazoniumsuspension und die Lösung der Kupplungskomponente vereinigt sind, wird das Kupplungsgemisch noch 2 Stunden lang bei Raumtemperatur nachgerührt, wobei durch portionsweises Einstreuen von 70 Teilen Natriumcarbonat ein pH-Wert von 6,0 bis 6,5 gehalten wird. Nach beendeter Kupplung wird auf 50° erwärmt, 40 Teile Kieselgur werden zugegeben, die Lösung geklärt (filtriert), das Filtrat gegebenenfalls mit 50 Teilen Dinatriumphosphat versetzt und sprühgetrocknet.

Es wird ein rotes, elektrolythaltiges und gegebenenfalls die erwähnte Puffersubstanz enthaltendes Pulver erhalten, das das Alkalimetallsalz, insbesondere Natriumsalz der Verbindung der Formel

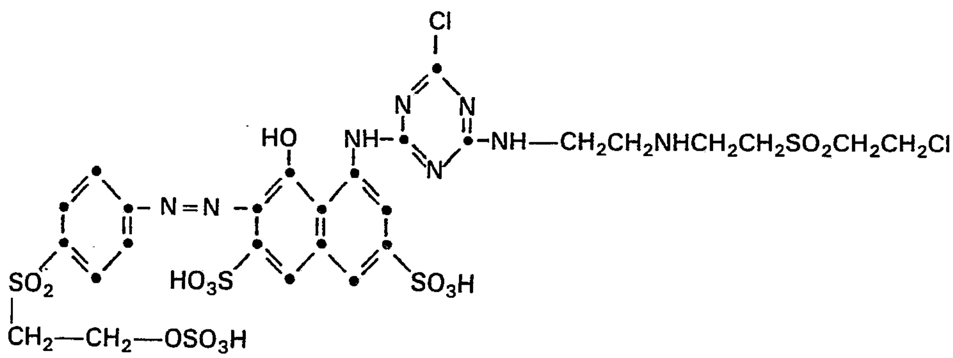

enthält. Diese Verbindung besitzt sehr gute Farbstoffeigenschaften; sie färbt die in der Beschreibung genannten Materialien, insbesondere Wolle aus saurem Bad oder Cellulosefasermaterialien in Gegenwart von säurebindenden Mitteln nach den in der Technik üblichen Applikations- und Fixiermethoden für faserreaktive Farbstoffe, in klaren roten Tönen mit sehr gutem Farbaufbau und hohem Fixiergrad. Die Färbungen besitzen sehr gute Nassechtheiten, wie beispielsweise eine ausgezeichnete Waschechtheit.

Analog zu den beschriebenen Methoden lassen sich auch die in der folgenden Tabelle aufgeführten Farbstoffe herstellen, die Baumwolle im angegebenen Farbton färben.

| | Beispiele | Farbton |
|---|---|---|
| 7 | 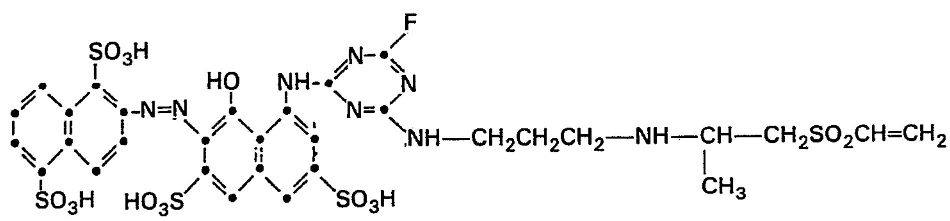 | blaustichig rot |
| 8 | 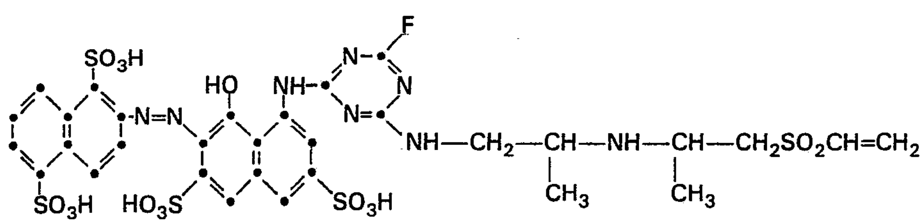 | do |
| 9 | 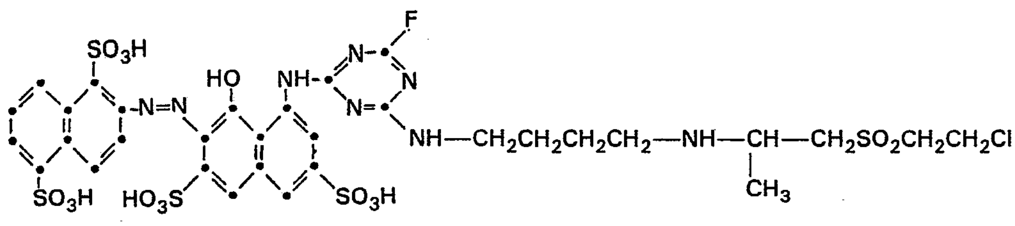 | do |

| | Beispiele | Farbton |
|---|---|---|
| 10 | 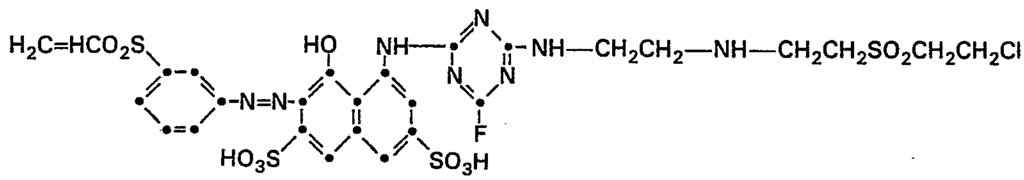 | gelbstichig rot |
| 11 | 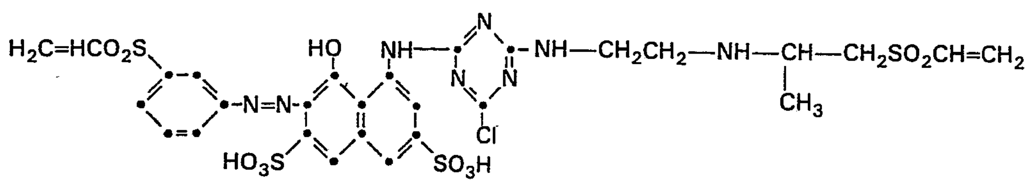 | do |
| 12 | 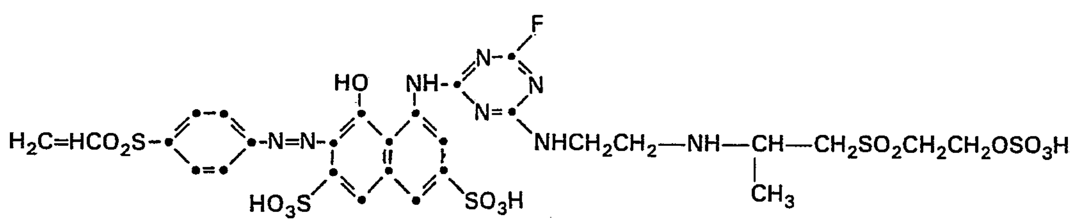 | do |
| 13 | 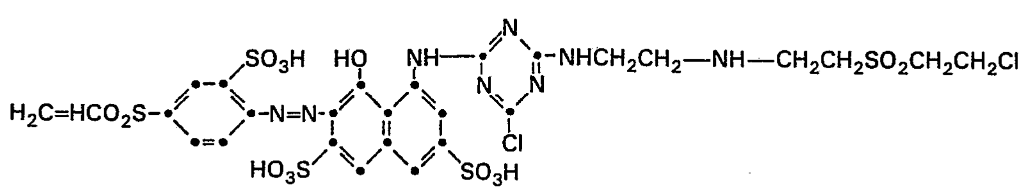 | do |
| 14 | 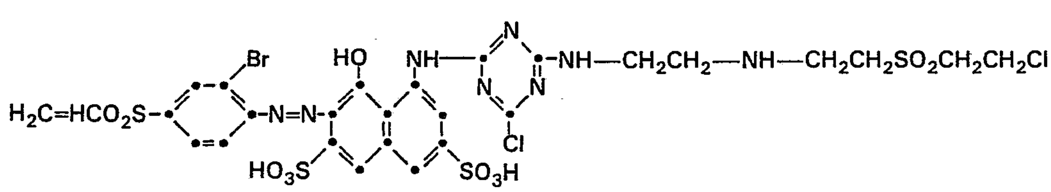 | do |

| | Beispiele | Farbton |
|---|---|---|
| 15 | 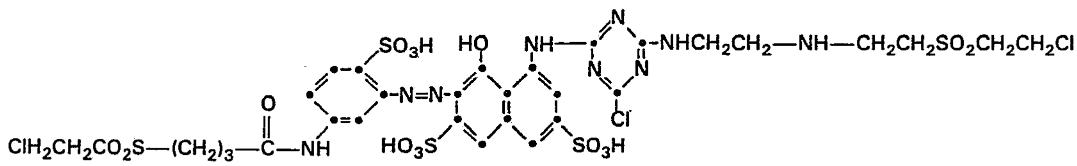 | gelbstichig rot |
| 16 | 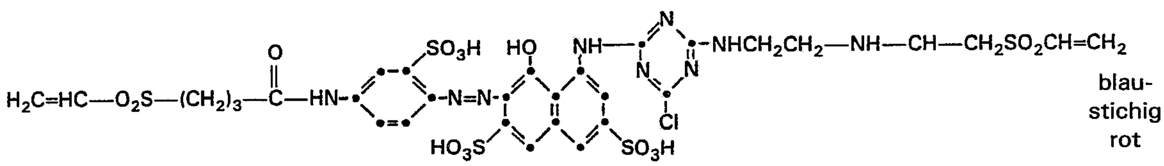 | blaustichig rot |
| 17 | 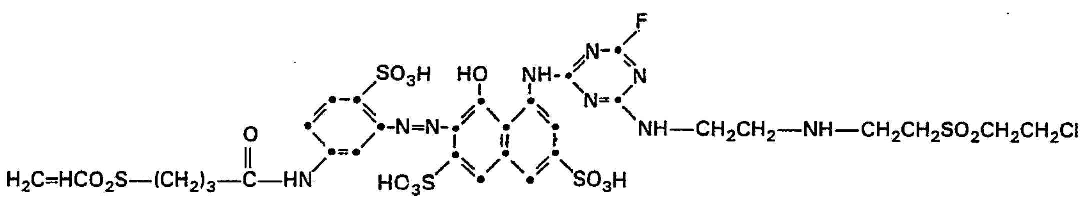 | gelbstichig rot |
| 18 | 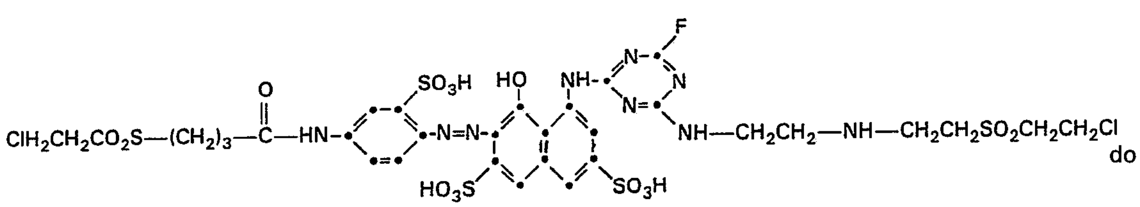 | do |
| 19 | 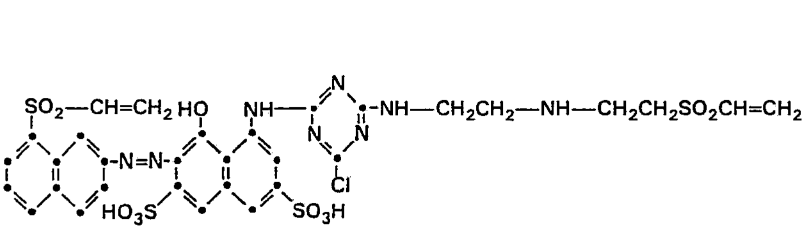 | blaustichig rot |

| | Beispiele | Farbton |
|---|---|---|
| 20 | 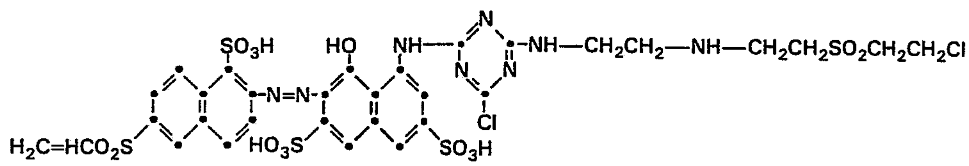 | blau-stichig rot |
| 21 | 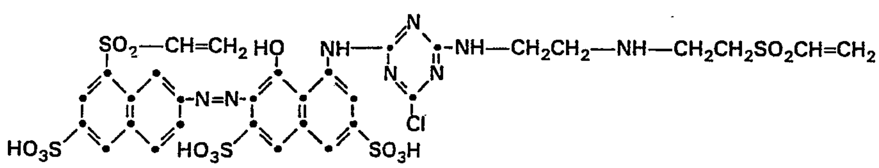 | do |

Ersetzt man die 2-Naphthylamin-1,5-disulfonsäure durch molare Mengen einer der im folgenden genannten Diazokomponenten und verfährt im übrigen wie beschrieben, so erhält man ebenfalls wertvolle erfindungsgemässe Farbstoffe: 2-Aminobenzol-sulfonsäure, 3-Aminobenzol-sulfonsäure, 4-Amino-benzol-sulfonsäure, 5-Chlor-2-aminobenzol-sulfonsäure, 6-Chlor-2-aminobenzol-sulfonsäure, 5-Nitro-2-aminobenzol-sulfonsäure, 4-Chlor-3-aminobenzol-sulfonsäure, 6-Chlor-3-aminobenzol-sulfonsäure, 3-Chlor-4-aminobenzol-sulfonsäure, 2-Amino-toluol-4-sulfonsäure, 2-Aminotoluol-5-sulfonsäure, 3-Aminotoluol-6-sulfonsäure, 4-Aminotoluol-2-sulfonsäure, 4-Aminotoluol-3-sulfonsäure, 5-Chlor-2-aminotoluol-3-sulfonsäure, 3-Chlor-2-aminotoluol-5-sulfonsäure, 6-Chlor-3-aminotoluol-4-sulfonsäure, 2-Chlor-4-aminotoluol-5-sulfonsäure, 2-Chlor-4-aminotoluol-6-sulfonsäure, 4-Nitro-2-aminotoluol-6-sulfonsäure, 6-Nitro-4-aminotoluol-2-sulfonsäure, 3-Amino-1,2-dimethylbenzol-4-sulfonsäure, 4-Amino-1,3-dimethylbenzol-5-sulfonsäure, 4-Amino-1,3-dimethylbenzol-6-sulfonsäure, 2-Amino-anisol-4-sulfonsäure, 4-Amino-anisol-2-sulfonsäure, 4-Amino-anisol-3-sulfonsäure, 4-Chlor-2-amino-anisol-5-sulfonsäure, 4-Amino-phenetol-2-sulfonsäure, 4-Amino-phenetol-3-sulfonsäure, 2-Amino-phenetol-4-sulfonsäure, 4-Aminobenzol-1,3-disulfonsäure, 2-Aminobenzol-1,4-disulfonsäure, 2-Amino-toluol-3,4-disulfonsäure, 2-Aminotoluol-3,5-disulfonsäure, Anilin, 4-Aminotoluol, 4-Aminoanisol, 4-Aminochlorbenzol, 2-Aminobenzol-sulfonsäure, 2-Naphthylamin-1-sulfonsäure, 2-Naphthylamino-5-sulfonsäure, 2-Naphthylamin-6-sulfonsäure, 2-Naphthylamin-7-sulfonsäure, 2-Naphthylamin-8-sulfonsäure, 2-Naphthylamin-1,7-disulfonsäure, 2-Naphthylamin-3,6-disulfonsäure, 2-Naphthylamin-3,7-disulfonsäure, 2-Naphthylamin-4,7-disulfonsäure, 2-Naphthylamin-4,8-disulfonsäure, 2-Naphthylamin-5,7-disulfonsäure, 2-Naphthylamin-6,8-disulfonsäure, 2-Naphthylamin-1,5,7-trisulfonsäure, 2-Naphthylamin-3,6,8-trisulfonsäure, 2-Naphthylamin-4,6,8-trisulfonsäure, 1-Naphthylamin-4-sulfonsäure, 1-Naphthylamin-5-sulfonsäure, 1-Naphthylamin-6-sulfonsäure, 1-Naphthylamin-7-sulfonsäure, 1-Naphthylamin-3,6-disulfonsäure, 1-Naphthylamin-3,7-disulfonsäure, 1-Naphthylamin-3,8-disulfonsäure, 1-Naphthylamin-4,6-disulfonsäure, 1-Naphthylamin-4,7-disulfonsäure, 1-Naphthylamin-4,8-disulfonsäure, 1-Naphthylamin-5,7-disulfonsäure, 1-Naphthylamin-6,8-disulfonsäure, 1-Naphthylamin-2,4,6-trisulfonsäure, 1-Naphthylamin-3,6,8-trisulfonsäure, 1-Naphthylamin-4,6,8-trisulfonsäure.

Ersetzt man die als Kupplungskomponente zur Herstellung des Ausgangsfarbstoffs eingesetzte 1-Acetamino-8-naphthol-3,6-disulfonsäure durch molare Mengen der Acetylverbindung einer der im folgenden genannten Kupplungskomponenten und verfährt im übrigen wie oben beschrieben, so erhält man ebenfalls wertvolle erfindungsgemässe Farbstoffe: 1-Amino-8-Naphthol-4,6-disulfonsäure, 2-Amino-8-naphthol-6-sulfonsäure, 2-Methylamino-8-naphthol-6-sulfonsäure, 2-Carboxymethylamino-8-naphthol-6-sulfonsäure, 2-β-Sulfoäthylamino-8-naphthol-6-sulfonsäure, 2-iso-Propylamino-8-naphthol-6-sulfonsäure, 2-Amino-5-naphthol-7-sulfonsäure, 2-Methylamino-5-naphthol-7-sulfonsäure, 2-Äthylamino-5-naphthol-7-sulfonsäure, 2-n-Butylamino-5-naphthol-7-sulfonsäure, 1-Amino-8-naphthol-4-sulfonsäure, 2-Amino-8-naphthol-4-sulfonsäure, 2-Amino-8-naphthol-3,6-disulfonsäure.

*Beispiel 22*

42,3 Teile des Farbstoffs 2-Amino-5-hydroxy-6--(2-sulfophenylazo)-naphthalin-7-sulfonsäure werden, wie im Beispiel 5 beschrieben, mit 18,5 Teilen Cyanurchlorid und 26 Teilen N-(2-β-Vinylsulfonyl--äthyl)-äthylen-diamin-dihydrochlorid umgesetzt. Zur Abscheidung des Farbstoffs wird die neutrale Lösung mit 20% Natriumchlorid und 10% Kaliumchlorid versetzt und filtriert. Die erhaltene Paste wird im Vakuum bei 50 bis 70° getrocknet. Der so hergestellte Reaktivfarbstoff hat die folgende Konstitution:

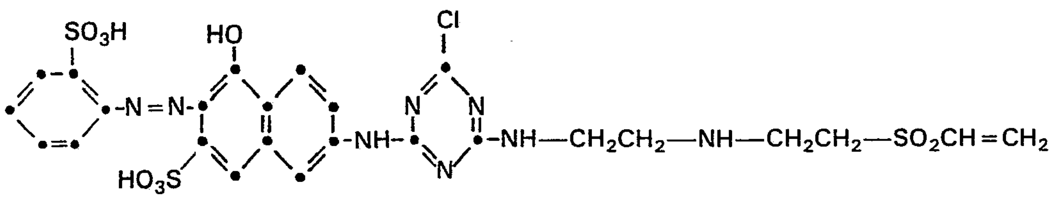

*Beispiel 23*

42,3 Teile des Farbstoffs 2-Amino-5-hydroxy-6--(2-sulfophenylazo)-naphthalin-7-sulfonsäure werden, wie im Beispiel 5 beschrieben, mit 14,2 Teilen 2,4,6-Trifluor-1,3,5-triazin innert 20 Minuten bei 0° zugetropft, wobei der pH der Reaktionslösung durch gleichzeitige Zugabe von 2n Natriumhydroxydlösung bei ca. 6,5 gehalten wird. Nach Zusatz einer auf pH 5 gestellten Mischung von 30 Teilen N-(2-β--Chlor-äthylsulfonyl-äthyl)-Äthylendiamin-dihydrochlorid in 100 ml Wasser wird der pH der Reaktionsmischung durch ständige Zugabe von 2n Natriumhydroxydlösung bei 5 bis 6 gehalten. Dabei wird die Temperatur innert 2 bis 3 Stunden auf 20° erhöht. Zur Abscheidung des Farbstoffs wird die neutrale Lösung mit 20% Natriumchlorid und 10% Kaliumchlorid versetzt und filtriert. Die erhaltene Paste wird im Vakuum bei 50 bis 70° getrocknet. Der so hergestellte Reaktivfarbstoff hat die folgende Konstitution:

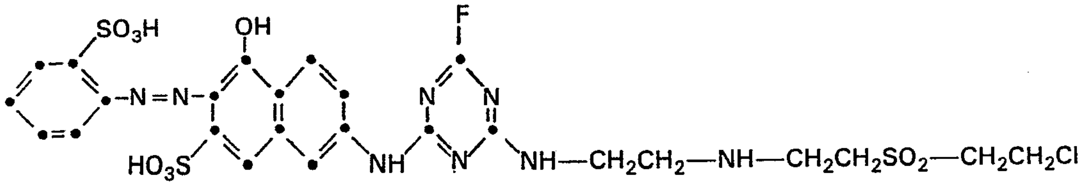

Analog zu den beschriebenen Methoden lassen sich auch die in der folgenden Tabelle aufgeführten Farbstoffe herstellen, die Baumwolle im angegebenen Farbton färben.

| | Beispiele | Farbton |
|---|---|---|
| 24 | 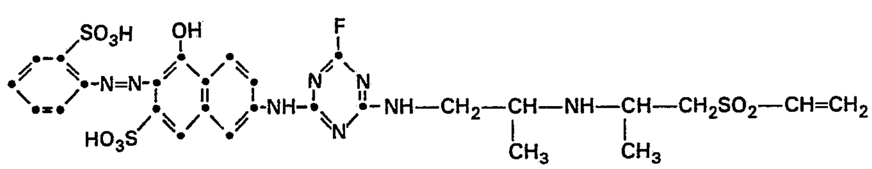 | orange |
| 25 | 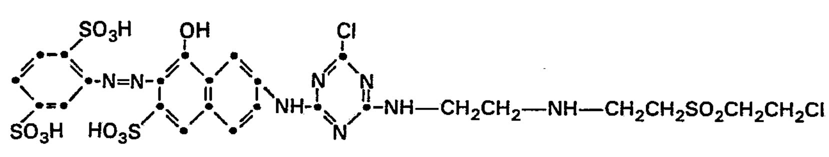 | do |

| | Beispiele | Farbton |
|---|---|---|
| 26 | 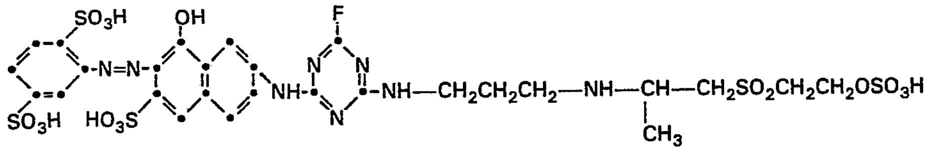 | orange |
| 27 | 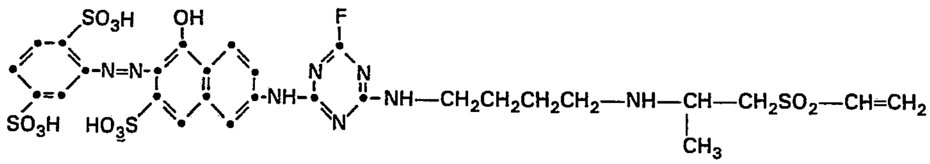 | do |
| 28 | 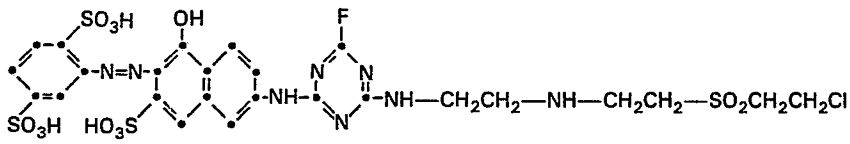 | do |
| 29 | 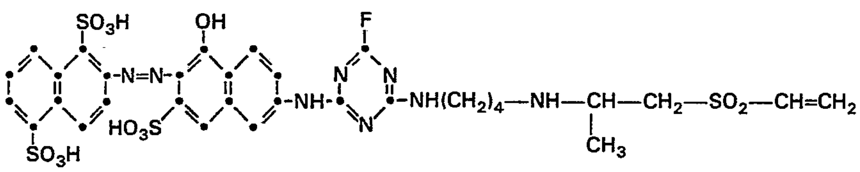 | do |
| 30 | 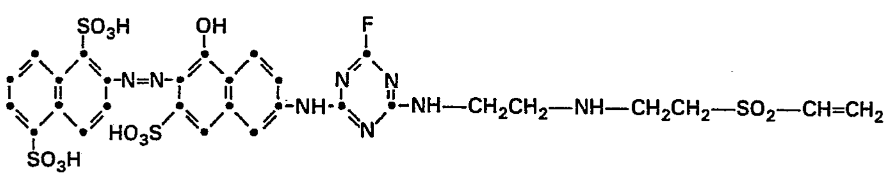 | do |
| 31 | 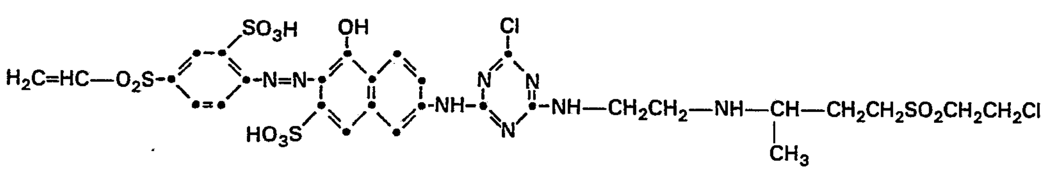 | do |

| | Beispiele | Farbton |
|---|---|---|
| 32 | 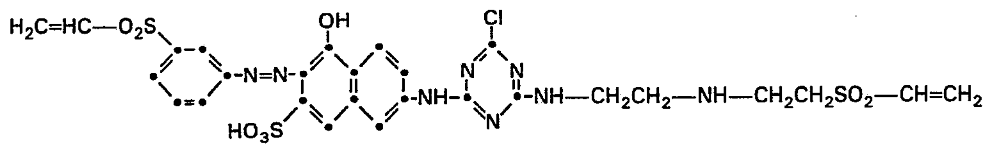 | orange |
| 33 | 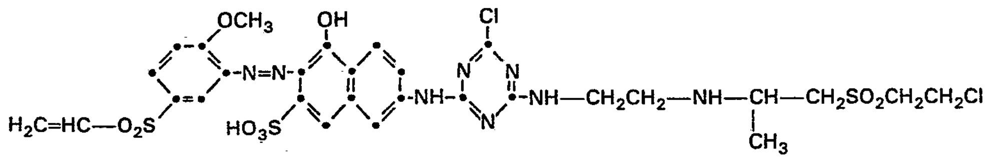 | scharlach |
| 34 | 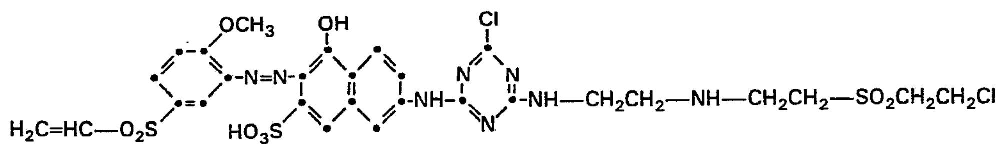 | do |
| 35 | 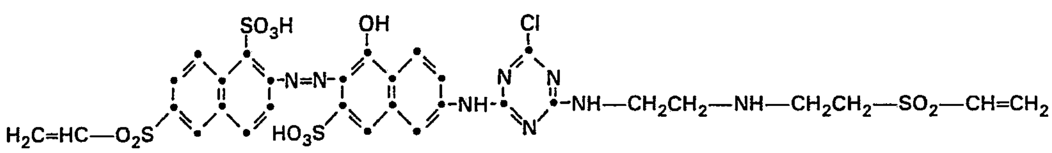 | do |
| 36 | 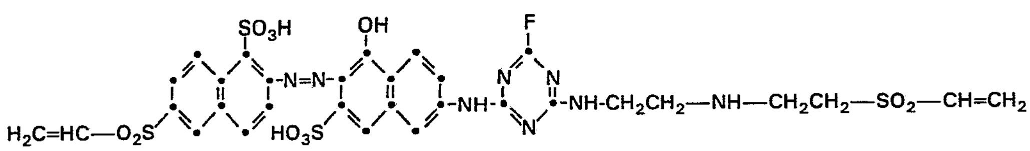 | do |
| 37 | 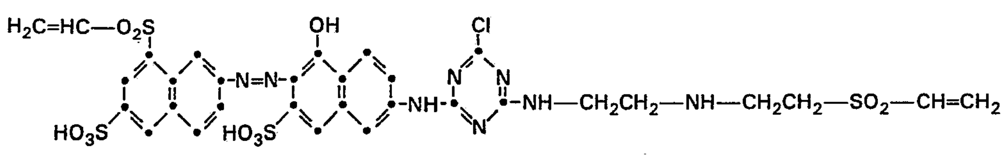 | do |
| 38 | 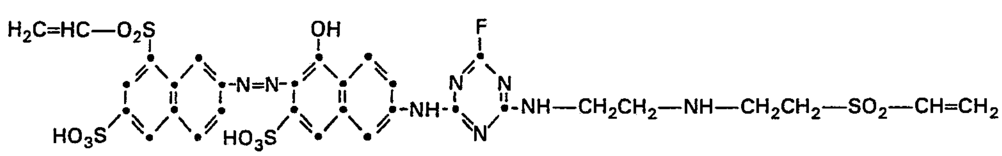 | do |

Der zur Herstellung des erfindungsgemässen Farbstoffs benötigte Ausgangsfarbstoff 2-Amino-5--hydroxy-6-(2-sulfophenylazo)-naphthalin-7-sulfonsäure kann wie folgt erhalten werden:
34,4 Teile 2-Amino-benzol-sulfonsäure werden in 120 Teilen Wasser neutral gelöst und wie üblich diazotiert. Hierauf lässt man die Diazoverbindung bei 0-5° zu einer Mischung von 56,2 Teilen 2-Acetamino-5-naphthol-7-sulfonsäure, welche in 300 Teilen Wasser neutral gelöst wurden, 25 Teilen Natriumhydrogencarbonat und 150 Teilen Eis hinzulaufen. Der pH-Wert beträgt zunächst 6,5 und steigt nach längerem Rühren auf 7,5-7,8. Nach Beendigung der Kupplung gibt man 60 Teile 10-normale Natronlauge hinzu und erwärmt zur Verseifung der Acetaminogruppe 2 Stunden auf 90°. Die alkalische Lösung des orangen Zwischenfarbstoffes wird mit etwa 22 Teilen 10-normaler Salzsäure neutral gestellt, mit 20% Natriumchlorid und 15% Kaliumchlorid versetzt, einige Zeit gerührt und filtriert.

Ersetzt man die 2-Amino-benzolsulfonsäure durch molare Mengen einer der im folgenden genannten Diazokomponenten und verfährt im übrigen wie beschrieben, so erhält man ebenfalls wertvolle, erfindungsgemässe Farbstoffe:
3-Amino-benzol-sulfonsäure
4-Amino-benzol-sulfonsäure
5-Chlor-2-amino-benzol-sulfonsäure
6-Chlor-2-amino-benzol-sulfonsäure
5-Nitro-2-amino-benzol-sulfonsäure
4-Chlor-3-amino-benzol-sulfonsäure
6-Chlor-3-amino-benzol-sulfonsäure
3-Chlor-4-amino-benzol-sulfonsäure
2-Amino-toluol-4-sulfonsäure
2-Amino-toluol-5-sulfonsäure
3-Amino-toluol-6-sulfonsäure
4-Amino-toluol-2-sulfonsäure
4-Amino-toluol-3-sulfonsäure
5-Chlor-2-amino-toluol-3-sulfonsäure
3-Chlor-2-amino-toluol-5-sulfonsäure
6-Chlor-3-amino-toluol-4-sulfonsäure
2-Chlor-4-amino-toluol-5-sulfonsäure
2-Chlor-4-amino-toluol-6-sulfonsäure
4-Nitro-2-amino-toluol-6-sulfonsäure
6-Nitro-4-amino-toluol-2-sulfonsäure
3-Amino-1,2-dimethyl-benzol-4-sulfonsäure
4-Amino-1,3-dimethyl-benzol-5-sulfonsäure
4-Amino-1,3-dimethyl-benzol-6-sulfonsäure
2-Amino-anisol-4-sulfonsäure
4-Amino-anisol-2-sulfonsäure
4-Amino-anisol-3-sulfonsäure
4-Chlor-2-amino-anisol-5-sulfonsäure
4-Amino-phenetol-2-sulfonsäure
4-Amino-phenetol-3-sulfonsäure
2-Amino-phenetol-4-sulfonsäure
4-Amino-benzol-1,3-disulfonsäure
2-Amino-toluol-3,4-disulfonsäure
2-Amino-toluol-3,5-disulfonsäure
Anilin
4-Amino-toluol
4-Amino-anisol
4-Amino-chlorbenzol
2-Amino-chlorbenzol
2-Naphthylamin-1-sulfonsäure
2-Naphthylamin-5-sulfonsäure
2-Naphthylamin-6-sulfonsäure
2-Naphthylamin-7-sulfonsäure
2-Naphthylamin-8-sulfonsäure
2-Naphthylamin-1,7-disulfonsäure
2-Naphthylamin-3,6-disulfonsäure

*Beispiel 39*

76,6 Teile 2-Naphthylamin-3,6,8-trisulfonsäure werden mit 250 Teilen Wasser neutral gelöst. Dazu kommen 50 Teile 4-normale Natriumnitritlösung. Diese Mischung läuft zu einem Gemisch von 50 Teilen 10-normaler Salzsäure und 400 Teilen Eis. Zur Suspension der Diazoverbindung kommt bei 0 bis 5° eine Lösung von 30,2 Teilen 3-Aminophenylharnstoff in 100 Teilen Wasser und 20 Teilen 10-normaler Salzsäure. Mit 140 Teilen 4-normaler Natriumacetatlösung wird zunächst auf einen pH-Wert von 3,5 abgestumpft und dann mit Natronlauge auf einen pH-Wert von 5,5 gebracht. Nach beendeter Kupplung wird filtriert.

54,6 Teile des so hergestellten Farbstoffes 2-(4--Amino-2'-harnstoff-phenylazo)-naphthalin-3,6,8--trisulfonsäure werden mit 250 Teilen Wasser neutral gelöst. Diese neutrale Lösung gibt man zu einer wie im Beispiel 5 hergestellten Suspension von Cyanurchlorid in Aceton und Wasser. Durch Kühlung mit Eis hält man die Temperatur bei −1° bis 3°. Im Verlauf der Acylierungsreaktion werden 9 g Bicarbonat so eingetragen, dass der pH zwischen 5,5 und 7 bleibt. Wenn kein Ausgangsfarbstoff mehr im Chromatogramm nachweisbar ist, gibt man 30 Teile N--(2-β-Chloräthylsulfonyläthyl)-äthylendiamin-dihydrochlorid in Form einer ca. 50%igen Paste zu und erwärmt auf 30°. Durch Zugabe von weiteren 18 g Bicarbonat hält man den pH-Wert in den Grenzen von 4,5 bis 6,0. Die Reaktion ist beendet, wenn kein weiteres Alkali mehr verbraucht wird. Der entstandene Farbstoff der Formel

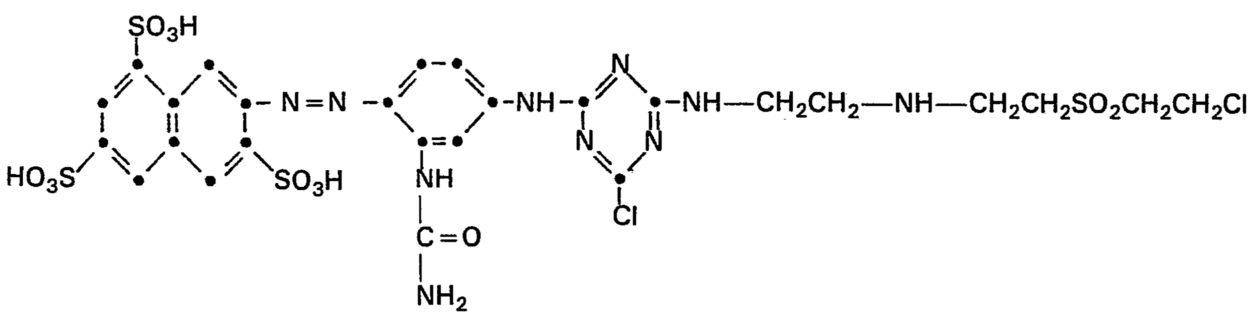

wird durch Zugabe von Kochsalz abgeschieden und im Vakuum bei 50 bis 75° getrocknet.

*Beispiel 40*

54,6 Teile des wie im Beispiel 39 hergestellten Farbstoffes 2-(4-Amino-2'-harnstoff-phenylazo)-naphthalin-3,6,8-trisulfonsäure werden mit 250 Teilen Wasser neutral gelöst. Dieser neutralen Lösung werden innert 20 Minuten 14,2 Teile 2,4,6-Trifluor-1,3,5-triazin zugetropft. Durch Kühlung mit Eis hält man die Temperatur bei −1 bis 3°. Im Verlauf der Acylierungsreaktion werden 9 g Bicarbonat so eingetragen, dass der pH zwischen 5,5 und 7 bleibt. Wenn kein Ausgangsfarbstoff mehr im Chromatogramm nachweisbar ist, gibt man 30 Teile N-(2-β-Chloräthylsulfonyläthyl)-äthylendiamin-dihydrochlorid in Form einer ca. 50%igen Paste zu und erwärmt auf 20°. Durch Zugabe von weiteren 18 g Bicarbonat hält man den pH-Wert in den Grenzen von 4,5 bis 6,0. Die Reaktion ist beendet, wenn kein weiteres Alkali mehr verbraucht wird. Der entstandene Farbstoff der Formel

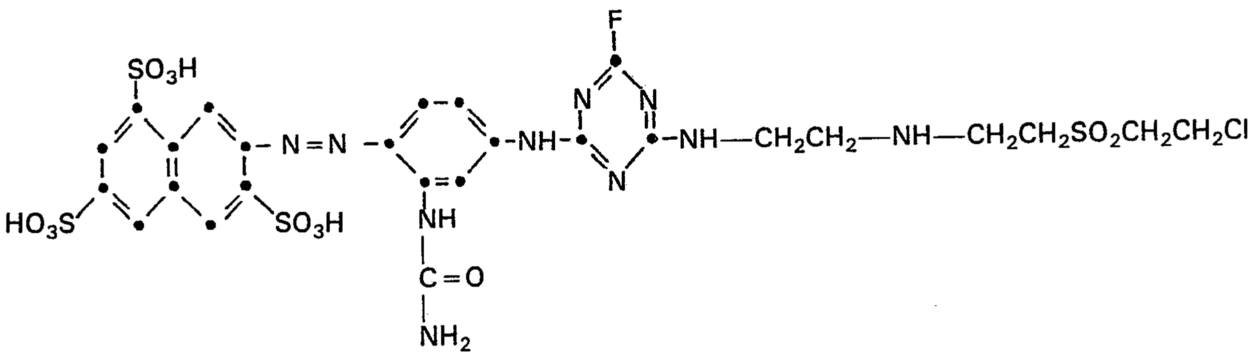

wird durch Zugabe von Kochsalz abgeschieden und im Vakuum bei 95° getrocknet.

Analog zu den beschriebenen Methoden lassen sich auch die in der folgenden Tabelle aufgeführten Farbstoffe herstellen, die Baumwolle im angegebenen Farbton färben.

| | Beispiele | Farbton |
|---|---|---|
| 41 | 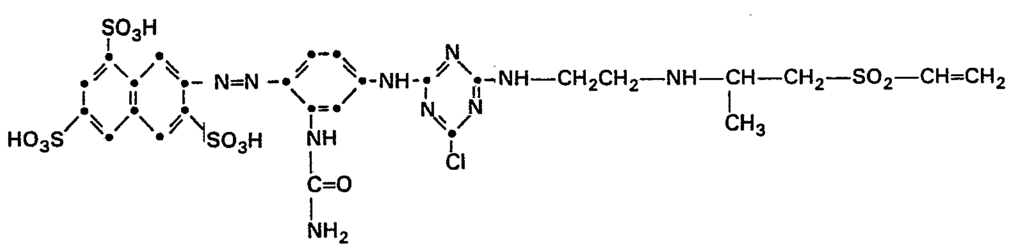 | goldgelb |
| 42 | 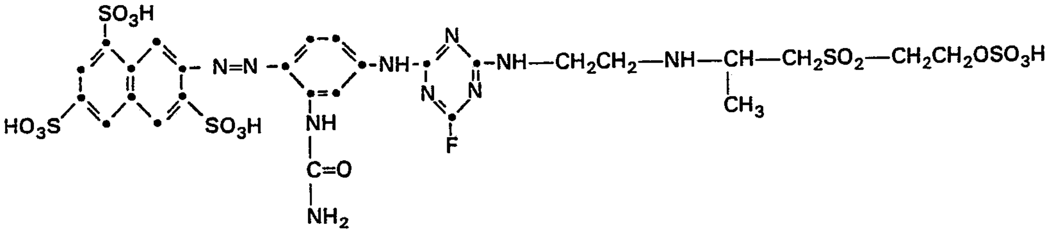 | do |

| | Beispiele | Farbton |
|---|---|---|
| 43 | 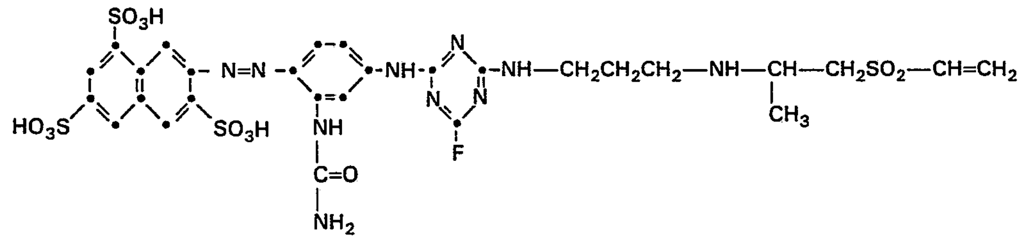 | goldgelb |
| 44 | 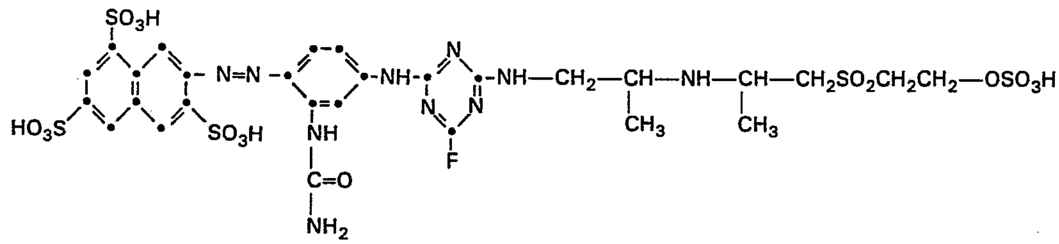 | do |
| 45 | 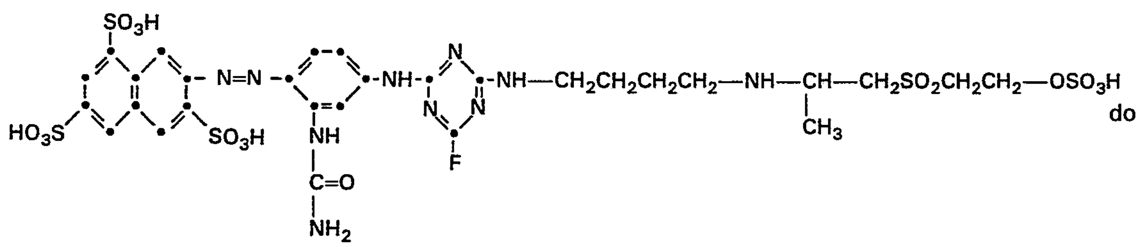 | do |

Ähnlich wertvolle Reaktivfarbstoffe erhält man auch, wenn man anstelle des oben eingesetzten Ausgangsfarbstoffes 2-(4'-Amino-2'-methylphenylazo)-naphthalin-4,6,8-trisulfonsäure die aus den in der nachstehenden Tabelle angegebenen Diazo- und Kupplungskomponenten erhältlichen Azofarbstoffe einsetzt und im übrigen wie oben beschrieben verfährt:

Diazokomponenten:
2-Naphthylamin-1,5-disulfonsäure
2-Naphthylamin-4,8-disulfonsäure
2-Naphthylamin-5,7-disulfonsäure
2-Naphthylamin-6,8-disulfonsäure
2-Naphthylamin-1,5,7-trisulfonsäure
2-Naphthylamin-4,6,8-trisulfonsäure
Anilin-2,5-disulfonsäure.

Kupplungskomponenten:
Anilin, N-Methylanilin,
3-Amino-anisol, 3-Amino-toluol,
2-Amino-4-acetamino-toluol,
2-Amino-4-acetamino-anisol,
3-Amino-acetanilid,
3-Amino-4-methoxy-toluol,
1-Naphthylamin-5-sulfonsäure,
1-Naphthylamin-7-sulfonsäure,
1-Naphthylamin-8-sulfonsäure.

*Beispiel 46*

63,1 Teile 1-[2'-Sulfo-4'-(3'',5''-dichlortriazinylamino)-phenyl]-3-carboxy-4-(2-sulfophenylazo)-pyrazolon-5 werden in Wasser bei pH 6,8 bis 7,2 gelöst. Zu dieser Lösung gibt man bei etwa 20° 30 Teile N-(2-β-Chloräthylsulfonyl-äthyl)-äthylendiamin-dihydrochlorid und erwärmt auf 35 bis 40°. Der pH beginnt zu fallen. Wenn er einen Wert von etwa 3,5 erreicht hat, wird er durch portionsweise Zugabe von ca. 11 g Soda in einem Bereich von 3,5 bis 4,5 gehalten. Die Reaktion ist nach etwa 3 Stunden beendet, was man daran erkennt, dass kein weiteres Alkali mehr verbraucht wird. Die Farbstofflösung wird jetzt durch Zugabe von Dinatriumhydrogenphosphat auf 7,0 gestellt. Der erhaltene Farbstoff der Konstitution

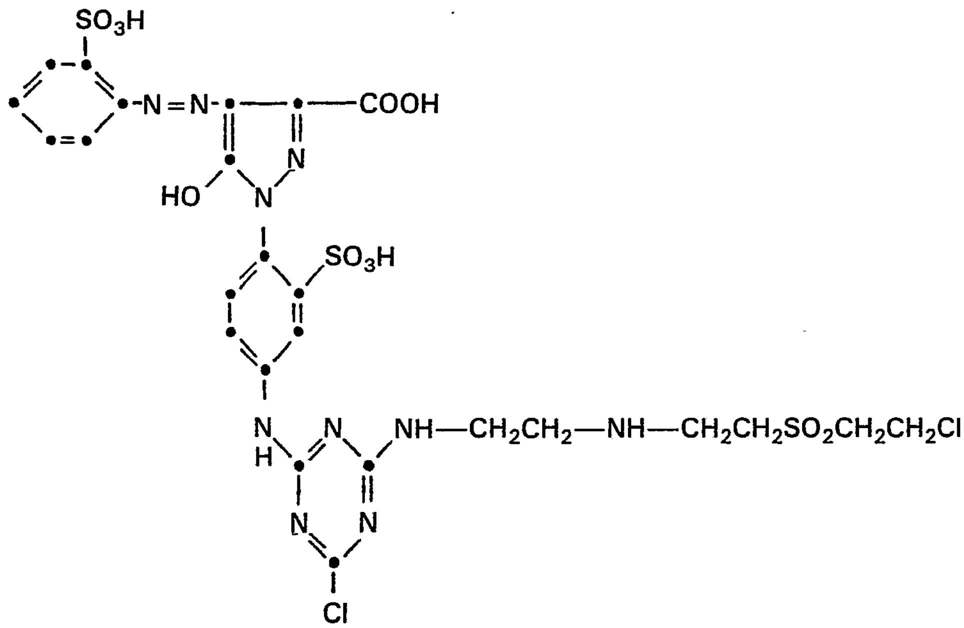

kann durch Aussalzen oder Sprühtrocknen isoliert werden.

*Herstellung des Ausgangsfarbstoffs*

49,7 Teile des aus diazotierter 1-Amino-benzol--2-sulfonsäure und 1-(4-Amino-2-sulfo-phenyl)-5--pyrazolon-3-carbonsäure nach DE-AS 1922940, Beispiel 2, erhaltenen gelben Azofarbstoffes werden neutral gelöst und bei 0-5° mit einer nach Beispiel 5 in Wasser/Aceton hergestellten Anschlämmung von 18,5 Teilen Cyanurchlorid bei pH 6,5 umgesetzt. Zur Einhaltung des pH-Bereiches werden ca. 6 Teile Soda zugegeben. Die Reaktion ist beendet, wenn der Farbstoff nicht mehr diazotierbar ist.

*Beispiel 47*

59,8 Teile 1-[2'-Sulfo-4'-(3'',5''-difluortriazinyl-amino)-phenyl]-3-carboxy-4-(2-sulfophenylazo)-pyrazolon-5 werden in Wasser bei pH 6,8 bis 7,2 gelöst. Zu dieser Lösung gibt man bei etwa 0° 30 Teile N-(2-β-Chloräthylsulfonyl-äthyl)-äthylendiamin-dihydrochlorid und erwärmt auf 0 bis 20°. Der pH beginnt zu fallen. Wenn er einen Wert von etwa 3,5 erreicht hat, wird er durch portionsweise Zugabe von ca. 11 g Soda in einem Bereich von 3,5 bis 4,5 gehalten. Die Reaktion ist nach etwa 3 Stunden beendet, was man daran erkennt, dass kein weiteres Alkali mehr verbraucht wird. Die Farbstofflösung wird jetzt durch Zugabe von Dinatriumhydrogenphosphat auf 7,0 gestellt. Der erhaltene Farbstoff der Konstitution

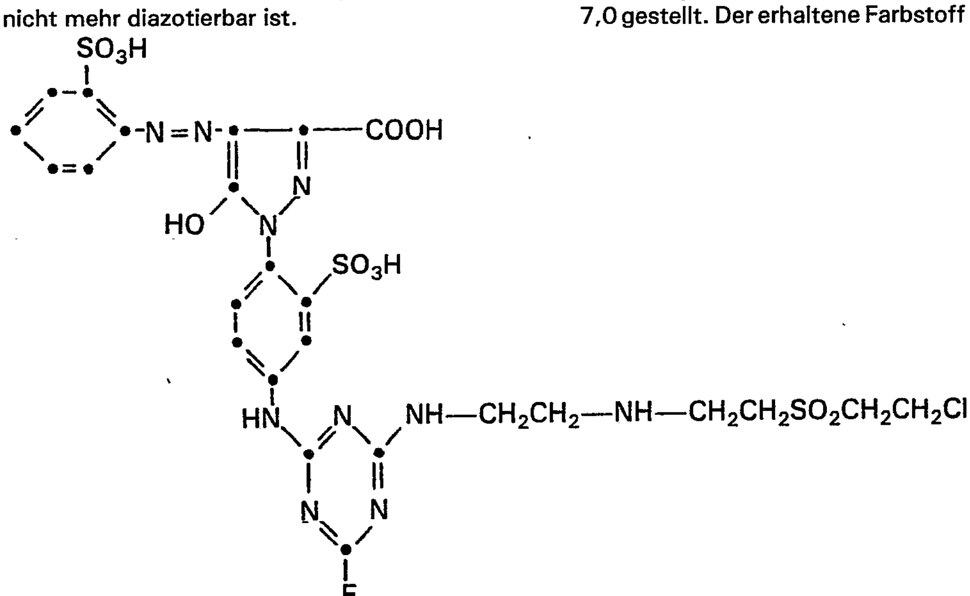

kann durch Aussalzen oder Sprühtrocknen isoliert werden.

Analog zu den beschriebenen Methoden lassen sich auch die in der folgenden Tabelle aufgeführten Farbstoffe herstellen, die Baumwolle im angegebenen Farbton färben.

| Beispiele | | Farbton |
|---|---|---|
| 48 | 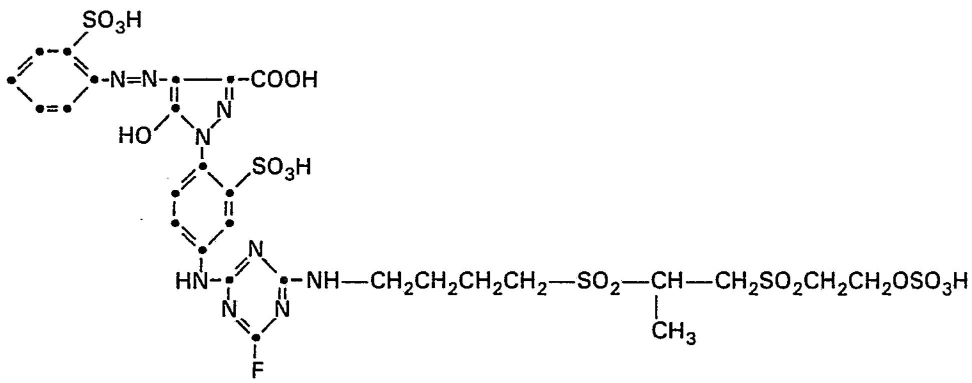 | grün-stichig gelb |
| 49 | 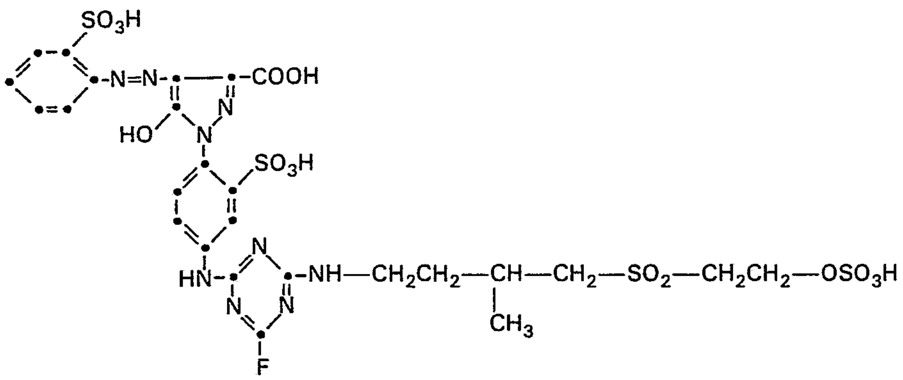 | do |
| 50 | 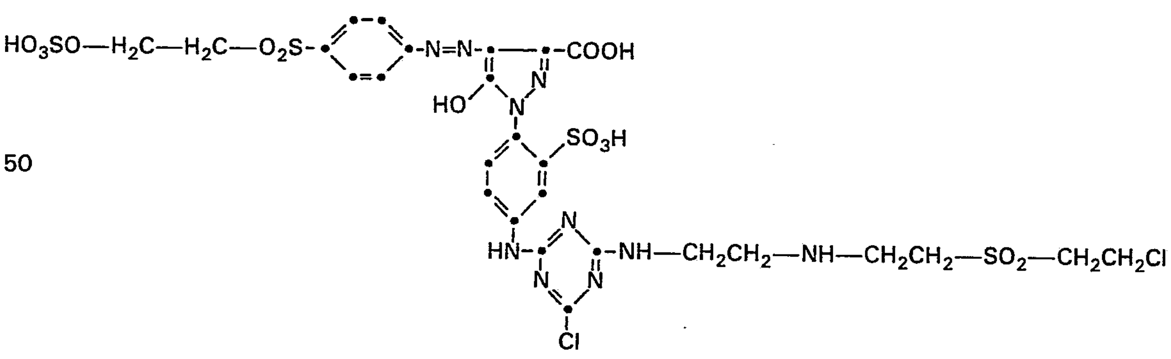 | do |

| | Beispiele | Farbton |
|---|---|---|
| 51 | 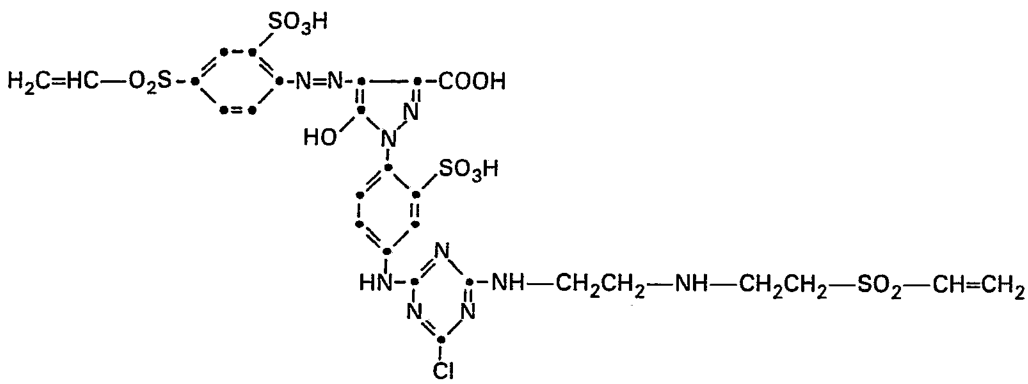 | grün-stichig gelb |
| 52 | 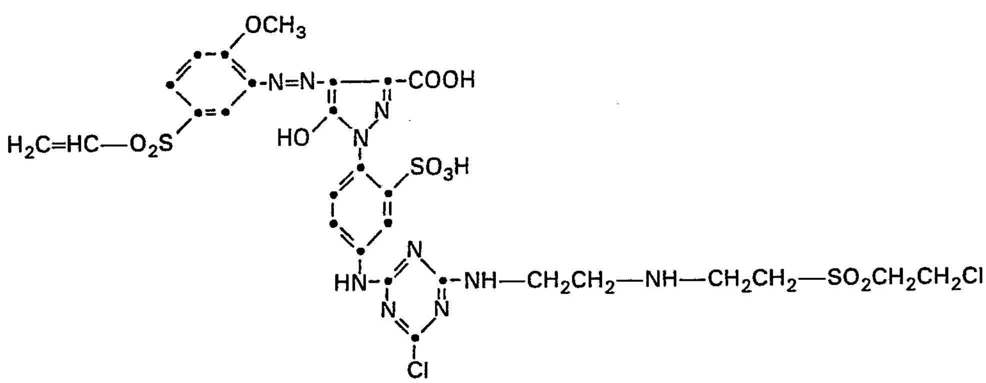 | goldgelb |
| 53 | 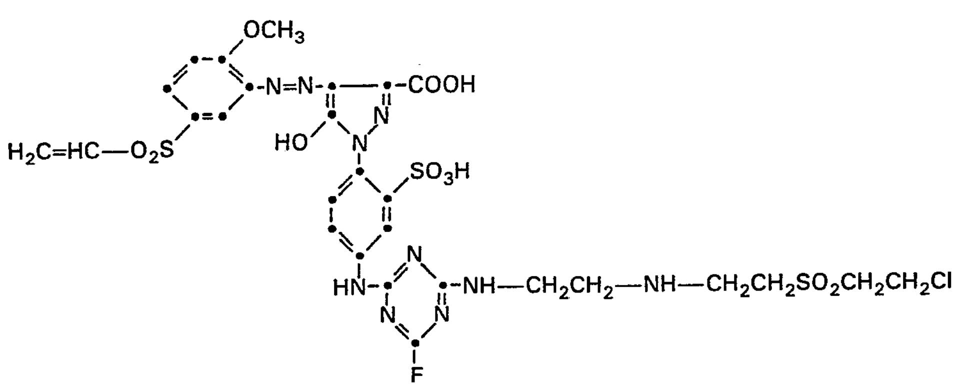 | do |

| | Beispiele | Farbton |
|---|---|---|
| 54 | 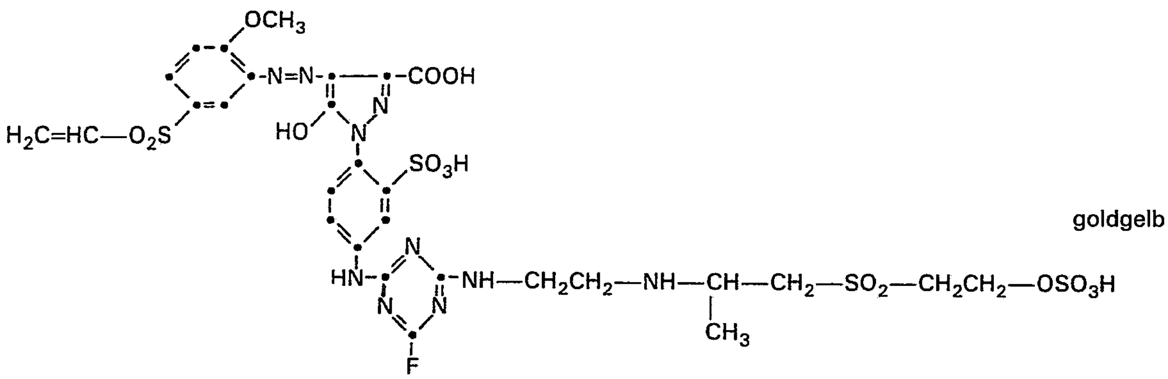 | goldgelb |
| 55 | 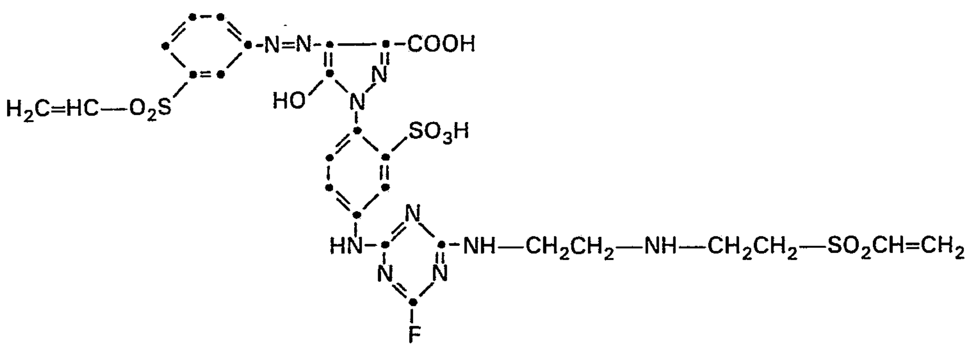 | do |
| 56 | 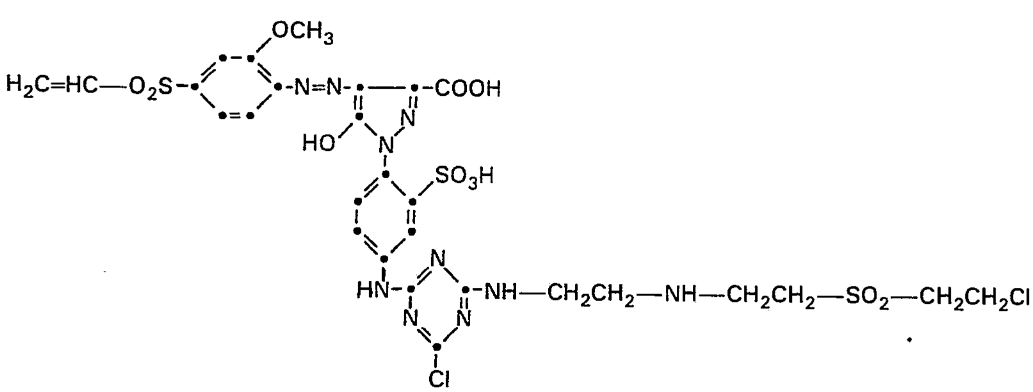 | do |

| | Beispiele | Farbton |
|---|---|---|
| 57 | 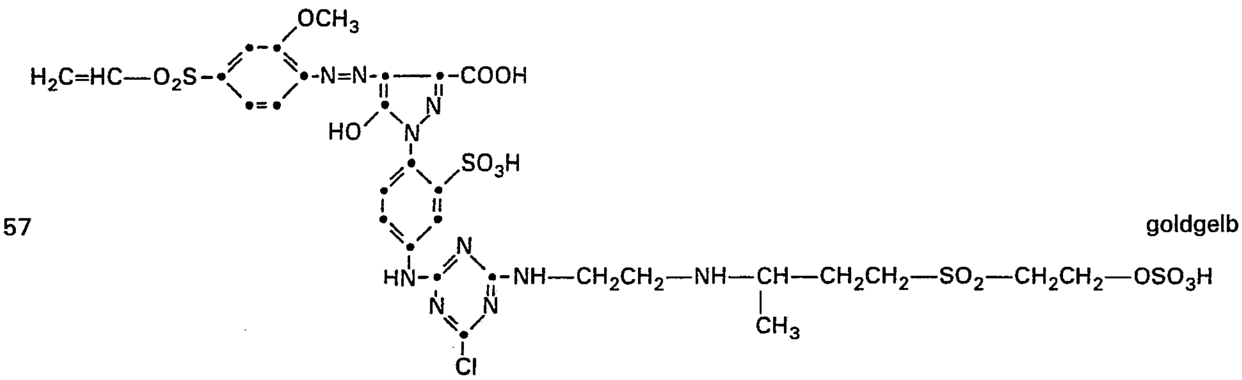 | goldgelb |

Ähnliche wertvolle erfindungsgemässe Reaktivfarbstoffe erhält man, wenn man anstelle des oben eingesetzten Zwischenfarbstoffes die Kondensationsprodukte der aus den in der nachstehenden Tabelle angegebenen Diazo- und Kupplungskomponenten erhältlichen Azofarbstoffe mit Cyanurchlorid einsetzt und im übrigen wie oben beschrieben verfährt.

Diazokomponenten
3-Amino-benzol-sulfonsäure
4-Amino-benzol-sulfonsäure
5-Chlor-2-amino-benzol-sulfonsäure
2,5-Dichlor-4-amino-benzol-sulfonsäure
2-Amino-toluol-4-sulfonsäure
4-Amino-toluol-3-sulfonsäure
2-Amino-anisol-4-sulfonsäure
4-Amino-benzol-1,3-disulfonsäure
2-Amino-benzol-1,4-disulfonsäure
2-Amino-toluol-3,5-disulfonsäure
2-Amino-naphthalin-1,5-disulfonsäure
2-Amino-naphthalin-4,8-disulfonsäure
2-Amino-naphthalin-6,8-disulfonsäure
2-Amino-naphthalin-1-sulfonsäure
2-Amino-naphthalin-6-sulfonsäure.

Kupplungskomponenten
1-(3'-Amino-6'-sulfo-phenyl)-3-methyl-5-pyrazolon
1-(4'-Amino-3'-sulfo-phenyl)-3-methyl-5-pyrazolon
1-(4'-Amino-2'-sulfo-phenyl)-3-methyl-5-pyrazolon
1-(3'-Amino-6'-sulfo-phenyl)-5-pyrazolon-3-carbonsäure
1-(4'-Amino-3'-sulfo-phenyl)-5-pyrazolon-3-carbonsäure
1-(3'-Amino-5'-sulfo-6-methyl-phenyl)-5-pyrazolon-3-carbonsäure
1-(2'-Methyl-3'-amino-5-sulfo-phenyl)-5-pyrazolon-3-carbonsäure
1-(2'-Methyl-3'-amino-5-sulfo-phenyl)-3-methyl-5-pyrazolon
1-(3'-Amino-5'-sulfo-6-methyl-phenyl)-3-methyl-5-pyrazolon
1-(4'-Amino-2',5'-disulfo-phenyl)-5-pyrazolon-3-carbonsäure.

*Beispiel 58*

50,3 Teile des Monoazofarbstoffes 1-(5'-Amino-2'-sulfo-phenylazo)-2-naphthol-6,8-disulfonsäure werden zuerst bei 0 bis 5° und bei einem pH-Wert von 6 bis 6,5 mit einer Anschlämmung von 18,5 Teilen Cyanurchlorid, welche durch Lösen des Cyanurchlorids in 100 Teilen Aceton und Ausfällen mit 250 g Eis hergestellt wurden, und dann bei 30 bis 40° und bei einem pH-Wert von 4,0 bis 4,5 mit 30 Teilen N-(2-β-Chloräthylsulfonyl-äthyl)-Äthylendiamin-dihydrochlorid umgesetzt. Der erhaltene orange Reaktivfarbstoff der Formel

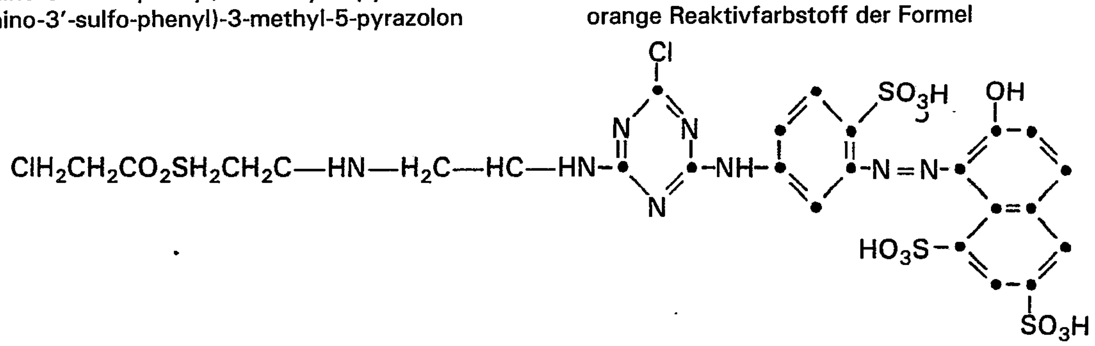

wird aus der neutralen Lösung im Vakuum bei 55-60° zur Trockene eingeengt oder mit Natriumchlorid abgeschieden, filtriert und im Vakuum getrocknet.

Den Ausgangsfarbstoff 1-(5'-Amino-2'-sulfo--phenylazo)-2-naphthol-6,8-disulfonsäure erhält man durch Kupplung von diazotierter 2-Amino-4--acetamino-benzol-sulfonsäure mit 2-Naphthol-6,8--disulfonsäure und anschliessender Verseifung der Acetylgruppe mit Natronlauge oder Salzsäure.

Ähnliche wertvolle, erfindungsgemässe Reaktivfarbstoffe erhält man, wenn man von solchen aminogruppenhaltigen Monoazofarbstoffen ausgeht, die aus den nachstehenden Diazo- und Kupplungskomponenten mit anschliessender Verseifung der Acetylgruppe bzw. Reduktion der Nitrogruppe hergestellt werden können, und im übrigen nach den obigen Angaben verfährt.

Diazokomponenten
2-Amino-5-acetamino-benzol-sulfonsäure
2-Amino-4-acetamino-toluol-5-sulfonsäure
2-Amino-4-acetamino-toluol-6-sulfonsäure
2-Amino-6-acetamino-toluol-4-sulfonsäure
5-Nitro-2-amino-benzol-sulfonsäure
6-Acetamino-2-aminonaphthalin-4,8-disulfonsäure
4-Nitro-2-amino-toluol-6-sulfonsäure
6-Nitro-4-amino-toluol-2-sulfonsäure
6-Nitro-2-amino-naphthalin-8-sulfonsäure
6-Nitro-2-amino-naphthalin-4,8-disulfonsäure.

Kupplungskomponenten
1-Naphthol-3,6-disulfonsäure
1-Naphthol-3,8-disulfonsäure
1-Naphthol-3,7-disulfonsäure
2-Naphthol-3,7-disulfonsäure
2-Naphthol-4,8-disulfonsäure
1-Naphthol-3,6,8-trisulfonsäure
2-Naphthol-3,6,8-trisulfonsäure
2-Amino-naphthalin-3,6-disulfonsäure
2-Amino-naphthalin-5,7-disulfonsäure
1-(2'- oder 3'- oder 4'-sulfophenyl)-3-methyl-5--pyrazolon
1-(2'-Methyl-4'-sulfophenyl)-3-methyl-5-pyrazolon
1-(2',5'-Dichlor-4'-sulfophenyl)-3-methyl-5-pyrazolon
1-(2',5'-Disulfophenyl)-3-methyl-5-pyrazolon
1-(2'- oder 3'- oder 4'-Sulfophenyl)-5-pyrazolon--3-carbonsäure
1-(2'-Chlor-5'-sulfophenyl)-5-pyrazolon-3-carbonsäure.

*Beispiel 59*

50,3 Teile des Farbstoffes 1-Amino-4-(3'-amino--4'-methyl-5'-sulfo-phenyl-amino)-anthrachinon-2--sulfonsäure werden mit Wasser und der nötigen Menge Soda neutral gelöst. Diese Lösung wird bei 0-5° zu einer Anschlämmung von 18,5 Teilen Cyanurchlorid gegeben, welche durch Zutropfen des in 110 Teilen Aceton gelösten Cyanurchlorides auf 250 Teile Eis hergestellt wurde. Der bei der Umsetzung entstehende Chlorwasserstoff wird durch Zutropfen von 50 Teilen 2-normaler Sodalösung neutralisiert, wobei sich ein pH-Wert von 6-6,5 einstellt. Dann gibt man 30 Teile N-(2-β-Chloräthylsulfonyl--äthyl)-äthylendiamin-dihydrochlorid hinzu, erwärmt auf 30-40° und hält diese Temperatur 3 Stunden. Gleichzeitig wird durch Zutropfen von 100 Teilen 2-normaler Sodalösung der pH-Wert auf 4,0-4,5 gehalten. Der erhaltene Reaktivfarbstoff der Formel

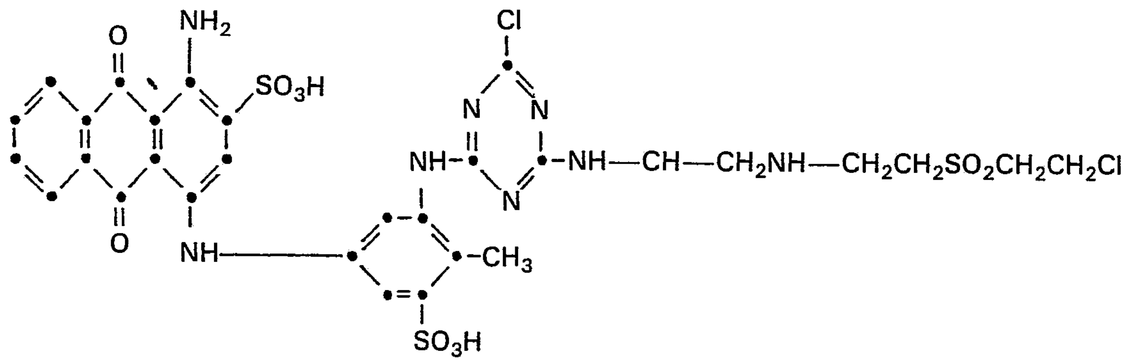

wird mit Natriumchlorid ausgesalzen, filtriert und bei 55-60° getrocknet.

*Beispiel 60*

50,3 Teile des Farbstoffes 1-Amino-4-(3'-amino--4'-methyl-5'-sulfophenyl-amino)-anthrachinon-2--sulfonsäure werden mit Wasser und der nötigen Menge Soda neutral gelöst. In diese Lösung werden bei 0° 14,2 Teile 2,4,6-Trifluor-1,3,5-triazin innert 20 Minuten zugetropft. Der bei der Umsetzung entstehende Fluorwasserstoff wird durch Zutropfen von 50 Teilen 2-normaler Sodalösung neutralisiert, wobei sich ein pH-Wert von 6 bis 6,5 einstellt. Dann gibt man 30 Teile N-(2-β-Chloräthylsulfonyl-äthyl)--äthylendiamin-dihydrochlorid hinzu, erwärmt auf 5° und hält diese Temperatur 3 Stunden. Gleichzeitig wird durch Zutropfen von 100 Teilen 2-normaler Sodalösung der pH-Wert auf 4,0 bis 4,5 gehalten. Der erhaltene Reaktivfarbstoff der Formel

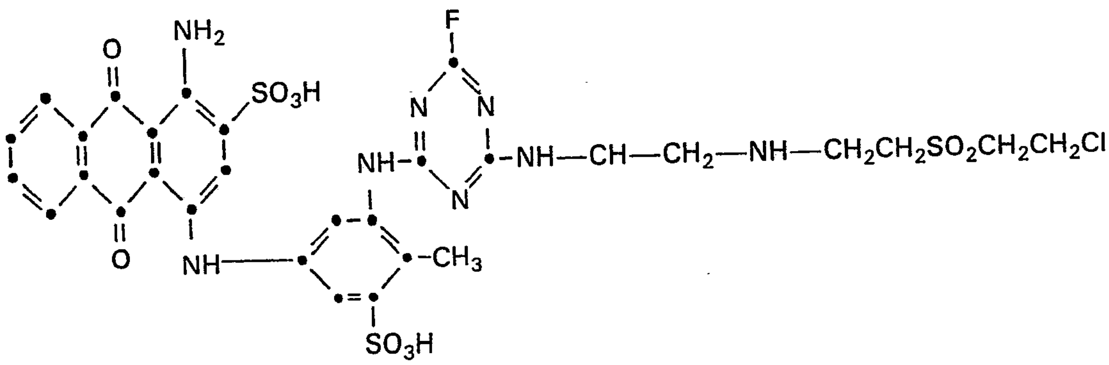

wird mit Natriumchlorid ausgesalzen, filtriert und bei 40° getrocknet.

Analog zu den beschriebenen Methoden lassen sich auch die in der folgenden Tabelle aufgeführten Farbstoffe herstellen, die Baumwolle im angegebenen Farbton färben.

| | Beispiele | Farbton |
|---|---|---|
| 61 | 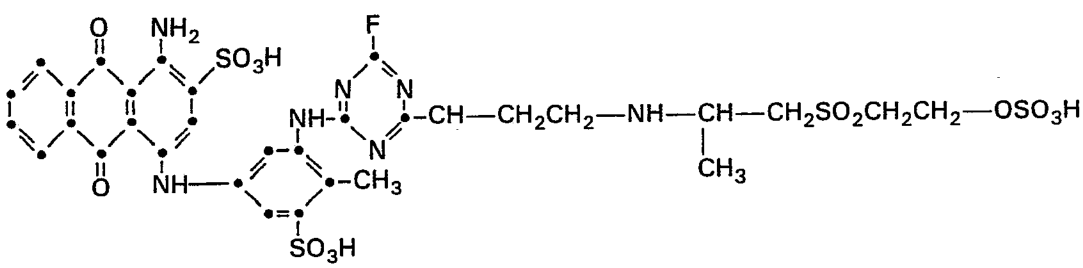 | blau |
| 62 | 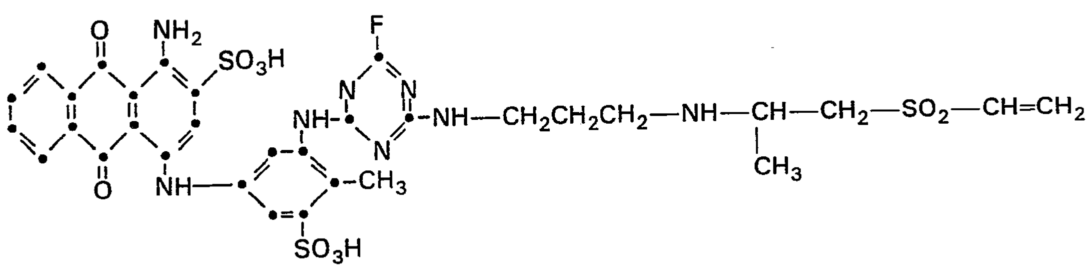 | do |
| 63 | 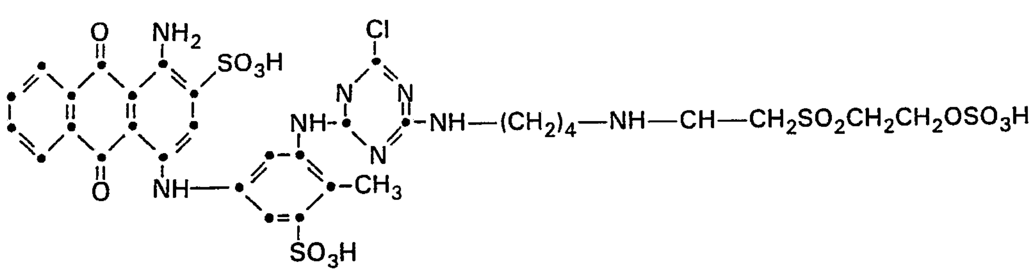 | do |

Ähnlich wertvolle erfindungsgemässe Farbstoffe erhält man, wenn man anstelle des Ausgangsfarbstoffes 1-Amino-4-(3'-amino-4'-methyl-5'-sulfophenylamino)-anthrachinon-2-sulfonsäure Farbstoffe der folgenden Tabelle einsetzt und im übrigen wie oben beschrieben verfährt.

Zwischenfarbstoffe

1-Amino-4-(3'-amino-4'-sulfo-phenyl-amino)-anthrachinon-2-sulfonsäure

1-Amino-4-(4'-amino-3'-sulfo-phenyl-amino)-anthrachinon-2-sulfonsäure

1-Amino-4-(3'-amino-2'-methyl-5'-sulfophenyl-amino)-anthrachinon-2-sulfonsäure

1-Amino-4-(4'-amino-2',2''-disulfo-diphenyl-(4'')-amino)-anthrachinon-2-sulfonsäure

1-Amino-4-(3'-amino-4'-methyl-5'-sulfophenyl-sulfonyl-phenyl-(3'')-amino)-anthrachinon-2-sulfonsäure

1-Amino-4-(4'-amino-phenyl-amino)-anthrachinon-2,5-disulfonsäure

1-Amino-4-(4''-amino-2',2''-disulfo-stilbyl-(4')-amino)-anthrachinon-2-sulfonsäure.

*Beispiel 64*

106,6 Teile des Farbstoffes 3-(3'-Amino-4'-sulfo-phenyl-amino-sulfonyl)-kupferphthalocyanin-3'',3'''-3'''-trisulfonsäure werden mit Wasser und der nötigen Sodamenge neutral gelöst. Diese Lösung lässt man bei 0 bis 5° zu einer Anschlämmung von 18,5 Teilen Cyanurchlorid hinzulaufen, welche durch Zutropfen des in 110 Teilen Aceton gelösten Cyanurchlorids auf 250 Teile Eis hergestellt wurde. Bei der Umsetzung wird der pH-Wert durch Zutropfen von 50 ml 2-normaler Sodalösung auf 6 bis 6,5 gehalten. Zu der erhaltenen Zwischenstufe gibt man 30 Teile N-(2-β-Chloräthylsulfonyl-äthyl)-äthylendiamin-dihydrochlorid hinzu und erwärmt 4 Stunden auf 35 bis 45°. Durch Zutropfen von 100 Teilen 2-normaler Natronlauge wird gleichzeitig der pH-Wert auf 4,0 bis 4,5 gehalten. Der hergestellte Reaktivfarbstoff hat die folgende Konstitution:

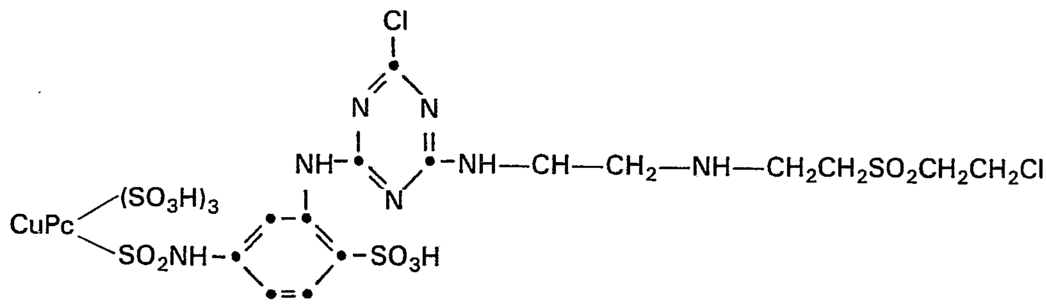

Er wird mit Natriumchlorid abgeschieden, filtriert und im Vakuum bei 55-60° getrocknet.

*Beispiel 65*

106,6 Teile des Farbstoffes 3-(3'-Amino-4'-sulfophenylamino-sulfonyl)-kupferphthalocyanin-3'',3''',3'''-trisulfonsäure werden mit Wasser und der nötigen Sodamenge neutral gelöst. Dieser Lösung lässt man bei 0° 14,2 Teile 2,4,6-Trifluor-1,3,5-triazin innert 20 Minuten zutropfen. Bei der Umsetzung wird der pH-Wert durch Zutropfen von 50 ml 2-normaler Sodalösung auf 6 bis 6,5 gehalten. Zu der erhaltenen Zwischenstufe gibt man 30 Teile N-(2-β-Chloräthylsulfonyl-äthyl)-äthylendiamin-dihydrochlorid hinzu und erwärmt 2 Stunden auf 0 bis 10°. Durch Zutropfen von 100 Teilen 2-normaler Natronlauge wird gleichzeitig der pH-Wert auf 4,0 bis 4,5 gehalten. Der hergestellte Reaktivfarbstoff hat die folgende Konstitution:

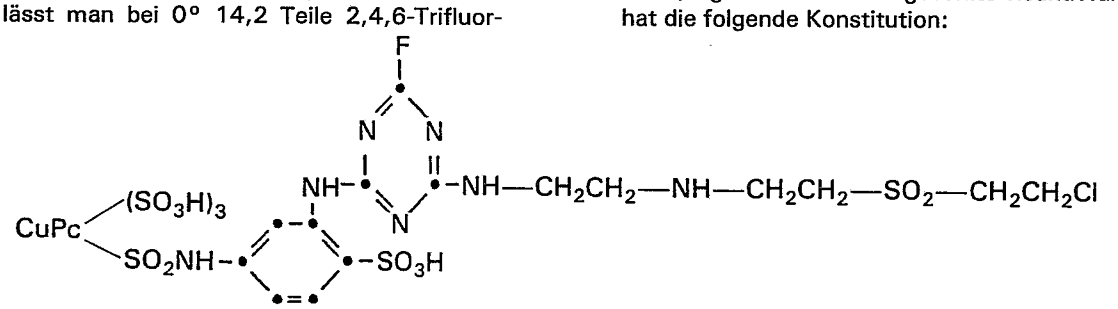

Er wird mit Natriumchlorid abgeschieden, filtriert und im Vakuum bei 40° getrocknet.

Der als Ausgangsmaterial dienende Farbstoff 3''-(3'-Amino-4'-sulfophenyl-amino-sulfonyl)-kupferphthalocyanin-3''',3'''',3'''''-trisulfonsäure kann durch Umsetzung von Kupferphthalocyanin-tetrasulfochlorid mit 2,4-Diamino-benzolsulfonsäure in Gegenwart von Pyridin bei pH 5-9 hergestellt werden.

Zu ähnlich wertvollen, erfindungsgemässen Farbstoffen gelangt man, wenn man solche Ausgangsfarbstoffe einsetzt, die anstelle der 2,4-Diamino-benzol-sulfonsäure mit

2,4-Diamino-toluol-6-sulfonsäure

2,5-Diamino-benzol-sulfonsäure

2,6-Diamino-toluol-4-sulfonsäure

4,4'-Diamino-diphenyl-2,2'-disulfonsäure

3,3'-Diamino-4-methyl-diphenyl-sulfon-5-sulfonsäure

hergestellt wurden und im übrigen die Umsetzung mit Cyanurchlorid und α-Carbonsäure-β-chloräthyl-sulfonyl-äthyl-amin-hydrochlorid wie oben beschrieben durchführt.

Weiterhin gelangt man zu ähnlich wertvollen, erfindungsgemässen Reaktivfarbstoffen, wenn man anstelle von Kupferphthalocyaninfarbstoffen von entsprechenden Nickelphthalocyaninfarbstoffen ausgeht.

*Beispiel 66*

58,1 Teile des durch Diazotierung von 2-Amino-phenol-4,6-disulfonsäure und Kupplung auf 2-Amino-5-naphthol-7-sulfonsäure mit anschliessender Kupferung in essigsaurer Lösung hergestellten Kupferkomplexfarbstoffes werden in Wasser neutral gelöst. Diese Farbstofflösung lässt man bei 0-5° zu einer Anschlämmung von 18,5 Teilen Cyanurchlorid hinzulaufen, welche durch Lösen des Cyanurchlorides in 110 Teilen Aceton und Zutropfen zu 250 Teilen Eis hergestellt wurde. Während der Umsetzung hält man den pH-Wert durch Zutropfen von 50 Teilen 2-normaler Sodalösung auf 4,5-5,5.

Es wird 1-2 Stunden bei 0-5° nachgerührt, bis die Umsetzung beendet ist. Dann gibt man 30 Teile N-(2-β-Chloräthylsulfonyl-äthyl)-äthylendiamin-dihydrochlorid hinzu, erwärmt auf ca. 45° und hält den pH-Wert durch portionsweise Zugabe von 100 Teilen 2-normaler Sodalösung auf 4,5-5,0. Der erhaltene rubinrote Reaktivfarbstoff entspricht der folgenden Formel:

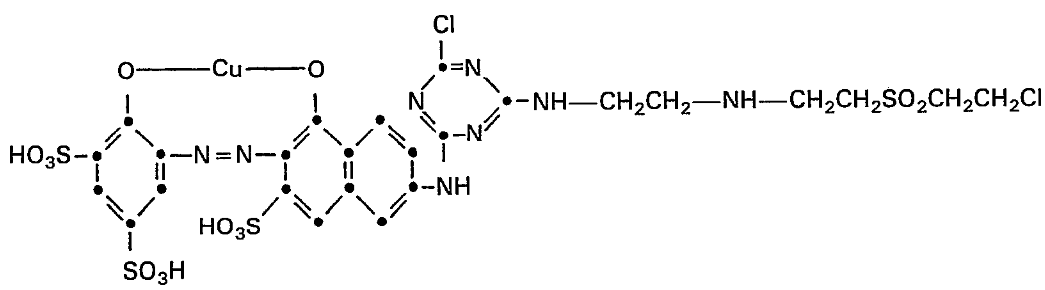

Er wird mit Natriumchlorid abgeschieden, filtriert und bei 55-60° getrocknet.

*Beispiel 67*

58,1 Teile des durch Diazotierung von 2-Amino-phenol-4,6-disulfonsäure und Kupplung auf 2-Amino-5-naphthol-7-sulfonsäure mit anschliessender Kupferung in essigsaurer Lösung hergestellten Kupferkomplexfarbstoffes werden in Wasser neutral gelöst. Dieser Farbstofflösung lässt man bei 0° 14,2 Teile 2,4,6-Trifluor-1,3,5-triazin innert 20 Minuten zutropfen. Während der Umsetzung hält man den pH-Wert durch Zutropfen von 50 Teilen 2-normaler Sodalösung auf 4,5 bis 5,5. Dann gibt man 30 Teile N-(2-β-Chloräthylsulfonyläthyl)-äthylendiamin-didrochlorid hinzu, erwärmt auf ca. 15° und hält den pH-Wert durch portionsweise Zugabe von 100 Teilen 2-normaler Sodalösung auf 4,5 bis 5,0. Der erhaltene rubinrote Reaktivfarbstoff entspricht der folgenden Formel

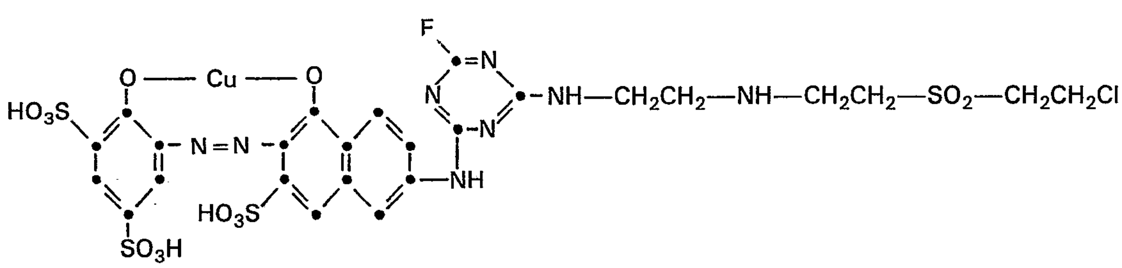

Er wird mit Natriumchlorid abgeschieden, filtriert und bei 55 bis 60° getrocknet.

Ähnlich wertvolle, erfindungsgemässe Reaktivfarbstoffe erhält man, wenn man anstelle des Kupferkomplexfarbstoffes aus 2-Amino-phenol-4,6-disulfonsäure und 2-Amino-5-naphthol-7-sulfonsäure als Ausgangsfarbstoffe die Kupferkomplexfarbstoffe der aus den nachstehenden Diazo- und Kupplungskomponenten hergestellten Farbstoffe einsetzt und im übrigen die Umsetzungen mit Cyanurchlorid und α-Carbonsäure-äthylester-β-(β'-chloräthylsulfonyl)-äthylamin-hydrochlorid wie oben beschrieben durchführt.

Diazokomponenten

2-Amino-phenol-4-sulfonsäure
2-Amino-phenol-5-sulfonsäure
6-Nitro-2-amino-phenol-4-sulfonsäure
4-Nitro-2-amino-phenol-6-sulfonsäure
4-Chlor-2-amino-phenol-6-sulfonsäure
2-Amino-4-methyl-phenol-6-sulfonsäure
2-Amino-4-acetamino-phenol-6-sulfonsäure
1-Amino-2-naphthol-4-sulfonsäure
6-Nitro-1-amino-2-naphthol-4-sulfonsäure.

Kupplungskomponenten
1-Amino-5-naphthol-7-sulfonsäure
1-Amino-8-naphthol-4-sulfonsäure
1-Amino-8-naphthol-6-sulfonsäure
2-(N-Methylamino)-5-naphthol-7-sulfonsäure
2-(N-Äthylamino)-5-naphthol-7-sulfonsäure
2-(N-β-Hydroxyäthylamino)-5-naphthol-7-sulfonsäure
2-Amino-8-naphthol-6-sulfonsäure
2-(N-Methylamino)-8-naphthol-6-sulfonsäure
2-(N-Äthylamino)-8-naphthol-6-sulfonsäure
1-Amino-8-naphthol-3,6-disulfonsäure
1-Amino-8-naphthol-4,6-disulfonsäure
2-Amino-5-naphthol-1,7-disulfonsäure
2-Amino-8-naphthol-3,6-disulfonsäure.

*Beispiel 68*

Zu einer Anschlämmung von 79,4 Teilen des Kupferkomplexes von 7-[6'-(3",5"-Dichlor-2",4",6"-triazinylamino)-2'-hydroxy-4'-sulfo-1-naphthylazo]-1-amino-8-hydroxynaphthalin-2,4-disulfonsäure in ca. 800 Teilen Wasser von 0 bis 5° und einem pH-Wert von 6,5 kommen 30 Teile N-(2-β-Chloräthylsulfonyläthyl)-äthylendiamin-dihydrochlorid als Pulver. Man erwärmt auf 30 bis 40° und hält diese Temperatur 4 Stunden. Gleichzeitig wird durch Zutropfen von 100 Teilen 2-normaler Sodalösung der pH-Wert auf 4,0 bis 4,5 gehalten. Das Ende der Reaktion erkennt man daran, dass der pH-Wert konstant bei 4,5 bleibt. Der dargestellte blaue Reaktivfarbstoff hat folgende Konstitution

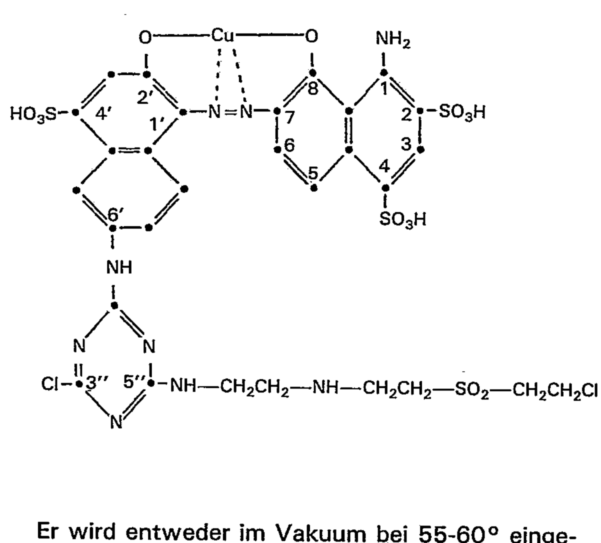

Er wird entweder im Vakuum bei 55-60° eingedampft oder mit Natriumchlorid abgeschieden.

Der als Ausgangsfarbstoff verwendete Kupferkomplex von 7-[6'-(3",5"-Dichlor-2",4",6"-triazinyl-amino)-2'-hydroxy-4-sulfo-1'-naphthylazo]-1-amino-8-hydroxy-naphthalin-2,4-disulfonsäure wird auf folgende Weise hergestellt:

60,8 Teile 6-Nitro-1-diazo-4-sulfo-2-naphtholat werden bei 0 bis 5° in Gegenwart von Soda mit 63,8 Teilen 1-Amino-8-hydroxynaphthalin-2,4-disulfonsäure gekuppelt. Zwecks Reduktion der Nitrogruppe lässt man zur Farbstofflösung bei etwa 40-50° eine Lösung von 27,3 Teilen Natriumsulfid in Wasser zutropfen und rührt 1-2 Stunden nach.

Der aminogruppenhaltige Farbstoff wird mit Natriumchlorid abgeschieden, filtriert, in etwa 800 Teilen Wasser gelöst und mit Essigsäure auf pH 5-5,3 eingestellt. Dazu gibt man 40 Teile Kupferacetat oder 50 Teile Kupfersulfat und rührt 5 Stunden bei 20-30°. Der erhaltene Kupferkomplexfarbstoff wird mit Natriumchlorid abgeschieden, filtriert und mit 800 Teilen Wasser neutral gelöst. Die Farbstofflösung läuft sodann bei 0-5° zu einer Anschlämmung von 37,0 Teilen Cyanurchlorid, welche durch Zutropfen des in 200 Teilen Aceton gelösten Cyanurchlorides zu 500 Teilen Eis hergestellt wurde. Man rührt 1-2 Stunden bei 0-5° nach, bis keine diazotierbaren Aminogruppen mehr nachweisbar sind.

Ähnlich wertvolle erfindungsgemässe Reaktivfarbstoffe erhält man, wenn man anstelle des 6-Nitro-1-diazo-4-sulfonaphtholats die Diazoverbindungen der folgenden Amine einsetzt:
4-Nitro-2-amino-1-hydroxy-naphthalin-6-sulfonsäure
6-Nitro-2-amino-phenol-4-sulfonsäure
4-Nitro-2-amino-phenol-6-sulfonsäure.

*Beispiel 69*

Zu einer Anschlämmung von 76,1 Teilen des Kupferkomplexes von 7-[6'-(3",5"-difluor-2",4",6"-triazinylamino)-2'-hydroxy-4'-sulfo-1'-naphthylazo]-1-amino-8-hydroxynaphthalin-2,4-disulfonsäure in ca. 800 Teilen Wasser von 0 bis 5° und einem pH-Wert von 6,5 kommen 30 Teile N-(2-β-Chloräthylsulfonyläthyl)-äthylendiamin-dihydrochlorid als Pulver. Man erwärmt auf 5 bis 10° und hält diese Temperatur 2 Stunden. Gleichzeitig wird durch Zutropfen von 100 Teilen 2-normaler Sodalösung der pH-Wert auf 4,0 bis 4,5 gehalten. Das Ende der Reaktion erkennt man daran, dass der pH-Wert konstant bei 4,5 bleibt. Der dargestellte blaue Reaktivfarbstoff hat folgende Konstitution

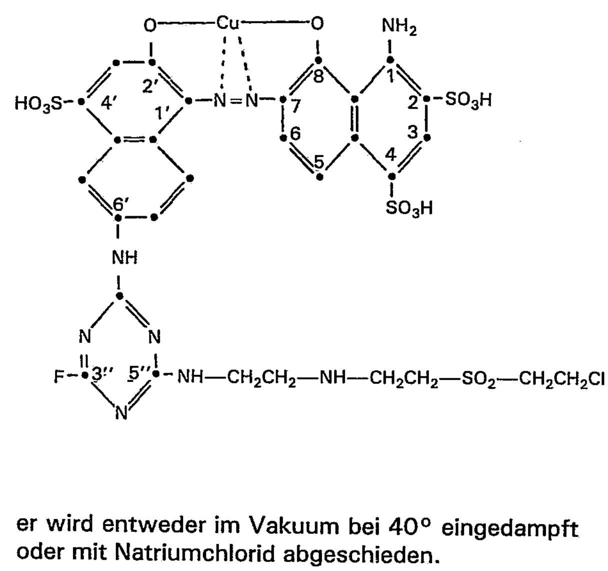

er wird entweder im Vakuum bei 40° eingedampft oder mit Natriumchlorid abgeschieden.

*Beispiel 70*

Man gibt 30 Teile N-(2-β-Chloräthylsulfonyl-äthyl)-äthylendiamin-dihydrochlorid in Pulverform

zu einer neutralen Farbstoffanschlämmung von 82,4 Teilen des Kupferkomplexes von N-(2-Hydroxy-4--sulfo-phenyl)-N'-(2'-carboxy-4'-sulfo-phenyl)-ms--[4''-(3''',5'''-dichlor-2''',4''',6'''-triazinyl-amino)--2''-sulfo-phenyl]-formazan in ca. 800 Teilen Wasser, wobei die Temperatur etwa 0-5° beträgt. Dann erwärmt man 4 Stunden auf 30-40° und hält während dieser Zeit den pH-Wert durch portionsweise Zugabe von verdünnter Natronlauge auf 4,0-4,5. Wenn keine Natronlauge mehr erforderlich ist, d.h. wenn der pH-Wert konstant bleibt, wird der dargestellte blaue Reaktivfarbstoff durch Sprühtrocknen bei 55-60° oder durch Aussalzen isoliert. Er hat folgende Konstitution:

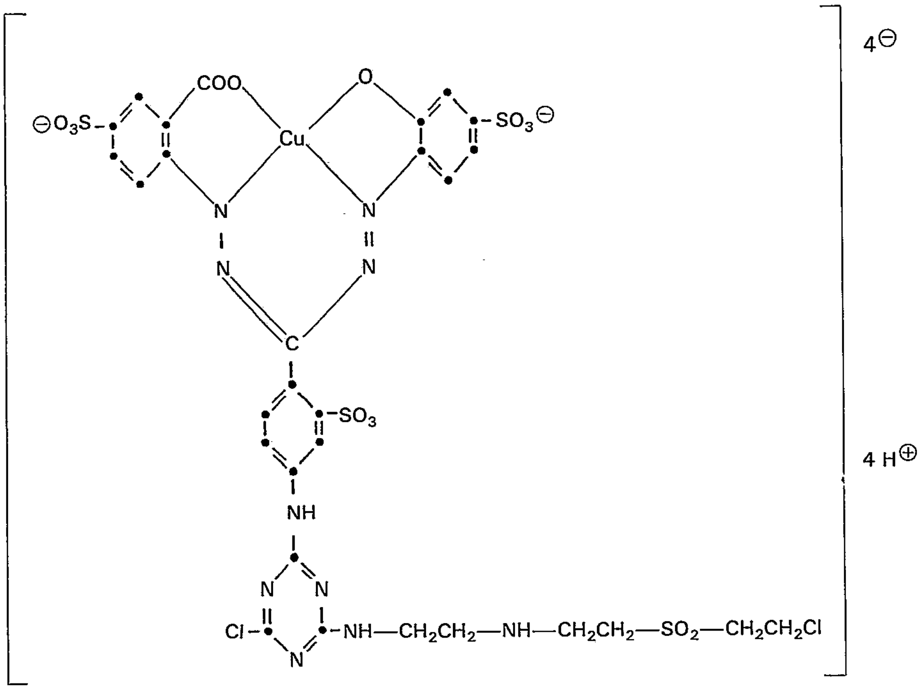

*Beispiel 71*

Man gibt 30 Teile N-(2-β-Chloräthylsulfonyl--äthyl)-äthylendiamin-dihydrochlorid in Pulverform zu einer neutralen Farbstoffanschlämmung von 78,1 Teilen des Kupferkomplexes von N-(2-Hydroxy-4--sulfo-phenyl)-N'-(2'-carboxy-4'-sulfo-phenyl)-ms--[4''-(3''',5'''-difluor-2''',4''',6'''-triazinyl-amino)--2''-sulfo-phenyl]-formazan in ca. 800 Teilen Wasser, wobei die Temperatur etwa 0-5° beträgt. Dann erwärmt man 2 Stunden auf 0-10° und hält während dieser Zeit den pH-Wert durch portionsweise Zugabe von verdünnter Natronlauge auf 4,0-4,5. Wenn keine Natronlauge mehr erforderlich ist, d.h. wenn der pH-Wert konstant bleibt, wird der dargestellte blaue Reaktivfarbstoff durch Sprühtrocknen bei 40° oder durch Aussalzen isoliert. Er hat folgende Konstitution:

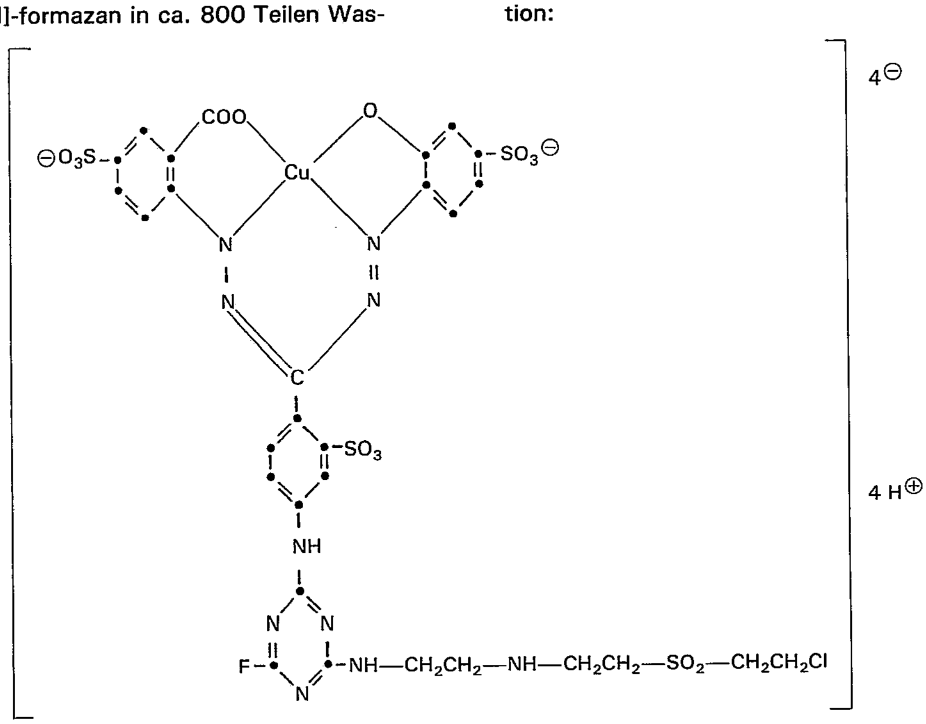

Der als Ausgangsfarbstoff dienende Kupferkomplex des N-(2-Hydroxy-4-sulfo-phenyl)-N'-(2''-carboxy-4''-sulfo-phenyl)-ms-[4''-(3''',5'''-dichlor-2''',4''',6'''-triazinyl-amino)-2-sulfophenyl]-formazans wird auf folgende Weise gewonnen: 46,4 Teile 2-Carboxy-phenylhydrazin-4-sulfonsäure und 48,6 Teile 4-Acetamino-benzaldehyd-2-sulfonsäure werden in wässriger Lösung kondensiert und das erhaltene Hydrazon in Gegenwart von Soda mit der Diazoverbindung von 37,8 Teilen 1-Amino-2-hydroxybenzol-4-sulfonsäure bei 0-5° gekuppelt. Das gebildete Formazan wird mit Essigsäure auf pH 5-5,3 gestellt und mit kupferabgebenden Mitteln, wie z.B. 40 Teilen Kupferacetat oder 50 Teilen Kupfersulfat, unter 5-stündigem Erwärmen auf 40-50° in den Kupferkomplex übergeführt. Dieser wird mit Natriumchlorid abgeschieden und in ca. 800 ml Wasser neutral gelöst. Die Farbstofflösung läuft bei 0-5° zu einer Anschlämmung von 37,0 Teilen Cyanurchlorid, welche durch Lösen des Cyanurchlorides in 200 Teilen Aceton und Ausfällen mit 500 Teilen Eis hergestellt wird. Man rührt 1-2 Stunden bei 0-5° bis vollständige Umsetzung eingetreten ist.

Ähnlich wertvolle erfindungsgemässe Reaktivfarbstoffe erhält man, wenn man aus den nachstehenden Hydrazin, Aldehyd- und Diazokomponenten Formazane herstellt, wobei mindestens eine Acetaminogruppe wahlweise in der Aldehyd- oder Diazokomponente vorhanden sein muss, die Formazane in den Kupferkomplex überführt, die Acetaminogruppe verseift, die Farbstoffe mit Cyanurchlorid umsetzt und im übrigen wie oben angegeben verfährt. Dabei sind die Komponenten so zu wählen, dass mindestens drei Sulfonsäuregruppen pro Farbstoffmolekül vorhanden sind.

Wenn je eine verseifbare Acetaminogruppe in der Aldehyd- und Diazokomponente vorhanden ist, lassen sich reaktive Reste zweimal in den Farbstoff einführen.

Hydrazinkomponenten:
2-Hydroxy-phenylhydrazin
6-Nitro-2-hydroxy-phenylhydrazin
4-Chlor-2-carboxy-phenylhydrazin
5-Nitro-2-carboxy-phenylhydrazin
4-Methoxy-2-carboxy-phenylhydrazin
4-Nitro-2-hydroxy-6-sulfo-phenylhydrazin
6-Nitro-2-hydroxy-4-sulfo-phenylhydrazin
2-Carboxy-5-sulfo-phenylhydrazin
2-Hydroxy-6-carboxy-4-sulfo-phenylhydrazin
2-Hydroxy-4,6-disulfo-phenylhydrazin
2-Hydroxy-4-sulfo-naphthylhydrazin
2-Hydroxy-4,6'-disulfo-naphthyl-1-hydrazin.

Aldehydkomponenten:
Benzaldehyd
4-Methyl-benzaldehyd
Benzaldehyd-2- oder -3- oder -4-sulfonsäure
Benzaldehyd-2,4-disulfonsäure
2- oder 3- oder 4-Nitro-benzaldehyd
2-Chlor-benzaldehyd-5-sulfonsäure
2- oder 3- oder 4-Acetamino-benzaldehyd
3-Acetamino-benzaldehyd-4-sulfonsäure
5-Acetamino-benzaldehyd-2-sulfonsäure.

Diazokomponenten:
1-Amino-3-acetamino-2-hydroxy-benzol-5-sulfonsäure
1-Amino-5-acetamino-2-hydroxy-benzol-3-sulfonsäure
3-Chlor-1-amino-2-hydroxy-benzol-5-sulfonsäure
5-Nitro-1-amino-2-hydroxy-benzol-3-sulfonsäure
5-Nitro-1-amino-2-hydroxy-benzol-4-sulfonsäure
1-Amino-2-hydroxy-benzol-4,6-disulfonsäure.

Analog zu den beschriebenen Methoden lassen sich auch die in der folgenden Tabelle aufgeführten Farbstoffe herstellen, die Baumwolle im angegebenen Farbton färben.

| | Beispiele | | Farbton |
|---|---|---|---|
| 72 | | 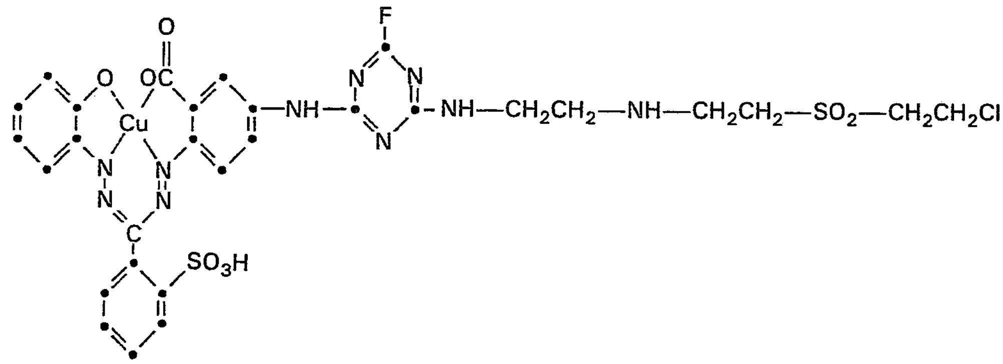 | blau |
| 73 | do | 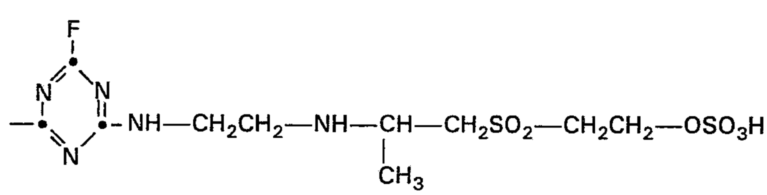 | do |

| | Beispiele | Farbton |
|---|---|---|
| 74 | do 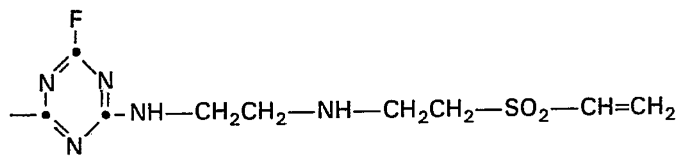 | blau |
| 75 | do 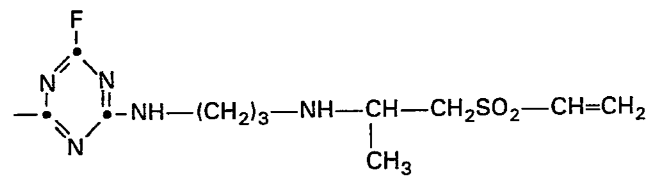 | do |
| 76 | do 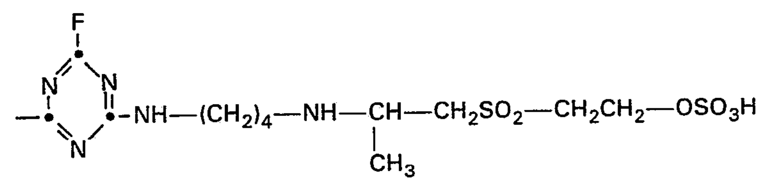 | do |

*Beispiel 77*

Zu einer wässrigen Anschlämmung von 81,4 Teilen der N,N'-Bis-(3,5-dichlor-2,4,6-triazinyl)-verbindung der 7-(5'-Amino-2'-sulfo-phenyl-azo)-1-amino-8-naphthol-3,6-disulfonsäure gibt man bei 0-5° eine wässrige Anschlämmung von 60 Teilen N-(2-β-Chloräthylsulfonyläthyl)-äthylendiamin-dihydrochlorid. Darauf erwärmt man auf 30-40°, hält diese Temperatur 3-4 Stunden und lässt gleichzeitig portionsweise eine Lösung von 100 Teilen 2-normaler Sodalösung hinzutropfen, um den pH-Wert auf 4,0-4,5 zu halten. Wenn der pH-Wert konstant bleibt, ist die Umsetzung beendet. Der erhaltene blaustichig rote Reaktivfarbstoff wird entweder bei 55-60° im Vakuum eingedampft oder mit Natriumchlorid abgeschieden. Er hat folgende Konstitution:

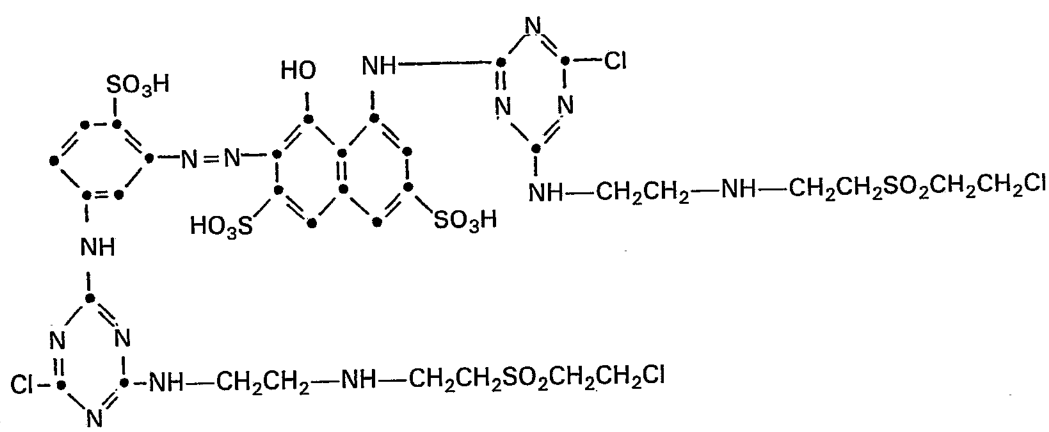

Zu der als Ausgangsfarbstoff dienenden N,N'-Bis-(3,5-dichlor-2,4,6-triazinyl)-Verbindung der 7-(5'-Amino-2'-sulfo-phenyl-azo)-1-amino-8-naphthol-3,6-disulfonsäure gelangt man auf folgendem Weg: Bei einer Temperatur von 0-5° und einem pH-Wert von 6-7 werden eine neutrale Lösung von 37,6 Teilen 2,4-Diamino-benzolsulfonsäure mit einer Anschlämmung von 37,0 Teilen Cyanurchlorid und eine neutrale Lösung von 63,8 Teilen 1-Amino-8-naphthol-3,6-disulfonsäure mit einer Anschlämmung von 37,0 Teilen Cyanurchlorid umgesetzt. Der pH-Wert von 6-7 wird in beiden Fällen durch Zutropfen von je 100 Teilen 2-normaler Sodalösung eingehalten. Die Diazokomponente 2-Amino-5--(3″,5″-dichlor-2″,4″,6″-triazinyl-amino)-benzol--sulfonsäure wird auf übliche Weise in salzsaurer Lösung mit Natriumnitrit bei 0-5° diazotiert und dann mit der Kupplungskomponente 1-(3‴,5‴-Dichlor--2‴,4‴,6‴-triazinyl-amino)-8-naphthol-3,6-disulfonsäure zum Monoazofarbstoff vereinigt.

Ähnlich wertvolle, erfindungsgemässe Reaktivfarbstoffe erhält man, wenn man zur Herstellung des Ausgangsfarbstoffes anstelle des Kondensationsproduktes von 1-Amino-8-naphthol-3,6-disulfonsäure mit Cyanurchlorid die Kondensationsprodukte der in Beispiel 1 genannten Kupplungskomponenten mit Cyanurchlorid einsetzt und im übrigen wie oben beschrieben verfährt.

Ersetzt man das als Diazokomponente für die Herstellung des Ausgangsfarbstoffs eingesetzte Kondensationsprodukt von 2,4-Diaminobenzolsulfonsäure mit Cyanurchlorid durch die entsprechenden Kondensationsprodukte des Cyanurchlorids mit 2,5-Diaminobenzolsulfonsäure oder 2,5-Diaminobenzol-1,4-disulfonsäure und verfährt im übrigen wie oben beschrieben, so erhält man ebenfalls wertvolle erfindungsgemässe Farbstoffe.

*Beispiel 78*

Ersetzt man bei dem Beispiel 77 die 81,4 Teile N,N'-Bis-(3,5-dichlor-2,4,6-triazinyl)-Verbindung der 7-(5'-Amino-2'-sulfophenylazo)-1-amino-8-naphthol--3,6-disulfonsäure durch 78,1 Teile N,N'-Bis-(3,5--difluor-2,4,6-triazinyl)-Verbindung der 7-(5'-Amino-2'-sulfophenylazo)-1-amino-8-naphthol-3,6-disulfonsäure, so erhält man ebenfalls wertvolle erfindungsgemässe Farbstoffe.

*Beispiel 79*

Zu einer Anschlämmung von 18,5 Teilen Cyanurchlorid, die in 70 Teilen Aceton warm gelöst und unter Rühren auf 300 Teile Eis gegeben wurden, lässt man eine neutrale Lösung von 72,8 Teilen des Kupferkomplexes des Farbstoffs 6-Amino-1,2',8'--trihydroxy-2,1'-azonaphthalin-3',4,6',8-tetrasulfonsäure in 400 Teilen Wasser bei 0 bis 5° hinzufliessen. Die bei der Umsetzung gebildete Salzsäure wird durch Zutropfen von 50 Teilen 2-normaler Natronlauge neutralisiert (pH-Wert 5,5-6,5). Darauf werden 30 Teile N-(2-β-Chloräthylsulfonyl-äthyl)-äthylendiamin-dihydrochlorid als Pulver hinzugegeben. Man erwärmt in ca. 1/2 Stunde auf 40° und hält diese Temperatur 3 Stunden. Gleichzeitig wird durch Zugabe von 17 g Natriumbicarbonat der pH-Wert auf 4,0 bis 4,5 gehalten. Der so erhaltene blaue Reaktivfarbstoff der Formel

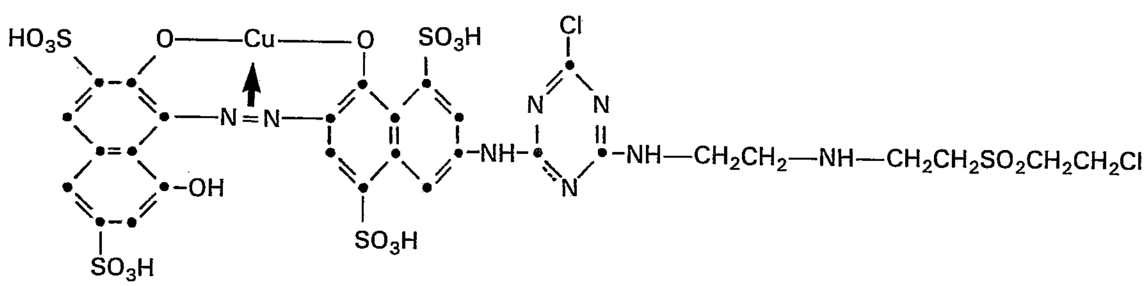

wird mit Natriumchlorid ausgesalzen, filtriert und im Vakuum bei 60° getrocknet.

Der als Ausgangsmaterial verwendete Kupferkomplexfarbstoff wird auf folgende Weise nach den Angaben der deutschen Patentschrift 1 117 235 hergestellt:

81,8 Teile des o-Benzolsulfonylesters der 1-Amino-8-naphthol-3,6-disulfonsäure werden diazotiert und mit 72,2 Teilen 2-Acetamino-5-naphthol-4,8--disulfonsäure sodaalkalisch gekuppelt. Der erhaltene Monoazofarbstoff wird in bekannter Weise durch oxydative Kupferung mit Kupfersulfat und Wasserstoffperoxyd in essigsaurer Lösung in den Kupferkomplex übergeführt und dann durch Hydrolyse die Benzolsulfonyl- und Acetylgruppe abgespalten.

Ersetzt man bei der Herstellung des Ausgangsfarbstoffes die Diazokomponente durch molare Mengen der nachstehenden Diazokomponenten und verfährt im übrigen nach der oben beschriebenen Weise, so erhält man ebenfalls wertvolle erfindungsgemässe Farbstoffe:

1-Amino-8-naphthol-4,6-disulfonsäure-o-benzolsulfonylester
1-Amino-8-naphthol-4,7-disulfonsäure-o-benzolsulfonylester
2-Amino-naphthalin-4,8-disulfonsäure
2-Amino-6-nitro-naphthalin-4,8-disulfonsäure
2-Amino-naphthalin-4,6,8-trisulfonsäure
2-Amino-naphthalin-6-sulfonsäure
2-Amino-naphthalin-8-sulfonsäure.

Ersetzt man bei der Herstellung des Ausgangsfarbstoffes die Kupplungskomponente 2-Acetamino-5--naphthol-4,8-disulfonsäure durch molare Mengen der N-Acetylverbindung der folgenden Kupplungskomponenten, so erhält man weiterhin wertvolle erfindungsgemässe Farbstoffe:

2-Amino-8-naphthol-6-sulfonsäure
2-Amino-5-naphthol-7-sulfonsäure
2-Amino-5-naphthol-1,7-disulfonsäure
2-Amino-8-naphthol-3,6-disulfonsäure.

*Beispiel 80*

70,2 Teile des Diazofarbstoffes 1-Amino-2-(4'--sulfophenylazo)-7-(2″-sulfo-5″-aminophenylazo)--8-naphthol-3,6-disulfonsäure werden in Form einer neutralen Lösung bei 0 bis 5° mit einer Anschlämmung von 18,5 Teilen Cyanurchlorid umgesetzt,

welche in 110 Teilen Aceton gelöst und mit 250 Teilen Eis wieder gefällt wurden. Die Umsetzung erfolgt bei pH 6,0 bis 6,5, wobei die Einhaltung des pH-Wertes durch Zutropfen von 50 Teilen 2-normaler Sodalösung erfolgt. Anschliessend werden 30 Teile N-(2-β-Chloräthylsulfonyl-äthyl)-äthylendiamin-dihydrochlorid als Pulver zugegeben, auf 30 bis 40° erwärmt und dabei der pH-Wert durch Zutropfen von 100 Teilen 2-normaler Sodalösung auf 4,0 bis 4,5 gehalten. Der erhaltene Farbstoff der Konstitution

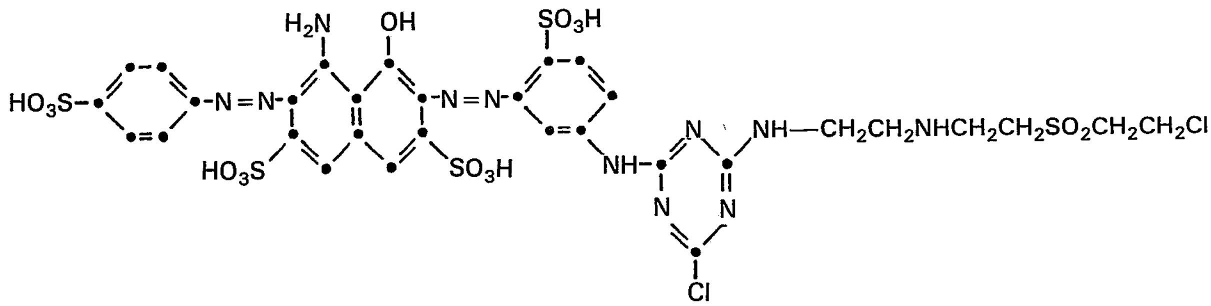

wird durch Aussalzen oder durch Sprühtrocknung isoliert.

Der als Ausgangsmaterial dienende Disazofarbstoff kann auf folgende Weise hergestellt werden:

Die Diazoverbindung von 34,6 Teilen Sulfanilsäure wird in der ersten Stufe in saurem Medium bei pH 2-4 mit 63,8 Teilen 1-Amino-8-naphthol-3,6-disulfonsäure und dann in der zweiten Stufe sodaalkalisch mit der Diazoverbindung von 46,0 Teilen 2-Amino-4-acetamino-benzol-sulfonsäure gekuppelt. Die Acetylgruppe des Disazofarbstoffes wird in Gegenwart von überschüssiger Natronlauge unter Erwärmen auf 90-100° verseift.

Ähnliche wertvolle, erfindungsgemässe Farbstoffe erhält man, wenn man anstelle des als Ausgangsfarbstoff eingesetzten Diazofarbstoffs die folgenden Farbstoffe einsetzt und im übrigen wie oben beschrieben verfährt.

1-Amino-2-(2′-sulfophenylazo)-7-(2″-sulfo-5-aminophenylazo)-8-naphthol-3,6-disulfonsäure
1-Amino-2-(2′,4′-disulfophenylazo)-7-(2″-sulfo-5″-aminophenylazo)-8-naphthol-3,6-disulfonsäure
1-Amino-2-(2′,5′-disulfophenylazo)-7-(2′-sulfo-5″-amino-phenylazo)-8-naphthol-3,6-disulfonsäure
1-Amino-2-(4′-sulfophenylazo)-7-(2″-sulfo-4″-aminophenylazo)-8-naphthol-3,6-disulfonsäure
1-Amino-2-(2′,5′-disulfophenylazo)-7-(2″-sulfo-4″-aminophenylazo)-8-naphthol-3,6-disulfonsäure
1-Amino-2-(2′-sulfo-4′-aminophenylazo)-7-(4″-sulfophenylazo)-8-naphthol-3,6-disulfonsäure
1-Amino-2-(2′-sulfo-4′-aminophenylazo)-7-(2″,5″-disulfophenylazo)-8-naphthol-3,6-disulfonsäure
1-Amino-2-(2′,5′-disulfo-4-aminophenylazo)-7-phenylazo-8-naphthol-3,6-disulfonsäure
1-Amino-2-(2′-sulfo-5′-aminophenylazo)-7-(4″-sulfophenylazo)-8-naphthol-3,6-disulfonsäure
1-Amino-2-(2′-sulfo-5′-aminophenylazo)-7-(2″-sulfophenylazo)-8-naphthol-3,6-disulfonsäure
1-Amino-2-(2′-sulfo-5′-aminophenylazo)-7-(2″,5″-disulfophenylazo)-8-naphthol-3,6-disulfonsäure.

Ersetzt man in der Herstellung der oben genannten Disazofarbstoffe die 1-Amino-8-naphthol-3,6-disulfonsäure durch die 1-Amino-8-naphthol-4,6-disulfonsäure, und verfährt im übrigen wie oben beschrieben, so erhält man ebenfalls wertvolle, erfindungsgemässe Farbstoffe.

*Beispiel 81*

70,2 Teile des Disazofarbstoffes 1-Amino-2-(4′-sulfophenylazo)-7-(2″-sulfo-5″-aminophenylazo)-8-naphthol-3,6-disulfonsäure werden in Form einer neutralen Lösung bei 0° mit 14,2 Teilen 2,4,6-Trifluor-1,3,5-triazin innert 20 Minuten versetzt. Die Umsetzung erfolgt bei pH 6,0 bis 6,5, wobei die Einhaltung des pH-Wertes durch Zutropfen von 50 Teilen 2-normaler Sodalösung erfolgt. Anschliessend werden 30 Teile N-(2-β-Chloräthylsulfonyl-äthyl)-äthylendiamin-dihydrochlorid als Pulver zugegeben, auf 0 bis 10° erwärmt und dabei der pH-Wert durch Zutropfen von 100 Teilen 2-normaler Sodalösung auf 4,0 bis 4,5 gehalten. Der erhaltene Farbstoff der Konstitution

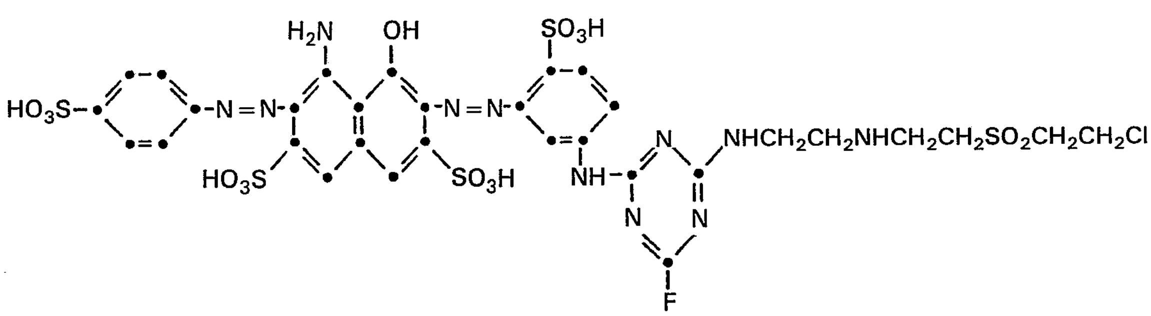

wird durch Aussalzen oder durch Sprühtrocknung isoliert.

Analog zu den beschriebenen Methoden lassen sich auch die in der folgenden Tabelle aufgeführten Farbstoffe herstellen, die Baumwolle im angegebenen Farbton färben.

| Beispiele | | Farbton |
|---|---|---|
| 82 | 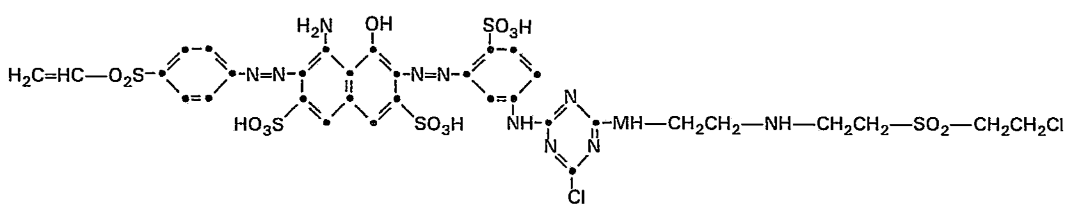 | marine-blau |
| 83 | 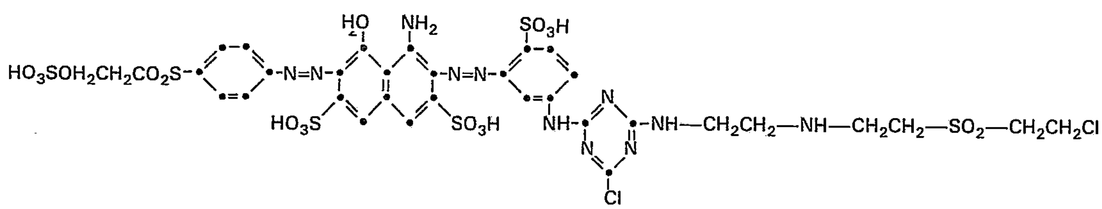 | do |
| 84 | 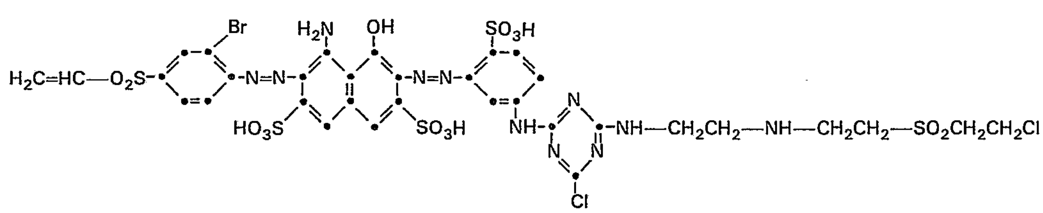 | do |
| 85 | 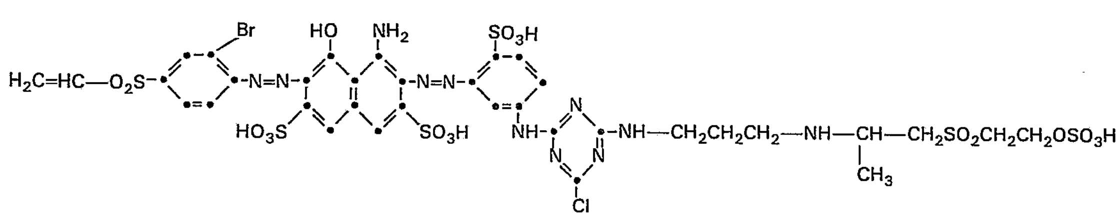 | do |

*Beispiel 86*

72,0 Teile des Disazofarbstoffes 1-Amino-2-(2'-sulfo-5'-aminophenylazo)-7-(2''-sulfo-5''-aminophenylazo)-8-naphthol-3,6-disulfonsäure werden in Form einer neutralen Lösung bei 0 bis 5° mit einer Anschlämmung von 37 Teilen Cyanurchlorid umgesetzt, welche in 110 Teilen Aceton mit 250 Teilen Eis wieder gefällt wurden. Die Umsetzung erfolgt bei pH 6,0 bis 6,5, wobei die Einhaltung des pH-Wertes durch Zutropfen von 100 Teilen 2-normaler Sodalösung erfolgt. Anschliessend werden 60 Teile N-(2-β-Chloräthylsulfonyläthyl)-äthylendiamin-dihydrochlorid als Pulver zugegeben, auf 30 bis 40° erwärmt und dabei der pH-Wert durch Zutropfen von 200 Teilen 2-normaler Sodalösung auf 4,5 bis 5 gehalten. Der erhaltene Farbstoff der Konstitution

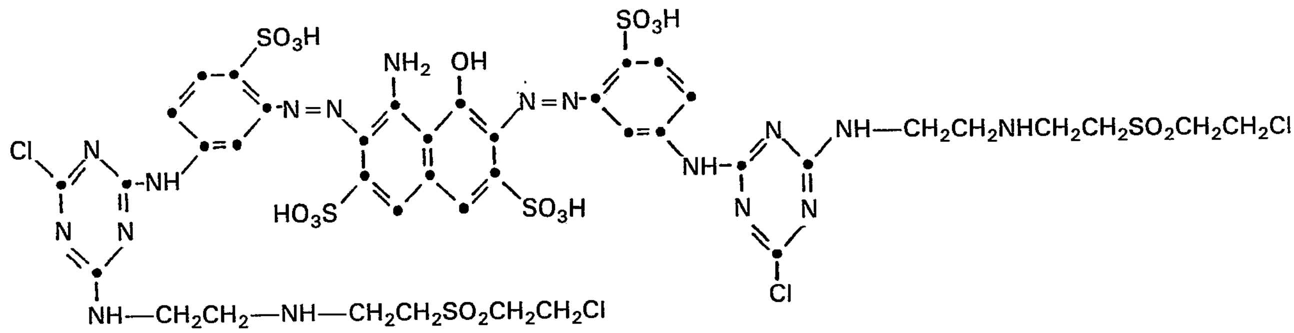

wird durch Aussalzen oder durch Sprühtrocknung isoliert.

Der als Ausgangsmaterial dienende Disazofarbstoff kann auf folgende Weise hergestellt werden:

Die Diazoverbindung von 46,0 Teilen 2-Amino-4--acetamino-benzol-sulfonsäure wird in der ersten Stufe in saurem Medium bei pH 2-4 mit 63,8 Teilen 1-Amino-8-naphthol-3,6-disulfonsäure und dann in der zweiten Stufe sodaalkalisch mit der Diazoverbindung von 46,0 Teilen 2-Amino-4-acetamino-benzol-sulfonsäure gekuppelt. Die Acetylgruppen des Disazofarbstoffes werden in Gegenwart von überschüssiger Natronlauge unter Erwärmen auf 90-100° verseift.

Ähnlich wertvolle, erfindungsgemässe Farbstoffe erhält man, wenn man anstelle des als Ausgangsfarbstoff eingesetzten Diazofarbstoffs die folgenden Farbstoffe einsetzt und im übrigen wie oben beschrieben verfährt:

1-Amino-2-(2'-sulfo-4'-aminophenylazo)-7-(2''-sulfo-4''-phenylazo)-8-naphthol-3,6-disulfonsäure

1-Amino-2-(2',5'-disulfo-4'-aminophenylazo)-7--(2'',5''-disulfo-4''-aminophenylazo)-8-naphthol--3,6-disulfonsäure

1-Amino-2-(2',4'-disulfo-5'-aminophenylazo)-7--(2'',4''-disulfo-5''-aminophenylazo)-8-naphthol--3,6-disulfonsäure.

Ersetzt man in der Herstellung der oben genannten Disazofarbstoffe die 1-Amino-8-naphthol-3,6-disulfonsäure durch die 1-Amino-8-naphthol-4,6-disulfonsäure, und verfährt im übrigen wie oben beschrieben, so erhält man ebenfalls wertvolle, erfindungsgemässe Farbstoffe.

*Beispiel 87*

72,0 Teile des Disazofarbstoffes 1-Amino-2-(2'--sulfo-5'-aminophenylazo)-7-(2''-sulfo-5''-aminophenylazo)-8-naphthol-3,6-disulfonsäure werden in Form einer neutralen Lösung bei 0° mit 28,2 Teilen 2,4,6-Trifluor-1,3,5-triazin innert 20 Minuten versetzt. Die Umsetzung erfolgt bei pH 6,0 bis 6,5, wobei die Einhaltung des pH-Wertes durch Zutropfen von 100 Teilen 2-normaler Sodalösung erfolgt. Anschliessend werden 60 Teile N-(2-β-Chloräthylsulfonyl-äthyl)-äthylendiamin-dihydrochlorid als Pulver zugegeben, auf 0 bis 10° erwärmt und dabei der pH-Wert durch Zutropfen von 200 Teilen 2-normaler Sodalösung auf 4,5 bis 5 gehalten. Der erhaltene Farbstoff der Konstitution

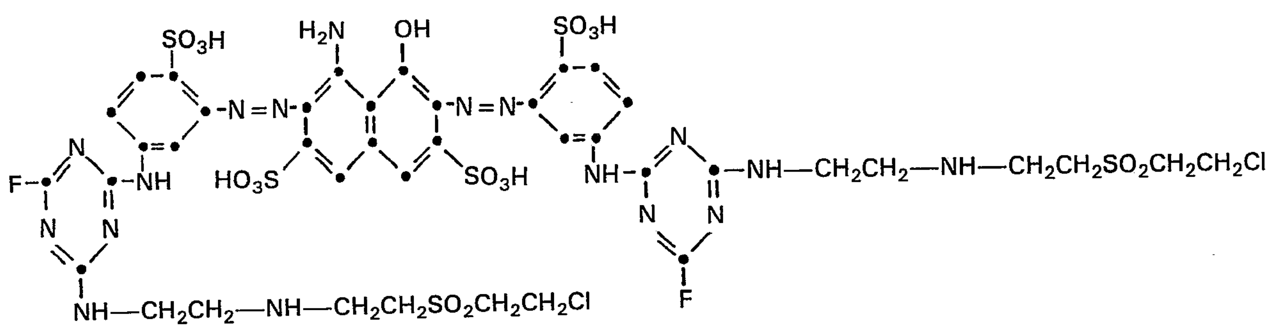

wird durch Aussalzen oder durch Sprühtrocknung isoliert.

*Beispiel 88*

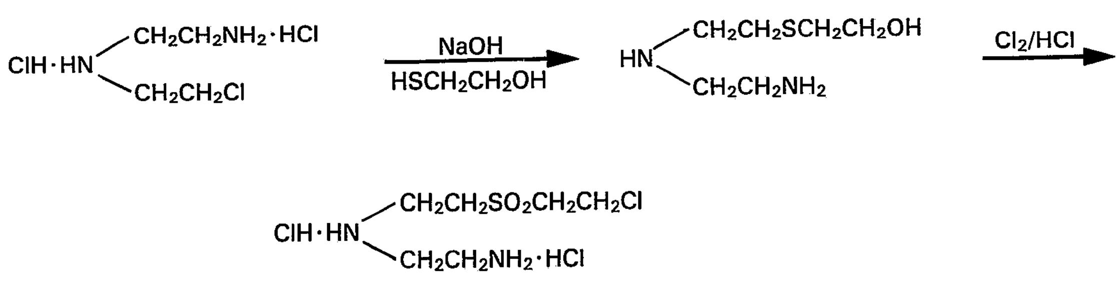

Den bei Raumtemperatur im 3 Liter Planschliff-Kolben vorgelegten 106 Teilen 2-Mercaptoäthanol werden 545 Teile 30%ige Natronlauge bei Raumtemperatur bis 35° innert 20 Minuten zugetropft.

In diese Lösung werden nun bei 45 bis 50° 265,5 Teile N-(2-Chloräthyl)-äthylendiamindihydrochlorid gelöst in ca. 140 Teilen Wasser innert 30 Minuten zugetropft. Die Reaktionslösung wird nun 2 Stunden bei 78° verrührt, anschliessend bei 30° mit 690 Teilen Salzsäure konz. 37%ig angesäuert und danach unter kräftigem Rühren während 2 Stunden 215 Teile Chlorgas bei 30 bis 40° zugeleitet. Nach weiteren 2 Stunden Rühren wird das überschüssige Chlor bei Raumtemperatur mit ca. 2 Teilen Natriumbisulfit vernichtet. Die Reaktionslösung wird über eine Fritte vom Salz klärfiltriert. Die Mutterlauge bis zum Trocknen eingedampft.

Ausbeute: 387 Teile weisses Pulver = 99% der Theorie.

| *Analyse:* | *Berechnet* | *Gefunden* |
|---|---|---|
| C | 25,06% | 24,60% |
| H | 5,96% | 5,90% |
| Cl | 36,98% | 36,20% |
| Cl (ionisch) | 24,65% | 24,30% |
| N | 9,74% | 9,50% |
| S | 11,15% | 11,00%. |

*Färbevorschrift I*

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

*Färbevorschrift II*

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

*Färbevorschrift III*

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

*Färbevorschrift IV*

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

*Färbevorschrift V*

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38° Bé) enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

**Patentansprüche**

1. Reaktivfarbstoffe der Formel I

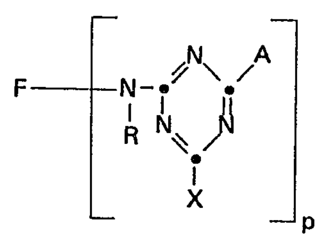

(I),

worin

F ein Rest eines mindestens eine $-SO_3H$ Gruppe enthaltenden metallfreien oder metallhaltigen Mono- oder Disazofarbstoffs, ein Rest eines Derivats des 1-Amino- oder 1-Anilino-anthrachinons, insbesondere ein Rest eines 4-Phenylamino-1-amino-anthrachinon-2-sulfonsäure-Derivats oder ein Rest eines Sulfophthalocyaninfarbstoffs, insbesondere eines im Phthalocyaninkern mindestens zwei Sulfonsäuregruppen tragenden Derivats eines Phthalocyaninsulfanilids oder -sulfalkylamids mit 2 bis 6 C-Atomen in der Alkylkette sowie ein Rest eines Formazan-, Phenazin-, Oxazin- oder Nitroarylfarbstoffs ist,

R Wasserstoff oder gegebenenfalls durch -COOH oder $-SO_3H$ substituiertes Alkyl mit 1 bis 4 C-Atomen, Cyanäthyl oder Hydroxyäthyl bedeutet,

X für Fluor, Chlor, Brom, Alkylsulfonyl mit 1 bis 4 C-Atomen, Phenylsulfonyl oder den $-SO_3H$ Rest steht,

p 1 oder 2 und

A einen Rest der Formel II

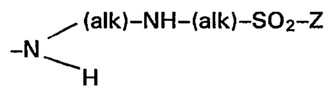

(II)

in der

alk unabhängig voneinander Polymethylenreste mit 2 bis 6 C-Atomen oder deren verzweigte Isomere bedeuten, und

Z ein β-Halogenäthyl-, Vinyl-, β-Sulfatoäthyl-, β-Thiosulfatoäthyl- oder β-Acetoxyäthylrest ist.

2. Reaktivfarbstoffe gemäss Anspruch 1, dadurch gekennzeichnet, dass F ein Mono- oder Disazofarbstoffrest der Formel VIa, VIb oder VIc

$$D-N=N-(M-N=N)_n-K- \qquad (VIa)$$

$$-D-N=N-(M-N=N)_n-K \qquad (VIb)$$

$$-D-N=N-(M-N=N)_n-K- \qquad (VIc)$$

oder eines davon abgeleiteten Metallkomplexes ist, wobei in den Formeln VIa, VIb und VIc

D für den Rest einer gegebenenfalls durch in der Azochemie übliche Substituenten, insbesondere Hydroxy-, Methyl-, Äthyl-, Methoxy- oder Äthoxygruppen, gegebenenfalls substituierte Alkanoylaminogruppen mit 2 bis 4 C-Atomen, gegebenenfalls substituierte Benzoylaminogruppen oder Halogenatome substituierten Diazokomponente der Benzol- oder Naphthalinreihe,

K für den Rest einer gegebenenfalls durch in der Azochemie übliche Substituenten, insbesondere Hydroxy-, Amino-, Methyl-, Äthyl-, Methoxy- oder Äthoxygruppen, gegebenenfalls substituierte Alkanoylaminogruppen mit 2 bis 4 C-Atomen, gegebenenfalls substituierte Benzoylaminogruppen oder Halogenatome substituierten Kupplungskomponente der Benzol-, Naphthalin-, Pyrazolon-, 6-Hydroxypyridon-(2)- oder Acetessigsäure-arylamid-Reihe,

M für den Rest einer gegebenenfalls durch in der Azochemie übliche Substituenten, insbesondere Hydroxy-, Methyl-, Äthyl-, Methoxy- oder Äthoxygruppen, gegebenenfalls substituierte Alkanoylaminogruppen mit 2 bis 4 C-Atomen, gegebenenfalls substituierte Benzoylaminogruppen oder Halogenatome substituierten Mittelkomponente der Benzol- oder Naphthalinreihe steht und

n 0 bis 1 bedeutet, wobei

D, M und K zusammen mindestens zwei Sulfonsäuregruppen, vorzugsweise drei bis vier Sulfonsäuregruppen, enthalten.

3. Reaktivfarbstoffe gemäss Anspruch 1, dadurch gekennzeichnet, dass F ein Rest eines Anthrachinonfarbstoffs der allgemeinen Formel VII

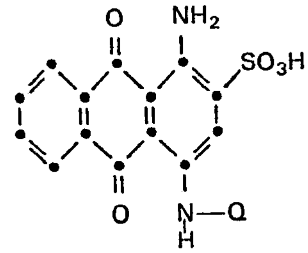

(VII)

ist, worin

Q für einen Phenylenrest steht, der einen Rest der allgemeinen Formel

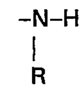

(IIIa),

wobei R die im Anspruch 1 angegebene Bedeutung hat,

trägt, und wobei der Anthrachinonkern und/oder der Phenylenrest durch eine weitere $-SO_3H$ Gruppe, der Phenylenrest auch durch eine Carboxylgruppe, so dass der Farbstoff mindestens 2 stark wasserlöslichmachende Gruppen enthält, eine Alkoxygruppe mit 1 bis 3 C-Atomen, durch ein Halogenatom oder durch 1 bis 3 Alkylgruppen mit 1 bis 3 C-Atomen substituiert sein kann.

4. Reaktivfarbstoffe gemäss Anspruch 1, dadurch gekennzeichnet, dass F ein Rest eines Phthalocyaninfarbstoffs der allgemeinen Formel VIII

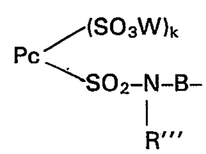

(VIII)

ist, worin

Pc den Rest eines metallhaltigen oder metallfreien Phthalocyanins, vorzugsweise Kupfer- oder Nickelphthalocyanins,

W -OH und/oder -NR'R'',

R', R'' und R''' unabhängig voneinander für Wasserstoff oder Alkyl mit 1 bis 4 C-Atomen stehen,

B einen gegebenenfalls durch Halogen, 1 bis 3 Alkylgruppen mit 1 bis 2 C-Atomen oder durch ein oder zwei Sulfonsäure- oder Carbonsäuregruppen substituierten Phenylrest oder einen Alkylrest mit 2 bis 6 C-Atomen, vorzugsweise einen durch eine Sulfonsäuregruppe substituierten Phenylen- oder den Äthylenrest und k 1 bis 3 bedeutet.

5. Reaktivfarbstoffe gemäss einem der Ansprüche 1 bis 4, dadurch gekennzeichnet, dass alk unabhängig voneinander $C_{2-4}$-Alkylenreste sind.

6. Verfahren zur Herstellung von Reaktivfarbstoffen der Formel I, worin die Symbole F, R, X, A und p die im Anspruch 1 genannten Bedeutungen haben, dadurch gekennzeichnet, dass der Farbstoff der Formel V

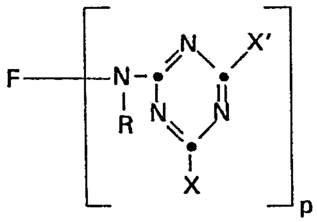

(V),

in der F, R und p die oben angegebenen Bedeutungen haben und X und X' unabhängig voneinander eine der oben für X genannten Bedeutungen haben, mit einem Amin der Formel IIa

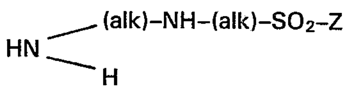

(IIa)

in der alk und Z die oben angegebenen Bedeutungen haben, umgesetzt wird.

7. Verfahren gemäss Anspruch 6, dadurch gekennzeichnet, dass der Farbstoff der allgemeinen Formel V mit dem Amin der allgemeinen Formel IIa in Gegenwart eines säurebindenden Mittels bei Temperaturen von 5 bis 70°C bei pH-Werten von 2 bis 6,5 in wässrigem Medium umgesetzt wird.

8. Verfahren zur Herstellung von Reaktivfarbstoffen gemäss den Ansprüchen 6 oder 7, dadurch gekennzeichnet, dass ein Farbstoff der Formel III

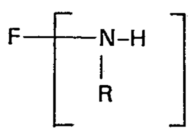

(III),

in der F, R und p die oben angegebenen Bedeutungen haben, zunächst mit einem reaktionsfähigen Derivat des 1,3,5-Triazins der Formel IV

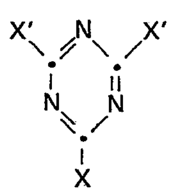

(IV),

in der X und X' unabhängig voneinander die oben für X angegebenen Bedeutungen haben, umgesetzt wird, und der so erhaltene Farbstoff der allgemeinen Formel V anschliessend mit einem Amin der Formel IIa zum Farbstoff der Formel I umgesetzt wird.

9. Verfahren zur Herstellung von Reaktivfarbstoffen der allgemeinen Formel I

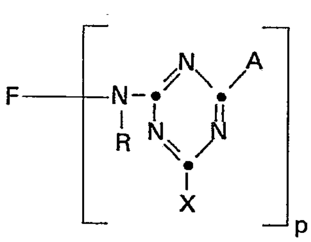

(I),

worin F, R, X und A die im Anspruch 1 genannten Bedeutungen haben und p für die Zahlen 1 oder 2 steht gemäss einem der Ansprüche 6 bis 8, dadurch gekennzeichnet, dass eine Komponente dieses Farbstoffs, die einen Rest der Formel Va

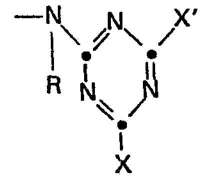

(Va),

in der R, X und X' die oben angegebenen Bedeutungen haben, mit einer zur Herstellung des Farbstoffs benötigten zweiten Komponente, die gegebenenfalls einen Rest der Formel Va enthält, zu einem Azo- oder Formazanfarbstoff umgesetzt wird und der so erhaltene Farbstoff der Formel V in einem weiteren Schritt mit einem Amin der Formel IIa zur Reaktion gebracht wird.

10. Verwendung von Farbstoffen der Formel I zum Färben und Bedrucken von Zellulose, natürlichen und synthetischen Polyamiden und diese Substrate enthaltenden Materialien.

11. Verbindungen der Formel

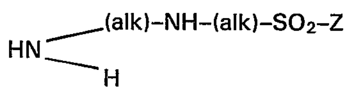

(IIa),

worin alk unabhängig voneinander Polymethylenreste mit 2 bis 6 C-Atomen oder deren verzweigte Isomere bedeuten, und Z ein β-Halogenäthyl-, Vinyl-, β-Sulfatoäthyl-, β-Thiosulfatoäthyl- oder β-Acetoxyäthylrest ist.

**Claims**

1. A reactive dye of the formula I

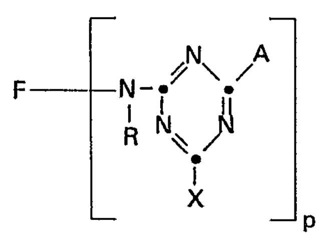

(I)

in which

F is a radical of a metal-free or metal-containing monoazo or disazo dye which contains at least one $-SO_3H-$ group, a radical of a derivative of 1-aminoanthraquinone or 1-anilinoanthraquinone, in particular a radical of a 4-phenylamino-1-aminoanthraquinone-2-sulfonic acid derivative, or a radical of a sulfophthalocyanine dye, in particular of a phthalocyaninesulfanilide or -sulfalkylamide (having 2 to 6 C atoms in the alkyl chain) derivative which carries at least two sulfo groups in the phthalocyanine nucleus, or a radical of a formazan, phenazine, oxazine or nitroaryl dye,

R is hydrogen or unsubstituted or -COOH- or $-SO_3H-$ substituted alkyl having 1 to 4 C atoms, cyanoethyl or hydroxyethyl,

X is fluorine, chlorine, bromine, alkylsulfonyl having 1 to 4 C atoms, phenylsulfonyl or the $-SO_3H$-radical,

p is 1 or 2 and

A is a radical of the formula II

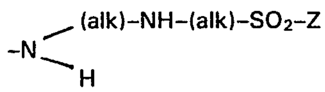

(II)

in which

the alks are independently of each other polymethylene radicals having 2 to 6 C atoms or their branched isomers, and

Z is a β-halogenoethyl, a vinyl, β-sulfatoethyl, β--thiosulfatoethyl or β-acetoxyethyl radical.

2. A reactive dye according to claim 1, wherein F is a monoazo or disazo dye radical of the formula VIa, VIb or VIc

$$D-N=N-(M-N=N)_n-K- \quad \text{(VIa)}$$

$$-D-N=N-(M-N=N)_n-K \quad \text{(VIb)}$$

$$-D-N=N-(M-N=N)_n-K- \quad \text{(VIc)}$$

or of a metal complex derived therefrom, where, in the formulae VIa, VIb and VIc,

D is the radical of a diazo component of the benzene or naphthalene series which is unsubstituted or substituted by substituents customary in azo chemistry, in particular by hydroxyl, methyl, ethyl, methoxy or ethoxy groups, by substituted or unsubstituted alkanoylamino groups having 2 to 4 C atoms, by substituted or unsubstituted benzoylamino groups or by halogen atoms,

K is the radical of a coupling component of the benzene, naphthalene, pyrazolone, 6-hydroxypyrid--2-one or aceto-acetarylamide series which is unsubstituted or substituted by substituents customary in azo chemistry, in particular by hydroxyl, amino, methyl, ethyl, methoxy or ethoxy groups, by substituted or unsubstituted alkanoylamino groups having 2 to 4 C atoms, by substituted or unsubstituted benzoylamino groups or by halogen atoms,

M is the radical of a middle component of the benzene or naphthalene series which is unsubstituted or substituted by substituents customary in azo chemistry, in particular by hydroxyl, methyl, ethyl, methoxy or ethoxy groups, by substituted or unsubstituted alkanoylamino groups having 2 to 4 C atoms, by substituted or unsubstituted benzoylamino groups or by halogen atoms and

n is 0 to 1,

D, M and K together contain at least two sulfo groups, preferably three or four sulfo groups.

3. A reactive dye according to claim 1, wherein F is a radical of an anthraquinone dye of the general formula VII

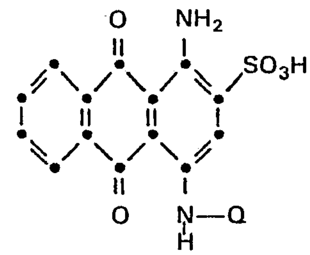

(VII)

in which

Q is a phenylene radical which carries a radical of the general formula IIIa

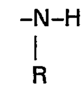

(IIIa)

where R is as defined in claim 1, and where the anthraquinone nucleus and/or the phenylene radical can be substituted by a further $-SO_3H$ group, the phenylene radical also by a carboxyl group, so that the dye contains at least 2 strongly water-solubilizing groups, an alkoxy group having 1 to 3 C atoms, by a halogen atom or by 1 to 3 alkyl groups having 1 to 3 C atoms.

4. A reactive dye according to claim 1, wherein F is a radical of a phthalocyanine dye of the general formula VIII

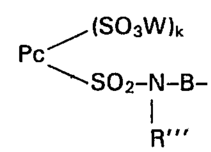

(VIII)

in which

Pc is the radical of a metal-containing or metal-free phthalocyanine, preferably copper- or nickel-phthalocyanine,

W is -OH and/or -NR'R'',

R', R'' and R''' independently of each other are hydrogen or alkyl having 1 to 4 C atoms,

B is a phenyl radical which is unsubstituted or substituted by halogen, by 1 to 3 alkyl groups having 1 or 2 C atoms or by one or two sulfo or carboxyl groups, or is an alkyl radical having 2 to 6 C atoms, preferably a sulfo-substituted phenylene radical or an ethylene radical, and

k is 1 to 3.

5. A reactive dye according to any one of claims 1 to 4, wherein the alks are independently of each other $C_{2-4}$-alkylene radicals.

6. A process for preparing a reactive dye of the formula I in which the symbols F, R, X, A and p are as defined in claim 1, which comprises reacting the dye of the formula V

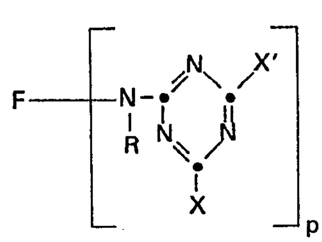

(V)

in which F, R and p are as defined above and X and X', independently of each other, have one or [sic] meanings mentioned above for X, with an amine of the formula IIa

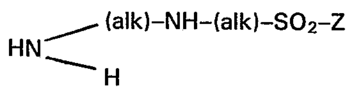

(IIa)

in which the alks and Z are as defined above.

7. A process according to claim 6, wherein the dye of the general formula V is reacted with the amine of the general formula IIa in the presence of an acid acceptor at temperatures of 5 to 70°C and at pH 2 to 6.5 in an aqueous medium.

8. A process for preparing a reactive dye according to claim 6 or 7, wherein a dye of the formula III

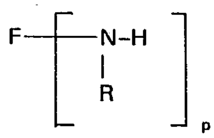

(III),

in which F, R and p are as defined above, is first reacted with a reactive derivative of the 1,3,5-triazine of the formula IV

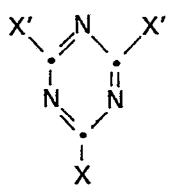

(IV)

in which X and X' independently of each other are as defined above for X, and the resulting dye of the general formula V is then reacted with an amine of the formula IIa to give the dye of the formula I.

9. A process for preparing a reactive dye of the general formula I

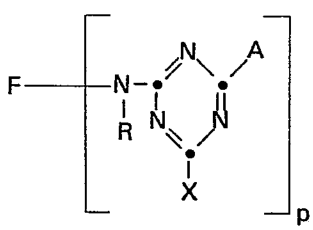

(I)

in which F, R, X and A are as defined in claim 1 and p is the number 1 or 2, according to any one of claims 6 to 8, wherein a component of this dye which contains a radical of the formula Va

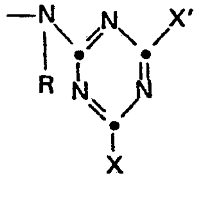

(Va)

in which R, X and X' are as defined above, is reacted with a second component which is required for preparing the dye and which can contain a radical of the formula Va to give an azo of formazan dye and the resulting dye of the formula V is made to react in a further step with an amine of the formula IIa.

10. Use of the dye of the formula I for dyeing and printing cellulose, natural and synthetic polyamides and materials containing these substrates.

11. A compound of the formula

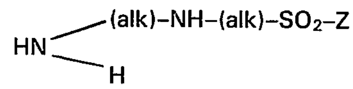

(IIa)

in which the alks independently of each other are polymethylene radicals having 2 to 6 C atoms or their branched isomers and Z is a β-halogenoethyl, vinyl, β-sulfatoethyl, β-thiosulfatoethyl or β-acetoxyethyl radical.

**Revendications**

1. Colorants réactifs de formule I

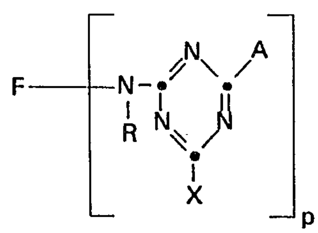

(I),

dans laquelle

F est un résidu d'un colorant mono- ou disazoïque, métallé ou non métallé, contenant au moins un groupe $-SO_3H$, un résidu d'un dérivé de la 1-amino- ou de la 1-anilino-anthraquinone, en particulier un résidu d'un dérivé de l'acide 4-phénylamino-1-amino-anthraquinone sulfonique-2, ou un résidu d'un colorant sulfophthalocyanine, en particulier d'un dérivé, comportant au moins deux groupes acide sulfonique dans le noyau phthalocyanine, d'un phthalocyanine sulfanilide, ou d'un phthalocyanine sulfalkylamide ayant de 2 à 6 atomes de carbone dans la chaîne alkyle, ainsi qu'un résidu d'un colorant formazan, phénazine, oxazine ou nitroaryle,

R est un atome d'hydrogène ou un radical alkyle ayant de 1 à 4 atomes de carbone, éventuellement substitué par un radical -COOH ou $-SO_3H$, le radical cyanoéthyle ou hydroxyéthyle,

X désigne un atome de fluor, de chlore ou de brome, un radical alkylsulfonyle ayant de 1 à 4 atomes de carbone, le radical phénylsulfonyle ou le radical $SO_3H$,

p vaut 1 ou 2, et

A est un radical de formule II

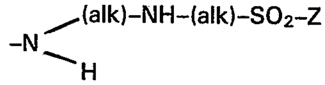

(II)

dans laquelle

les «alk», indépendamment les uns des autres, représentent chacun des radicaux polyméthylènes ayant de 2 à 6 atomes de carbone, ou leurs isomères ramifiés, et

Z est un radical β-halogénoéthyle, vinyle, β-sulfatoéthyle, β-thiosulfatoéthyle ou β-acétoxyéthyle.

2. Colorants réactifs selon la revendication 1, caractérisés par le fait que F est le résidu d'un colorant mono- ou disazoïque de formules VIa, VIb ou VIc

$$D-N=N-(M-N=N)_n-K- \qquad (VIa)$$

$$-D-N=N-(M-N=N)_n-K \qquad (VIb)$$

$$-D-N=N-(M-N=N)_n-K- \qquad (VIc)$$

ou d'un complexe métallé qui en dérive,

où, dans les formules VIa, VIb et VIc,

D représente le résidu d'un composant diazo de la série du benzène ou du naphthalène, éventuellement substitué par des substituants habituels dans la chimie des composés azoïques, en particulier par des groupes hydroxy, méthyle, éthyle, méthoxy ou éthoxy, par des groupes alcanoylamino ayant de 2 à 4 atomes de carbone, éventuellement substitués, des groupes benzoylamino éventuellement substitués, ou des atomes d'halogène,

K est le résidu d'un composant de copulation de la série du benzène, du naphthalène, de la pyrazolone, de la 6-hydroxypyridone-(2) ou des acétoacétylarylamides, éventuellement substitué par des substituants habituels dans la chimie des composés azoïques, en particulier par les groupes hydroxy, amino, méthyle, éthyle, méthoxy ou éthoxy, des groupes alcanoylamino ayant de 2 à 4 atomes de carbone, éventuellement substitués, des groupes benzoylamino éventuellement substitués, ou des atomes d'halogène,

M est le résidu d'un composant intermédiaire de la série du benzène ou du naphthalène, éventuellement substitué par des substituants habituels dans la chimie des composés azoïques, en particulier des groupes hydroxy, méthyle, éthyle, méthoxy ou éthoxy, des groupes alcanoylamino ayant de 2 à 4 atomes de carbone, éventuellement substitués, des groupes benzoylamino éventuellement substitués, ou des atomes d'halogène, et

n vaut 0 ou 1,

D, M et K, pris ensemble, contenant au moins deux groupes acide sulfonique, de préférence trois à quatre groupes acide sulfonique.

3. Colorants réactifs selon la revendication 1, caractérisés par le fait que F est un résidu d'un colorant anthraquinone de formule générale VII

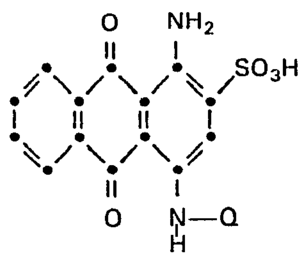

(VII)

dans laquelle

Q est un radical phénylène, lequel porte un radical de formule générale

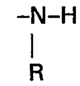

(IIIa)

dans laquelle R a la signification donnée dans la revendication 1,

et où le noyau anthraquinone et/ou le radical phénylène peuvent être substitués par un autre groupe $-SO_3H$, et le radical phénylène par un groupe carboxyle, de telle sorte que le colorant contienne au moins deux groupes fortement hydrosolubilisants, par un groupe alcoxy ayant de 1 à 3 atomes de carbone, par un atome d'halogène ou par un à trois groupes alkyle ayant de 1 à 3 atomes de carbone.

4. Colorants réactifs selon la revendication 1, caractérisés par le fait que F est un résidu d'un colorant phthalocyanine de formule générale VIII

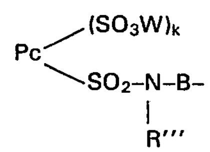

(VIII)

dans laquelle

Pc est le résidu d'une phthalocyanine métallée ou non métallée, de préférence d'une phthalocyanine au cuivre ou de nickel,

W est -OH et/ou -NR'R'',

R', R'' et R''', indépendamment les uns des autres, représentent chacun un atome d'hydrogène ou un radical alkyle ayant de 1 à 4 atomes de carbone,

B est un radical phényle, éventuellement substitué par un atome d'halogène, un à trois groupes alkyle ayant de 1 à 2 atomes de carbone, ou par un ou deux groupes acide sulfonique ou acide carboxylique, ou un groupe alkyle ayant de 2 à 6 atomes de carbone, de préférence un radical phénylène substitué par un groupe acide sulfonique ou le radical éthylène, et k vaut de 1 à 3.

5. Colorants réactifs selon l'une des revendications 1 à 4, caractérisés par le fait que les «alk», indépendamment les uns des autres, représentent chacun des radicaux alkylènes en $C_{2-4}$.

6. Procédé pour la préparation de colorants réactifs de formule I, dans laquelle les symboles F, R, X, A et p ont les significations données dans la revendication 1, caractérisé par le fait qu'on fait réagir le colorant de formule V

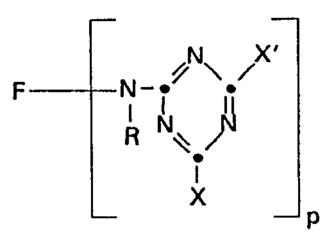

(V),

dans laquelle F, R et p ont les significations données ci-dessus, et X et X', indépendamment l'un de

l'autre, ont chacun l'une des significations données ci-dessus pour X, sur une amine de formule IIa

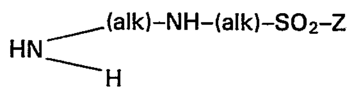

(IIa)

dans laquelle alk et Z ont les significations données ci-dessus.

7. Procédé selon la revendication 6, caractérisé par le fait que le colorant de formule générale V est mis à réagir sur l'amine de formule générale IIa en présence d'un agent fixant les acides, à des températures de 5 à 70°C, à des pH de 2 à 6,5, en milieu aqueux.

8. Procédé pour la préparation de colorants réactifs selon les revendications 6 ou 7, caractérisé par le fait qu'on fait d'abord réagir un colorant de formule III

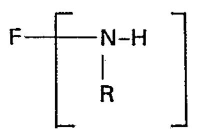

(III),

dans laquelle F, R et p ont les significations données ci-dessus, sur un dérivé réactif de la 1,3,5-triazine, de formule IV

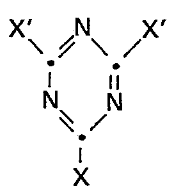

(IV),

dans laquelle X et X', indépendamment l'un de l'autre, ont chacun les significations données ci-dessus pour X, puis que l'on fait réagir le colorant ainsi obtenu, de formule générale V, sur une amine de formule IIa pour obtenir le colorant de formule I.

9. Procédé pour la préparation de colorants réactifs de formule générale I

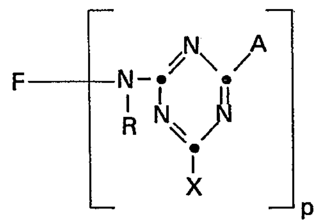

(I),

dans laquelle F, R, X et A ont les significations données dans la revendication 1 et p représente les nombres 1 ou 2, selon l'une des revendications 6 à 8, caractérisé par le fait qu'on fait réagir un composant de ce colorant, qui contient un résidu de formule Va

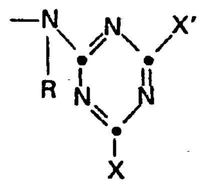

(Va),

dans laquelle F, R, X et X' ont les significations données ci-dessus, sur un deuxième composant nécessaire à la préparation du colorant, et qui contient éventuellement un résidu de formule Va, pour obtenir un colorant azoïque ou formazan, le colorant de formule V ainsi obtenu étant, lors d'une étape ultérieure, mis à réagir sur une amine de formule IIa.

10. Utilisation de colorants de formule I pour la teinture et l'impression de cellulose, de polyamides naturels et synthétiques, et de matières contenant ces substrats.

11. Composés de formule

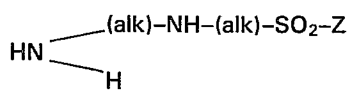

(IIa),

dans laquelle les «alk», indépendamment les uns des autres, représentent chacun des enchaînements polyméthylène ayant de 2 à 6 atomes de carbone ou leurs isomères ramifiés, et Z est un radical β-halogénoéthyle, vinyle, β-sulfatoéthyle, β-thiosulfatoéthyle ou β-acétoxyéthyle.